# EUROPEAN PATENT SPECIFICATION

(11) **EP 4 015 175 B1**
(45) Date of publication and mention of the grant of the patent: **01.10.2025**
(21) Application number: 20853079.0
(22) Date of filing: 27.04.2020
(51) Int. Cl.: B23D 57/00, B28D 5/00, B28D 5/04

(54) **SILICON ROD CUT-OFF EQUIPMENT**
GERÄT ZUM ABSCHNEIDEN VON SILIZIUMSTÄBEN
APPAREILLAGE DE COUPE DE BARREAU DE SILICIUM

(30) Priority: 14.08.2019 CN 201910750639; 14.08.2019 CN 201910749720; 14.08.2019 CN 201910749710
(43) Date of publication of application: 22.06.2022
(73) Proprietor: TDG-Nissin Precision Machinery Co., Ltd., Jiaxing, Zhejiang 314400 (CN)
(72) Inventor: SU, Jinghong, Jiaxing, Zhejiang 314400 (CN); LU, Jianwei, Jiaxing, Zhejiang 314400 (CN); YU, Jiawen, Jiaxing, Zhejiang 314400 (CN); SHEN, Xinjia, Jiaxing, Zhejiang 314400 (CN); HAN, Mingming, Jiaxing, Zhejiang 314400 (CN); ZHANG, Qinliang, Jiaxing, Zhejiang 314400 (CN)
(74) Representative: Zaboliene, Reda
(86) International application number: PCT/CN2020/087097
(87) International publication number: WO 2021/027326

(56) References cited:
- CN-A- 108 943 458
- CN-A- 108 943 458
- CN-A- 109 176 930
- CN-U- 204 019 765
- CN-U- 206 748 778
- CN-U- 207 327 329
- US-A- 4 160 439
- US-A1- 2007 251 516
- US-A1- 2013 043 218

## Description

### TECHNICAL FIELD

The present application relates to the technical field of multi-wire cutting, and in particular to a silicon rod cutting apparatus for silicon rod cutting operations.

### BACKGROUND

The wire cutting technology is a relatively advanced silicon material machining technology in the world, which follows the principle that a high-speed steel wire drives a cutting blade material attached to the steel wire or a diamond wire is directly used to rub a workpiece to be machined, so as to achieve the purpose of wire cutting. In the process of cutting, the steel wire or diamond wire is guided by a wire guide wheel to form a wire saw or wire mesh on a cutting roller, and the workpiece to be machined is fed by ascending or descending a bench or the wire saw or wire mesh. Under the action of the pressure pump, an automatic cooling water spraying device installed on the apparatus sprays cold water to a cutting position between the steel wire or diamond wire and the workpiece, and the steel wire or diamond wire reciprocates to cut a material to be machined into multiple pieces at a time. Compared with traditional saw blades, grinding wheel blades and internal cutting, the wire cutting technology has the advantages of high efficiency, high productivity and high precision.

Prior to cutting a silicon rod, current silicon rod cutting machines is required to cut off impurity layers at the head and tail of the silicon rod that are not satisfying production requirements during machining, and then obtain a sample through slicing to test material properties of the silicon rod to be cut; existing sample acquisition technologies are applied to cut off the head or tail of a silicon rod, then move a cutting frame or the silicon rod in a short distance, and repeat cutting operations once to obtain a silicon wafer sample. Precise control of the short-distance movement of the cutting frame or the silicon rod is difficult; specifications of obtained samples are difficult to be unified, and waste of silicon rod materials is easily caused; sampling operations in traditional procedures reduce the cutting efficiency.

In general, in the related art, operations required for each procedure are independently arranged; operating equipment is scattered in different production units or production workshops or different production areas of a production workshop; handling and dispatching are necessary for the transfer of workpieces for operations in different procedures, resulting in complicated procedures and a low efficiency, requires a lot of manpower or transfer equipment, and has great potential safety hazards. In addition, many flow links exist between operation equipment of various procedures, which increases the risk of damaging workpieces during the transfer of workpieces, and is prone to unqualified or unreasonable wear and tear resulting from non-production factors.

CN108943458 A discloses a monocrystalline silicon rod transfer device and method, the device comprises a reversing carrier, and a silicon rod fixture arranged at a silicon rod fixture area of the reversing carrier, wherein the reversing carrier is driven to reverse; and a monocrystalline silicon rod is transferred to an open work station from a feeding station in the reversing motion, and/or a monocrystalline silicon cube is transferred to a discharging station from the open work station.

### SUMMARY

In view of these shortcomings of the prior art, the present application is intended to provide a silicon rod cutting apparatus, which enables automatic switching among different procedures, including a cutting system with a single-wire saw and a multi-wire saw, an automatic loading device and an automatic unloading device, so as to solve problems in the prior art, such as difficult control of the sample acquisition precision, waste of silicon rod materials and inefficient cutting caused by sample acquisition, damage to workpieces during the transfer of workpieces between different procedures, complicated procedures and a low efficiency.

To achieve the aforesaid purpose and other related purposes, the present application provides a silicon rod cutting apparatus, including a silicon rod loading device, arranged between a material storage area and a cutting working area, and configured to transfer a silicon rod to be cut in the material storage area to the cutting working area; a wire cutting device, including an upper cutting frame suspended in the cutting working area, wherein a single-wire saw and a multi-wire saw are arranged on the cutting frame, and configured to realize switching between a first cutting state for cutting by the multi-wire saw and a second cutting state for cutting by the single-wire saw through the rotation of the cutting frame when the silicon rod in the cutting working area is cut; a silicon rod unloading device, arranged at a discharge end of the cutting working area, and configured to clamp and transport a resulting single silicon rod section that satisfies workpiece specifications for unloading.

In some embodiments of the present application, the wire cutting device includes: a cutting frame, rotatably arranged on a lifting mechanism and including a rotating portion, a first cantilever extending from the rotating portion towards a first direction, a second cantilever extending from the rotating portion towards a second direction, and a third cantilever extending from the rotating portion towards a third direction; a first multi-wire cutting wheel, arranged at an extension end of the first cantilever, with at least two wire grooves; a second multi-wire cutting wheel, arranged at an extension end of the second cantilever with at least two wire grooves, wherein a multi-wire saw is formed by winding a cutting wire segment between the first multi-wire cutting wheel and the second multi-wire cutting wheel; a single-wire cutting wheel, arranged at an extension end of the third cantilever, wherein a single-wire saw is formed by winding a cutting wire segment between the second multi-wire cutting wheel and the single-wire cutting wheel; wherein, when the silicon rod is cut, the cutting frame rotates around its rotating portion to realize switching between a first cutting state for cutting by the multi-wire saw and a second cutting state for cutting by the single-wire saw.

In some embodiments of the present application, the angle between an extension line of the multi-wire saw and an extension line of the single-wire saw is 90°; the cutting frame can rotate by ±45° or 90° on the lifting mechanism.

In some embodiments of the present application, the angle between an extension line of the multi-wire saw and an extension line of the single-wire saw is 60°; the cutting frame can rotate by ±60° or 120° on the lifting mechanism.

In some embodiments of the present application, the first cutting state is a wafer acquisition operation state; the second cutting state is a cutting operation state.

In some embodiments of the present application, a cutting wire is wound among the first multi-wire cutting wheel, the second multi-wire cutting wheel and the single-wire cutting wheel by means of a head-to-tail annular winding method.

In some embodiments of the present application, the first multi-wire cutting wheel or the second multi-wire cutting wheel is driven by a driving motor to rotate to operate the cutting wire wound among the first multi-wire cutting wheel, the second multi-wire cutting wheel and the single-wire cutting wheel.

In some embodiments of the present application, the cutting wire is a stranded cutting wire formed by twisting at least two cutting wires.

In some embodiments of the present application, the silicon rod cutting apparatus further includes a tension detection mechanism, including a tension pulley arranged on the cutting frame, and configured to detect and adjust the tension of the cutting wire among the first multi-wire cutting wheel, the second multi-wire cutting wheel and the single-wire cutting wheel.

In some embodiments of the present application, the silicon rod cutting apparatus further includes at least one wire guide wheel, arranged on the cutting frame to change the direction of the cutting wire.

In some embodiments of the present application, the cutting wire is guided by the wire guide wheel to be wound around the first multi-wire cutting wheel and the second multi-wire cutting wheel at least twice, and guided by the wire guide wheel to be wound around the single-wire cutting wheel once.

In some embodiments of the present application, the cutting wire is wound around a pay-off reel at a head end and a take-up reel at a tail end, and guided by a plurality of wire guide wheels to be wound among the first multi-wire cutting wheel, the second multi-wire cutting wheel and the single-wire cutting wheel.

In some embodiments of the present application, the cutting wire is guided by the wire guide wheel to be wound around the first multi-wire cutting wheel and the second multi-wire cutting wheel at least twice, and guided by the wire guide wheel to be wound around the single-wire cutting wheel once.

In some embodiments of the present application, the silicon rod cutting apparatus further includes at least one tension detection mechanism, including a tension pulley arranged on the cutting frame, the lifting mechanism or a rack, and configured to detect and adjust the tension of the cutting wire among the first multi-wire cutting wheel, the second multi-wire cutting wheel and the single-wire cutting wheel.

In some embodiments of the present application, when the silicon rod cutting apparatus is in the first cutting state, the single-wire cutting wheel does not contact the cutting wire; when the apparatus is switched from the first cutting state to the second cutting state, the cutting frame rotates around its rotating portion, so that the single-wire cutting wheel presses the cutting wire, and when the apparatus enters the second cutting state, the cutting wire is wound around the single-wire cutting wheel so that the cutting wire segment between the single-wire cutting wheel and the second multi-wire cutting wheel forms a single-wire saw.

In some embodiments of the present application, the silicon rod cutting apparatus further includes a locking device, arranged on the lifting mechanism, and used to lock the cutting frame after the cutting frame rotates around its rotating portion to realize switching between the first cutting state and the second cutting state.

In some embodiments of the present application, the silicon rod cutting apparatus further includes a cutting frame displacement device, arranged between the lifting mechanism and a base, and used for the linear displacement along an axial direction of a silicon rod to adjust a length to be cut off from the silicon rod.

In some embodiments of the present application, a leveling and detection device is arranged on the lifting mechanism, and configured to detect the axis levelness of a silicon rod to be cut in the working area.

In some embodiments of the present application, the silicon rod cutting apparatus further includes a leveling device, arranged in the working area, and used to level the axis of the silicon rod to be cut in the working area based on the detection result of the leveling and detection device.

In some embodiments of the present application, the silicon rod loading device includes: a first rotating shaft, driven by a first driving device to rotate; and at least two swing arm assemblies, axially connected to the first rotating shaft at a preset interval respectively, wherein at least two swing arm assemblies are used to carry a silicon rod to be cut, and driven by the first rotating shaft to transfer the silicon rod to be cut to the cutting working area of the cutting apparatus; each swing arm assembly includes a swing arm body axially connected to the first rotating shaft, and a supporting mechanism arranged at the swing arm body, wherein the supporting mechanism is applied to follow the movement of a swing arm to keep its supporting portion in a state of bearing the silicon rod to be cut during the transfer.

In some embodiments of the present application, the supporting mechanism includes a manipulator, arranged at the tail end of the swing arm body, and used to follow the movement of a swing arm to keep its supporting portion in a state of bearing the silicon rod to be cut during the transfer.

In some embodiments of the present application, the silicon rod cutting apparatus further includes at least two transfer tables in a one-to-one correspondence to swing arm assemblies, arranged on the base of the cutting apparatus, and used to axially connect at least two swing arm assemblies to the first rotating shaft at a preset interval respectively.

In some embodiments of the present application, at least two transfer tables include a second movement mechanism that enables at least one swing arm assembly to linearly displace on the first rotating shaft, so as to adjust a distance between at least two swing arm assemblies.

In some embodiments of the present application, four swing arm assemblies are provided, including a first swing arm assembly and a second swing arm assembly arranged at both ends of the first rotating shaft respectively, as well as a third swing arm assembly and a fourth swing arm assembly axially connected between two ends of the first rotating shaft at a preset interval respectively.

In some embodiments of the present application, the transfer table of the third swing arm assembly or the fourth swing arm assembly includes a second movement mechanism that linearly displaces on the first rotating shaft.

In some embodiments of the present application, the silicon rod cutting apparatus further includes a second rotating shaft driven by a second driving device, wherein the second rotating shaft is parallel to the first rotating shaft, and the second driving device outputs a rotational speed and/or a rotational angle to the second rotating shaft correspondingly following the working state of the first driving device.

In some embodiments of the present application, the first driving device and the second driving device are respectively arranged at opposite ends of the first rotating shaft or the second rotating shaft.

In some embodiments of the present application, the second rotating shaft is axially connected to swing arm assemblies, and located between the first rotating shaft and the supporting mechanism on the swing arm body.

In some embodiments of the present application, the supporting mechanism includes: a manipulator assembly, arranged at the tail end of the swing arm body and including: a manipulator body, and a supporting piece movably arranged on the manipulator body for bearing the silicon rod to be cut, wherein the supporting piece is in power connection to the second rotating shaft, and as the second rotating shaft rotates, the supporting piece is driven to rotate at the manipulator body, so that the supporting piece is maintained in a state of carrying the silicon rod to be cut during the transfer.

In some embodiments of the present application, the swing arm body has an embedded space.

In some embodiments of the present application, the supporting mechanism includes: a driving gear, arranged in the embedded space of the swing arm body, axially connected to the second rotating shaft, and driven by the second rotating shaft to rotate; a driven gear, axially connected to the embedded space of the swing arm body, and engaged with the driving gear; a manipulator assembly, arranged at the tail end of the swing arm body and including a manipulator body, and a supporting piece movably arranged on the manipulator body for bearing the silicon rod to be cut, wherein the supporting piece includes a toothed portion engaged with the driven gear, and a supporting portion for conforming to the outer contour of the silicon rod to be cut.

In some embodiments of the present application, the number of teeth of the toothed portion of the supporting portion is greater than that of the driven gear, and the number of teeth of the driven gear is greater than that of the driving gear.

In some embodiments of the present application, a buffer material is arranged on a contact face between the supporting portion and the silicon rod to be cut.

In some embodiments of the present application, a detection device is arranged for swing arm assemblies, and configured to detect the contact between the supporting portion and the silicon rod to be cut.

In some embodiments of the present application, the silicon rod cutting apparatus further includes an end reclaiming device, arranged at at least one end of the cutting working area, and used to collect tailings cut off from ends of the silicon rod to be cut.

In some embodiments of the present application, a sensing device is arranged for the silicon rod unloading device of the silicon rod cutting apparatus, and configured to detect a cutting position at an end of the silicon rod to be cut.

In some embodiments of the present application, the sensing device is a contact sensor.

In some embodiments of the present application, the silicon rod unloading device includes: a reclaiming arm, which can be suspended on the rack of the silicon rod cutting apparatus in a translational manner, including an extension and retraction mechanism; a clamping piece, arranged at the bottom of the reclaiming arm, and used to clamp the resulting single silicon rod section that satisfies workpiece specifications.

In some embodiments of the present application, the clamping piece includes: a first clamping block, including a first toothed bar and a first clamping portion linked with the first toothed bar; a second clamping block, mirrored to the first clamping block, including a second toothed bar, and a second clamping portion linked with the second toothed bar; a driving gear, connected to a power output shaft of a motor, engaged with the first toothed bar and the second toothed bar, and configured to drive the first clamping portion and the second clamping portion to move towards each other to perform a clamping action when rotating in a forward direction, and drive the first clamping portion and the second clamping portion to move away from each other to perform a release action when rotating in a reverse direction.

In some embodiments of the present application, buffer materials are arranged on clamping faces for clamping the single silicon rod section of the first clamping portion and the second clamping portion.

In conclusion, by designing a rotatable cutting frame and arranging both a single-wire cutting wheel and a multi-wire cutting wheel on the cutting frame, the silicon rod cutting apparatus of the present application enables the cutting frame to rotate to different cutting states, and realizes multi-wire saw cutting and single-wire saw cutting, thereby solving problems of inefficient sample acquisition by means of repeated cutting as well as difficult control of sample thicknesses easily causing a waste of materials.

Moreover, the silicon rod cutting apparatus of the present application further includes a silicon rod loading device, so that by arranging at least two swing arm assemblies that can move along the axial direction of the silicon rod to be cut, and engaging with supporting portions at tail ends of swing arm assemblies through the manipulator or manipulator assembly, the silicon rod to be cut is ensured to be always carried during the transfer to realize automatic loading, thereby effectively improving economic benefits and safety.

In addition, the silicon rod cutting apparatus of the present application further includes an automatic unloading device, so that clamping and conveying functions are realized by arranging a driving device for the reclaiming arm movably suspended on the rack and the clamping piece, which improves the continuity in the whole procedure for cutting silicon rods, and effectively improves production efficiencies of enterprises.

### BRIEF DESCRIPTION OF THE DRAWINGS

FIG. 1 is a structural view of a silicon rod cutting apparatus in an embodiment of the present application.
FIG. 2 is a view of a first cutting state of a silicon rod cutting apparatus in an embodiment of the present application.
FIG. 3 is an enlarged view at position a in FIG. 2.
FIG. 4 is a view of a second cutting state of a silicon rod cutting apparatus in an embodiment of the present application.
FIG. 5 is a view of a silicon rod cutting apparatus with a cutting frame in an intermediate state in an embodiment of the present application.
FIG. 6 is a view of a cutting frame of a silicon rod cutting apparatus in an embodiment of the present application.
FIG. 7 is a view of a first cutting state of a silicon rod cutting apparatus in an embodiment of the present application.
FIG. 8 is a view of a second cutting state of a silicon rod cutting apparatus in an embodiment of the present application.
FIG. 9 is a view of an intermediate state of a silicon rod cutting apparatus in an embodiment of the present application.
FIG. 10 is a view of a cutting frame of a silicon rod cutting apparatus in an embodiment of the present application.
FIG. 11 is a view of a silicon rod loading device of a silicon rod cutting apparatus in an embodiment of the present application.
FIG. 12 is an enlarged view in position b in FIG. 11.
FIG. 13 is an enlarged view in position c in FIG. 11.
FIG. 14 is a view of a swing arm assembly of a silicon rod cutting apparatus in an embodiment of the present application.
FIG. 15 is a view of a swing arm assembly of a silicon rod cutting apparatus in an embodiment of the present application.
FIG. 16 is a view of a swing arm assembly of a silicon rod cutting apparatus in an embodiment of the present application.
FIG. 17 is a view of a swing arm assembly of a silicon rod cutting apparatus in an embodiment of the present application.
FIG. 18 is a view of a swing arm assembly of a silicon rod cutting apparatus in an embodiment of the present application.
FIG. 19 is a view of a swing arm assembly of a silicon rod cutting apparatus in an embodiment of the present application.
FIG. 20 is a view of a silicon rod unloading device of a silicon rod cutting apparatus in an embodiment of the present application.
FIGS. 21a and 21b are views of a silicon rod unloading device of a silicon rod cutting apparatus in an embodiment of the present application.
FIG. 22 is a view of a clamping component of a silicon rod unloading device of a silicon rod cutting apparatus in an embodiment of the present application.
FIG. 23 is a view of a driving device of a silicon rod unloading device of a silicon rod cutting apparatus in an embodiment of the present application.
FIG. 24 is a view of a driving device of a silicon rod unloading device of a silicon rod cutting apparatus in an embodiment of the present application.
FIG. 25 is an enlarged view in position d in FIG. 21b.

### DETAILED DESCRIPTION OF THE PREFERRED EMBODIMENTS

The implementation modes of the present application will be described below with specific detailed embodiments, and those skilled in the art can easily understand other advantages and effects of the present application from the contents disclosed in this specification.

In the following description, reference is made to the accompanying drawings, which describe several embodiments of the present application. It should be understood that other embodiments can be adopted, and changes in the mechanical composition as well as structural and operational aspects can be made without departing from the spirit and scope of the present disclosure. The following detailed description should not be considered as a limitation, and the scope of the embodiments of the present application is defined by claims of the published patent only. The terminology herein is used for the purpose of describing particular embodiments only, and is not intended to limit the present application. Space-related terms, such as "up", "down", "left", "right", "under", "below", "lower", "above" and "upper", may be used herein to describe the relation of one element or feature to another element or feature as shown in figures.

In some examples, though terms such as "first" and "second" are used herein to describe various elements, such elements should not be limited by these terms, and instead, should be used to distinguish one element from another element only. For example, a first multi-wire cutting wheel may be known as a second multi-wire cutting wheel, and vice versa, without departing from the scope of various described embodiments. Both the first multi-wire cutting wheel and the second multi-wire cutting wheel describe a cutting wheel, however, unless otherwise clearly indicated in the context, they are not the same multi-wire cutting wheel. Similar situations also include the first cantilever, the second cantilever and the third cantilever, the first swing arm assembly and the second swing arm assembly, the first movement mechanism and the second movement mechanism, the first clamping portion and the second clamping portion, and the like.

Moreover, as used herein, singular forms "a", "an" and "the" are intended to include plural forms as well, unless contrary indications are given in the context. It should be further understood that terms "comprise" and "include" indicate the presence of the described feature, step, operation, element, component, item, category and/or group, without excluding the presence, appearance or addition of one or more other features, steps, operations, elements, components, items, categories and/or groups. As used herein, terms "or" and "and/or" are interpreted to be inclusive, or to mean any one or any combination. Thus, "A, B or C" or "A, B and/or C" means "any of the following: A; B; C; A and B; A and C; B and C; A, B and C". Exceptions to this definition are possible only when combinations of elements, functions, steps or operations are inherently and mutually exclusive in some way.

At present, silicon materials are generally machined by the wire cutting technology based on inherent hardness and brittleness of silicon rods. The procedure for silicon rod operations starts from cutting an original long silicon rod into a plurality of short silicon rods (i.e. resulting silicon rod sections that satisfy workpiece specifications). The apparatus used for cutting operations is a silicon rod cutting apparatus. In general, a bench is arranged on the silicon rod cutting apparatus, and a cutting wire such as a steel wire or diamond wire is guided by a wire guide wheel, so as to form a wire saw on a cutting roller for cutting a single silicon rod to be machined. As a pre-procedure for subsequent silicon wafer machining operations, cutting a silicon rod requires obtaining a sample to check whether material properties of the silicon rod satisfy process requirements. By using existing sample acquisition methods, the silicon wafer sample is generally obtained by cutting off the head or tail of the silicon rod, moving a cutting frame or the silicon rod, and then repeating cutting operations once. The thickness of the resulting silicon wafer sample depends on an artificially controlled moving distance. Precise control of the short-distance movement of the cutting frame or the silicon rod is difficult; unification of specifications of obtained samples is difficult, and the short-distance movement (such as 2-20 mm) required for obtaining silicon wafer samples is difficult to achieve, indicating that waste of silicon rod materials is easily caused by excessive movements; the cutting efficiency is reduced by sampling operations required to be artificially controlled in traditional procedures.

Additionally, generally, operations required for each procedure are independently arranged; operating equipment is scattered in different production units or production workshops or different production areas of a production workshop; handling and dispatching are necessary for the transfer of workpieces for operations in different procedures, resulting in complicated procedures and a low efficiency, requires a lot of manpower or transfer equipment, and has great potential safety hazards. In addition, many flow links exist between operation equipment of various procedures, which increases the risk of damaging workpieces during the transfer of workpieces, and is prone to unqualified or unreasonable wear and tear resulting from non-production factors.

In embodiments provided by the present application, to clarify spatial orientations, a three-dimensional space is defined by a first dimensional direction, a second dimensional direction and a third dimensional direction. The first dimensional direction, the dimensional second direction and the third dimensional direction are all linear, and any two of them are perpendicular to each other. By reference to a silicon rod to be cut in the cutting area, the first dimensional direction is an axial direction or front-rear direction of the silicon rod to be cut; the second dimensional direction is a left-right direction, e.g., the loading device linearly displaces between the material storage area and the cutting working area towards left or right; the third dimensional direction is an ascending-descending direction or up-down direction, e.g., an ascending or descending direction of the cutting frame.

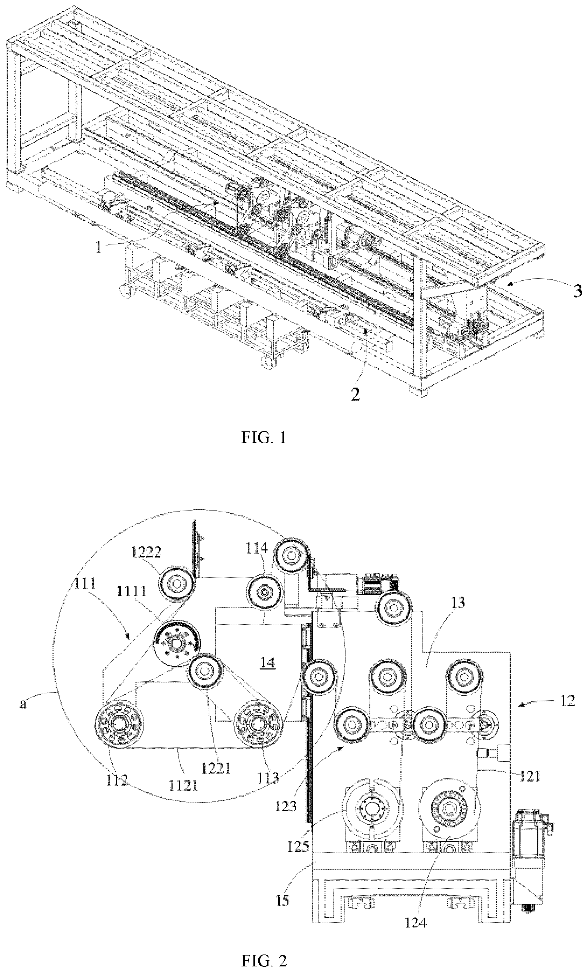

Reference is made to FIG. 1, which is a structural view of a silicon rod cutting apparatus in an embodiment of the present application, including a wire cutting device 1, a silicon rod loading device 2 and a silicon rod unloading device 3.

Reference is made to FIG. 2, which is a side view of a wire cutting device in a first cutting state in an implementation mode of the present application. As shown in the figure, the wire cutting device of the present application is used for cutting operations (such as cutting, squaring or slicing operations) of silicon rods; in an embodiment, silicon rods include monocrystalline silicon rods and polycrystalline silicon rods, wherein monocrystalline silicon rods are rod-like monocrystalline silicon grown from a melt by the Czochralski method or the floating zone method, e.g., monocrystalline silicon rods with a length of about 5,000 mm (such as a specification of 5,360 mm) or about 800 mm are common in silicon rod machining, and polycrystalline silicon rods are silicon rods precipitated from the surface of a silicon core wire by means of precipitation technologies such as a chemical vapor deposition technology; however, this is not a limitation, and in other possible embodiments of the present application, the wire cutting device can also be used to cut monocrystalline silicon ingots or other long and hard materials required to be cut.

As shown in FIG. 2, the wire cutting device 1 applied to the silicon rod cutting apparatus in silicon rod cutting operations of the present application includes a cutting frame 111, a first multi-wire cutting wheel 112, a second multi-wire cutting wheel 113 and a multi-wire saw 1121 formed by winding a cutting wire segment between first multi-wire cutting wheel 112 and second multi-wire cutting wheel 113, and single-wire cutting wheel 114 as well as a single-wire saw (not shown in the embodiment in FIG. 2) formed by winding a cutting wire segment between the second multi-wire cutting wheel 113 and the single-wire cutting wheel 114; a winding system 12, a rack 13, a lifting mechanism 14 and a base 15.

As previously mentioned, before a silicon rod is cut, it is generally necessary to obtain a sample to check whether material properties of the silicon rod satisfy process requirements. For a wire cutting device in a first cutting state as shown in FIG. 2, the lifting mechanism 14 moves up and down to drive the multi-wire saw 1121 (as a double-wire saw in the embodiment in FIG. 2) formed by winding a cutting wire segment between the first multi-wire cutting wheel 112 and the second multi-wire cutting wheel 113 to move up and down along the ascending-descending direction, so as to realize multi-wire cutting of a silicon rod to be machined (not shown in the figure) below the multi-wire saw 1121. During cutting operations by means of an up-and-down movement, parallel cutting wire saws cut the silicon rod to be machined simultaneously to obtain a silicon rod slice, i.e., a required silicon wafer sample, while cutting the silicon rod to be machined. In an embodiment, the first cutting state is a wafer acquisition state.

In the embodiment shown in FIG. 2, the winding system 12 of the wire cutting unit of the present application further includes a cutting wire 121, a wire guide wheel 1221, a wire guide wheel 1222 and a tension detection component 123.

As a further improvement of the present application, the wire cutting unit further includes a cutting frame displacement device. The cutting frame displacement device is arranged between the rack and the base. In an implementation mode of this embodiment, the rack 13 is movably connected to the base of the wire cutting unit through a horizontal guide rail (not shown in the figure) along the first dimensional direction. The horizontal guide rail along the first dimensional direction is arranged on the base. A guide rail groove matched with the horizontal guide rail is arranged at the bottom of the rack 13 of the cutting system. The cutting frame is driven by the cutting frame displacement device, so as to linearly displace along the front-rear direction in the cutting working area (or a cutting bench) of the base, so that the wire saw (this can be a single-wire saw or multi-wire saw, however, in practical cutting, the cutting frame is generally in a state of the single-wire saw, i.e., the second cutting state described in the present application) linearly displaces along the axial direction of the silicon rod, and thereby a length to be cut off from the silicon rod can be adjusted to obtain a desired single silicon rod section that satisfies workpiece specifications.

In an embodiment, a driving mechanism is arranged inside or outside the rack 13, and configured to drive the rack 13 to move on the horizontal guide rail of the base 15. In an embodiment, the driving mechanism of the rack 13 includes: a travel screw (not shown in the figure) arranged along the guide rail of the base and connected to the rack 13, and a travel motor (not shown in the figure) connected to the travel screw. The rack 13 is driven by the travel motor to travel along the guide rail, and the travel motor on the rack 13 is connected to the travel screw laid on the guide rail, which realizes the relative movement of the rack 13 on the guide rail along the first dimensional direction, i.e., the axial direction of the silicon rod to be cut on a carrying device. The cutting frame 111 is movably connected to the rack 13 along the ascending-descending direction and fixed on the rack 13 along the first dimensional direction, which realizes the relative displacement between the cutting wire saw on the cutting frame 111 and the silicon rod to be cut on the carrying device in the axial direction of the silicon rod to be cut. In another implementation mode of this embodiment, the horizontal movement of the cutting frame 111 relative to the base can be driven by an external force.

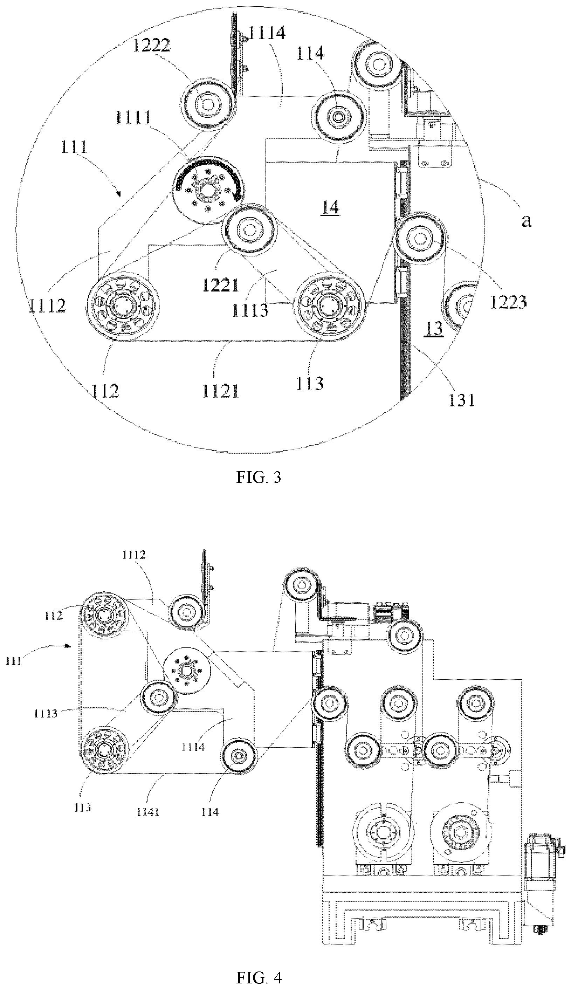

Reference is made to FIG. 3, which is an enlarged view of a wire cutting device at position a in FIG. 2. A guide rail structure for coordinating with the up-and-down movement of the lifting mechanism 14 is arranged on the rack 13. In the embodiment shown in FIG. 3, a lifting guide rail 131 is arranged on the rack 13, and a guide groove (not shown in the figure) matched with the lifting guide rail is arranged for the lifting mechanism 14.

In an implementation mode of this embodiment, to realize the up-and-down movement of the lifting mechanism 14 relative to the rack 13, a driving mechanism (not shown in the figure) is arranged inside or outside the lifting mechanism 14, and configured to drive the lifting mechanism 14, so as to move on the guide rail 131 of the rack 13. In an embodiment, the driving mechanism of the lifting mechanism 14 includes: a travel screw arranged along the guide rail of the rack 13 and connected to the lifting mechanism 14, and a travel motor connected to the travel screw. The lifting mechanism 14 is driven by the travel motor to travel along the guide rail, and the travel motor on the lifting mechanism 14 is connected to the travel screw laid on the guide rail, which realizes the relative movement of the lifting mechanism 14 relative to the rack 13 on the guide rail in a vertical direction, and limits the movement of the lifting mechanism 14 relative to the rack 13 to a single degree of freedom along the ascending-descending direction.

In another embodiment of the present application, a limiting block is further arranged in a connecting assembly between the lifting mechanism 14 and the lifting guide rail of the rack 13, and used to limit the lifting mechanism 14 to prevent excessive displacements during the up-and-down movement.

The wire guide wheels 122 are arranged on the cutting frame and the rack to change the direction of the cutting wire and guide the cutting wire. In specific implementation modes, the wire guide wheels may include transverse wire guide wheels, longitudinal wire guide wheels, diagonal wire guide wheels, and the like, which can be arranged on different mounting structures according to running methods of the cutting wire during installation, so as to achieve the purpose of guiding the cutting wire.

In some embodiments of the present application, the wire cutting device adopts a non-closed winding method, where the cutting wire is wound around a pay-off reel at a head end and a take-up reel at a tail end, and guided by a plurality of wire guide wheels to be wound among the first multi-wire cutting wheel, the second multi-wire cutting wheel and the single-wire cutting wheel, so that in the first cutting state, the cutting frame performs an ascending-descending cutting operation to obtain a silicon wafer sample, and in the second cutting state, the cutting frame performs an ascending-descending cutting operation to cut a silicon rod.

Reference is made to FIG. 2, which is a side view of a wire cutting device adopting a non-closed winding method in an embodiment of the present application, including a cutting frame 111, a first multi-wire cutting wheel 112, a second multi-wire cutting wheel 113, a multi-wire saw 1121 formed by winding a cutting wire between the first multi-wire cutting wheel 112 and the second multi-wire cutting wheel 113, a single-wire cutting wheel 114 and a single-wire saw (not shown in the cutting state in the figure) that can be formed by winding a cutting wire between the second multi-wire cutting wheel 113 and the single-wire cutting wheel 114; a winding system 12 and a base 15.

The cutting frame 111 is rotatably arranged on the lifting mechanism 14. A rotating frame includes: a rotating portion 1111, a first cantilever 1112, a second cantilever 1113 and a third cantilever 1114, wherein the center of the rotating shaft of the rotating portion 1111 is the rotation center of the cutting frame 111; the first cantilever 1112 is a beam structure extending in the first direction along the rotating portion 1111; the second cantilever 1113 is a beam structure extending in the second direction along the rotating portion 1111; the third cantilever 1114 is a beam structure extending in the third direction along the rotating portion 1111; the first cantilever 1112, the second cantilever 1113 and the third cantilever 1114 are all located on a rotary fixing plate of the cutting frame 111, indicating that they rotate with the rotation of the rotating portion 1111.

In an implementation mode, the center of the rotating shaft of the rotating portion 1111 is axially connected to a driving motor. The cutting frame 111 is driven by a motor shaft, i.e., the power output shaft, to rotate along the rotating portion 1111.

The spatial arrangement of the first cantilever 1112, the second cantilever 1113 and the third cantilever 1114 on the cutting frame 111 approximates a T-shaped structure. The rotation center of the cutting frame 111 is arranged in an intersection area of three cantilevers of the cutting frame 111. In a specific implementation mode, the rotation center is located in a center-of-gravity area of the cutting frame 111 according to the structure and material characteristics of the cutting frame 111, which reduces structural wear resulting from a torque applied to the rotating shaft of the rotating portion 1111 by the dead weight of the cutting frame 111. In an embodiment shown in FIG. 2, free ends (i.e. extension ends) of the first cantilever 1112, the second cantilever 1113 and the third cantilever 1114 are rotatably connected to the first multi-wire cutting wheel 112, the second multi-wire cutting wheel 113 and the single-wire cutting wheel 114, respectively. The multi-wire saw 1121 is formed between the first multi-wire cutting wheel 112 and the second multi-wire cutting wheel 113. The single-wire saw 1141 is formed between the second multi-wire cutting wheel 113 and the single-wire cutting wheel 114. The first cantilever 1112, the second cantilever 1113 and the third cantilever 1114 are all located on the rotary fixing plate of the cutting frame 111, indicating that they rotate with the rotation of the rotating portion 1111.

The first multi-wire cutting wheel 112 is a cutting wheel with at least two wire grooves (including two or more wire grooves), and is rotatably arranged at an extension end of the first cantilever 1112 away from the rotation center, wherein wire grooves are arranged in parallel on the cutting wheel, so as to ensure that cutting wires wound around the cutting wheel are parallel. The basic structure and installation method of the cutting wheel are well known or easily known to those skilled in the art, and unnecessary details will not be given herein.

The second multi-wire cutting wheel 113 is a cutting wheel with at least two wire grooves, and is rotatably arranged at an extension end of the second cantilever 1113 away from the rotation center, wherein wire grooves are arranged in parallel on the cutting wheel. In particular, the interval between adjacent wire grooves of the second multi-wire cutting wheel is equal to that of the first multi-wire cutting wheel, so that cutting segments of the multi-wire saw 1121 formed by winding a cutting wire between two multi-wire cutting wheels are spatially parallel.

The single-wire cutting wheel 114 is rotatably arranged at an extension end of the third cantilever 1114 away from the rotation center, and conforms to the cutting wire segment between the second multi-wire cutting wheel 113 and the single-wire cutting wheel 114 to form a single-wire saw. The plane where the wire groove of the single-wire cutting wheel 114 is located along the first dimensional direction is the same as the plane where at least one wire groove of the second multi-wire cutting wheel 113 is located along the first dimensional direction.

In an exemplary implementation mode, the single-wire cutting wheel 114 can be a cutting wheel with a plurality of wire grooves. For the purpose of winding, a single-wire saw can be formed by winding a cutting wire around the wire groove of the single-wire cutting wheel once.

In an exemplary implementation mode, when the silicon rod is cut, the cutting frame 111 rotates around its rotating portion 1111 to realize switching between a first cutting state for cutting by the multi-wire saw 1121 and a second cutting state for cutting by the single-wire saw.

For a wire cutting device in a first cutting state as shown in FIG. 2, the lifting mechanism 14 moves up and down to drive the multi-wire saw 1121 (as a double-wire saw in the embodiment in FIG. 2) formed by winding a cutting wire segment between the first multi-wire cutting wheel 112 and the second multi-wire cutting wheel 113 to move up and down along the ascending-descending direction, so as to realize multi-wire cutting of a silicon rod to be machined (not shown in the figure) below the multi-wire saw 1121. During cutting operations by means of an up-and-down movement, parallel cutting wires 121 cut the silicon rod to be machined simultaneously to obtain a silicon rod slice, i.e., a required silicon wafer sample.

In some implementation modes of the present application, as shown in FIG. 3, the rotating portion 1111 connecting the cutting frame and the lifting mechanism is a rotary flange lock. In other words, the cutting frame 111 and the lifting mechanism 14 are movably connected through a rotary flange lock 1111. The rotary flange lock 1111 includes a first flange, a second flange (not shown in the figure), a bolt and a nut, wherein the first flange has a plurality of first through holes with a diameter larger than that of a bolt screw and smaller than that of a bolt head, the second flange has a plurality of second through holes corresponding to first through holes, second through holes include a large round hole and a small round hole, and the large round hole and the small round hole communicate with each other through side walls; in this embodiment, the nut is a 7-shaped nut, a diameter at an end of the nut is larger than that of the small round hole and smaller than that of the large round hole, and a combination of the nut and an irregularly-shaped hole makes disassembly and assembly of the flange lock easier and more labor-saving. In another embodiment of the present application, a connecting nut in the flange lock can be a wing nut.

In other implementation modes of the present application, a connection between the cutting frame and the lifting mechanism can be arranged as a rotating portion driven by a worm gear and worms, including a worm gear, a forward worm, a reverse worm, a driver and a motor. The forward worm and the reverse worm are engaged with the worm gear respectively. The driver controls the magnitude and direction of a current in the motor. The motor applies a torque to the worm gear by means of worms to rotate the cutting frame.

FIG. 2 is a side view of a wire cutting unit adopting a non-closed winding method of the present application. In the illustrated embodiment, the cutting wire 121 can be a steel wire, a diamond wire formed by inlaying a tiny hard particle such as a diamond on a steel cutting wire, or a diamond wire described in CN201620281204.1 *DIAMOND WIRE AND MULTI-WIRE CUTTING APPARATUS,* which includes: a steel wire, divided into at least two types of cutting zones arranged at an interval; at least two types of diamond layers respectively plated on at least two types of cutting zones, with different particle sizes.

In specific embodiments for which a diamond wire is selected, to avoid wear of the diamond wire wound around 5C wire reels (including a pay-off reel 124 and a take-up reel 125) resulting from inevitable friction caused by high-speed running, a method for winding the diamond wire on a wire storage reel can preferably be single-layer winding. The diamond wire can be wound around the wire storage reel by a wire discharging mechanism for the wire storage reel described in CN200910197800.6 *WIRE DISCHARGING MECHANISM FOR WIRE STORAGE REEL OF DIAMOND WIRE CUTTING MACHINE.*

In some embodiments of the present application, each cutting system comprising a rack 13 and the cutting frame includes at least one tension detection mechanism. The tension detection mechanism includes at least one tension pulley 123. The tension pulley 123 is arranged on the cutting frame 111, the lifting mechanism 14 or the rack 13, and configured to detect and adjust the tension among the first multi-wire cutting wheel 112, the second multi-wire cutting wheel 113 and the single-wire cutting wheel 114. In specific implementation modes, the tension pulley 123 can adopt a tension adjustment mechanism described in CN200910199387.7 *TENSION ADJUSTMENT MECHANISM OF DIAMOND WIRE SQUARER,* or a method described in CN201410245524.7 *MULTI-WIRE CUTTING APPARATUS AND TENSION ADJUSTMENT MECHANISM THEREOF,* which can be used to sense the tension of a steel wire or cutting wire between a pulling assembly and a wire storage reel (winding reel) and the tension of a steel wire or diamond wire between the pulling assembly and a cutting area in real time, and respectively adjust the tension of the steel wire or diamond wire on the winding reel and the tension of the steel wire or diamond wire in the cutting area according to sensed tension values.

In some implementation modes of the present application, the tension detection mechanism can also adopt a tension transition pulley (not shown in the figure) to ensure that a cutting wire 121 is in a balanced state of tension during cutting. After bypassing the rack 13, before being wound around the first multi-wire cutting wheel 112, the second multi-wire cutting wheel 113 or the single-wire cutting wheel 114 on the cutting frame 111 in turn, the cutting wire 121 starting from the pay-off reel 124 is guided in the cutting frame 111 through a first tension transition pulley, wound around the cutting wheel on the cutting frame 111, then led out to the guide wheel 1221 of the rack 13 through a second tension transition pulley, and guided by the guide wheel 1221 to be wound around the take-up reel 125. During cutting, the cutting wire 121 between the first tension transition pulley and the first multi-wire cutting wheel is adjusted through coordination of the first tension transition pulley and the pay-off reel to ensure that the cutting wire 121 is in a balanced state, and the cutting wire 121 between the second tension transition pulley and the second multi-wire cutting wheel or the single-wire cutting wheel is adjusted through coordination of the second tension transition pulley and the take-up reel to ensure that the cutting wire 121 is in a balanced state.

In some embodiments of the present application, the cutting system further includes a winding motor configured to drive the cutting wire 121 between the take-up reel 125 and the pay-off reel 124 to operate.

The wire cutting device of the present application is further improved by including a locking device. The locking device is arranged on the lifting mechanism, and used to lock a cutting state after the cutting frame is switched between different cutting states. The degree of freedom of cantilevers of the cutting frame is greater than 0. In the cutting process, the cutting frame may rotate under a contact force between the cutting wire 121 and a silicon rod to be cut. An implementation means is using the locking device, where the cutting frame stops rotating and is locked after driven by the driving motor of the rotating portion to rotate to a preset cutting state position.

In an implementation mode of this embodiment, the locking device includes a rotation locking cylinder. The rotation locking cylinder is released during the rotation of the cutting frame for switching between cutting states, and enters a braking state after the cutting frame reaches the preset cutting state.

As a further improvement of the present application, the locking device further includes a positioning device. To switch between cutting states, the cutting frame is driven by the driving motor to passively rotate in a rotation state controlled by the motor. In an implementation scenario, the cutting frame can continue rotating under its inherent rotational inertia after the motor stops working. Artificial control of the rotational angular speed and duration of the rotational movement driven by rotational inertia is difficult, which affects spatial positioning of the cutting frame after the rotation is stopped. The positioning device is arranged on the lifting mechanism and includes a fixing module for an automatic detection line and a positioning clamp assembly. When the rotating frame rotates to a first cutting state position or a second cutting state position, upon detection that a part in the cutting frame is placed in the positioning clamp assembly, the fixing module for the automatic detection line rotates a cylinder of the locking cylinder to extend, and pushes the positioning clamp assembly to clamp the cutting frame, so that the degree of freedom of the relative movement between the cutting frame and the lifting mechanism is 0.

Reference is made to FIG. 3. In the embodiment shown in the figure, the wire cutting device adopts a non-closed winding method with the pay-off reel as an origination and the take-up reel as a destination. The cutting wire 121 passes through the rack and the cutting frame on the wire cutting device. The cutting wire 121 starting from the pay-off reel is wound on the rack according to the arrangement of wire guide wheels, and then the cutting wire is wound around wire guide wheels, the first multi-wire cutting wheel 112, the second multi-wire cutting wheel 113 and the single-wire cutting wheel 114 from rack 13 to cutting frame 111. After being wound on the cutting frame, the cutting wire 121 is guided by wire guide wheels from the rack to be wound around the take-up reel.

To facilitate the description and understanding of the winding method of the present application, a method for winding the cutting wire 121 on the cutting frame will be described below: The cutting wire 121 starting from the rack is wound around a wire guide wheel 1222, with the point of tangency of the wire groove along the wire guide wheel 1222 as an origination, and the direction of the cutting wire is a tangential direction;
After being wound around the first multi-wire cutting wheel 112, the second multi-wire cutting wheel 113 and the wire guide wheel 1221 in turn, the cutting wire 121 guided by the wire guide wheel 1221 in a winding cycle forms the first cutting wire saw between the first multi-wire cutting wheel 112 and the second multi-wire cutting wheel 113;
Upon the completion of a winding cycle, the cutting wire 121 starting from the tangent of the wire groove of the wire guide wheel 1221 is wound to pass through the first multi-wire cutting wheel 112 and the second multi-wire cutting wheel 113 in turn, and after being wound around the second multi-wire cutting wheel 113, forms the second cutting wire saw parallel to the first cutting wire saw formed between the first multi-wire cutting wheel 112 and the second multi-wire cutting wheel 113 in the first winding cycle, i.e., forms a multi-wire saw 1121, eventually forming two parallel cutting wire saws;
An extension line extends from the tangent at the lower edge of the second multi-wire cutting wheel to a wire guide wheel 1223 on the rack as a destination of winding on the cutting frame 111.

In certain embodiments of the present application, a plurality of tension pulleys around which the cutting wire is wound can be arranged on one rack in the wire cutting device.

In certain embodiments of the present application, based on the number of slices required by a process, for the annular winding method, parallel cutting wire saws can be formed by passing through the first multi-wire cutting wheel and the second multi-wire cutting wheel more than twice. A plurality of silicon wafer samples can be obtained by means of an ascending-descending cutting operation of the cutting frame.

As shown in FIG. 2, which is a view of a wire cutting device in a first cutting state, the first cutting state is a state where the cutting frame 111 is rotated until the horizontal plane, on which the lower edge of the first multi-wire cutting wheel 112 is located is the same as the horizontal plane, on which the lower edge of the second multi-wire cutting wheel 113 is located, and the common horizontal plane is located below the structure of the cutting frame 111 in the first cutting state. A multi-wire saw is formed by winding the cutting wire 121 between the first multi-wire cutting wheel 112 and the second multi-wire cutting wheel 113. The multi-wire saw is presented as horizontally parallel wires. In other words, the first cutting state is a wafer acquisition operation state where a silicon wafer sample can be obtained through a cutting action. In the first cutting state, the single-wire cutting wheel and the cutting wire 121 are separated (not in contact).

For a wire cutting device in a second cutting state as shown in FIG. 4, the second cutting state is a state where the cutting frame 111 is rotated until the horizontal plane, on which the lower edge of the second multi-wire cutting wheel 113 is located is the same as the horizontal plane, on which the lower edge of the single-wire cutting wheel 114 is located, and the common horizontal plane is located below the structure of the cutting frame 111 in the first cutting state. The horizontal single-wire saw 1141 is formed by winding the cutting wire 121 between the second multi-wire cutting wheel 113 and the single-wire cutting wheel 114. In other words, the second cutting state is a state where a silicon rod can be cut through a cutting action. In the second cutting state, for the cutting frame 111, the angle between an extension line of the first cantilever 1112 and an extension line of the second cantilever 1113 is 45°, and the angle between an extension line of the second cantilever 1113 and an extension line of the third cantilever 1114 is 45°. A cantilever structure of the cutting frame 111 is approximately symmetrical, with the center line of the second cantilever 1113 as a symmetry line. The angle between an extension line of the multi-wire saw and an extension line of the single-wire saw is 90°. When the cutting frame 111 rotates around the rotation center for switching between different cutting states, switching between the first cutting state and the second cutting state can be realized by means of a rotation at 90° around a rotation axis, or switching from the intermediate state to the first cutting state or the second cutting state can be realized by means of a rotation at ±45° around the rotation axis.

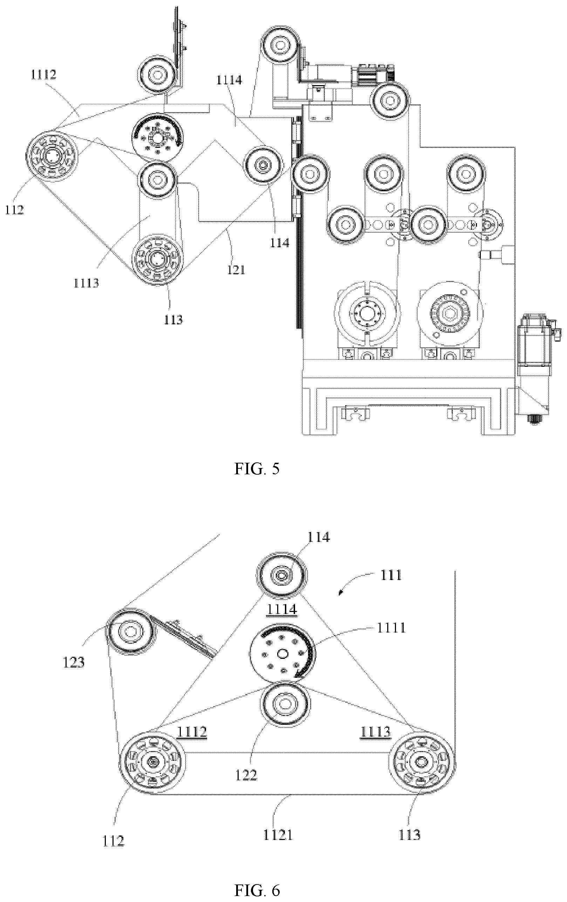

Reference is made to FIG. 5, which is a side view of a wire cutting device with a cutting frame in an intermediate state in an embodiment of the present application. The intermediate state is a naturally stationary state of the cutting frame 111 under the action of gravity of the cutting frame 111 when the locking device is released, i.e., when the cutting frame 111 is separated from the positioning clamp assembly. In this state, the multi-wire saw between the first multi-wire cutting wheel 112 and the second multi-wire cutting wheel 113 as well as the single-wire saw between the second multi-wire cutting wheel 113 and the single-wire cutting wheel 114 are at certain angles to a horizontal line, and the single-wire saw is tangent to the single-wire cutting wheel 114; the cutting frame approximates an upright T-shaped structure, i.e., it is in a state where the part below the horizontal plane, on which the rotation center of the cutting frame 111 is located has the lowest center of gravity.

FIG. 2 shows a wire cutting device in a first cutting state. The single-wire cutting wheel 114 is separated from the cutting wire 121. To switch in the cutting process, when the cutting frame 111 is switched to the second cutting state, with the rotation of the third cantilever 1114 of the cutting frame 111 around the rotation center, the single-wire cutting wheel 114 is separated from the cutting wire 121 in the first cutting state, is brought into contact with and tangent to the cutting wire in the intermediate state, presses the cutting wire in the second cutting state, and is locked by the rotation locking cylinder to be stationary after reaching the second cutting state position. After rotating to the second cutting state, a wire groove in the single-wire cutting wheel 114 in the same plane as the cutting wire 121 along the first dimensional direction is brought into contact with the cutting wire 121 and presses the cutting wire 121 to be horizontal, thereby forming a single-wire saw between the second multi-wire cutting wheel 113 and the single-wire cutting wheel 114.

A complete cutting process conducted by the wire cutting device of the present application for a silicon rod on the carrying device includes the following cutting states: The silicon rod (a silicon rod to be cut) is clamped after its position on the carrying device is adjusted to keep the silicon rod stationary, the position of the rack along the first dimensional direction is adjusted so that the cutting wire saw is located above the head (or tail, or in case of two wire racks, two cutting frames will be located on two sides of the head and tail of the silicon rod to be cut) to be cut off and an intersection in a position that satisfies machining specifications, the motor drives the cutting frame to rotate at a certain angle (45° in the illustrated embodiment) from the intermediate state of naturally stationary to the first cutting state of multi-wire saw cutting, the cutting frame is locked by the rotation locking cylinder, and the lifting mechanism descends and drives the wire saw to move to be in contact with the silicon rod and continue to cut, so that a silicon wafer sample is obtained when the head is cut off; after the sample is obtained, the lifting mechanism ascends away from the silicon rod, the position of the rack along the first dimensional direction is adjusted by the travel motor on the horizontal guide rail according to a preset length of a silicon rod section, the motor axially connected by the rotating shaft of the cutting frame drives the cutting frame to rotate at a certain angle (90° in the illustrated embodiment) to the second cutting state of single-wire cutting, the relation between the cutting wire and the single-line cutting wheel is gradually changed from separation to press contact during the rotation until the cutting wire is wound around the single-line cutting wheel, a horizontal single-wire saw is formed in the second cutting state, the cutting frame is locked by the rotation locking cylinder, and the lifting mechanism drives the cutting wire saw to descend for cutting to obtain the silicon rod section; the step of operating the single-wire saw is repeated to cut the silicon rod according to requirements for a crystal section until the completion of the cutting operations for the whole silicon rod. After the cutting frame completes cutting operations, the locking cylinder is released, and the cutting frame rotates by a certain angle (45° in the illustrated embodiment) from the second cutting state to the intermediate state.

In another embodiments of the wire cutting device of the present application, as shown in FIG. 6, angles among the first cantilever 1112, the second cantilever 1113 and the third cantilever 1114 of the cutting frame 111 can be changed to 120°. The first multi-wire cutting wheel 112, the second multi-wire cutting wheel 113 and the single-wire cutting wheel 114 are respectively fixed on the first cantilever 1112, the second cantilever 1113 and the third cantilever 1114. The angle between an extension line of the multi-wire saw 1121, which is formed between the first multi-wire cutting wheel 112 and the second multi-wire cutting wheel 113, and an extension line of the single-wire saw 1141, which is formed between the second multi-wire cutting wheel 113 and the single-wire cutting wheel 114, is 60°. When the cutting frame 111 rotates around a rotation center 1111 for switching between different cutting states, switching between the first cutting state and the second cutting state can be realized by means of a rotation at 120° around a rotation axis, or switching from the intermediate state to the first cutting state or the second cutting state can be realized by means of a rotation at ±60° around the rotation axis.

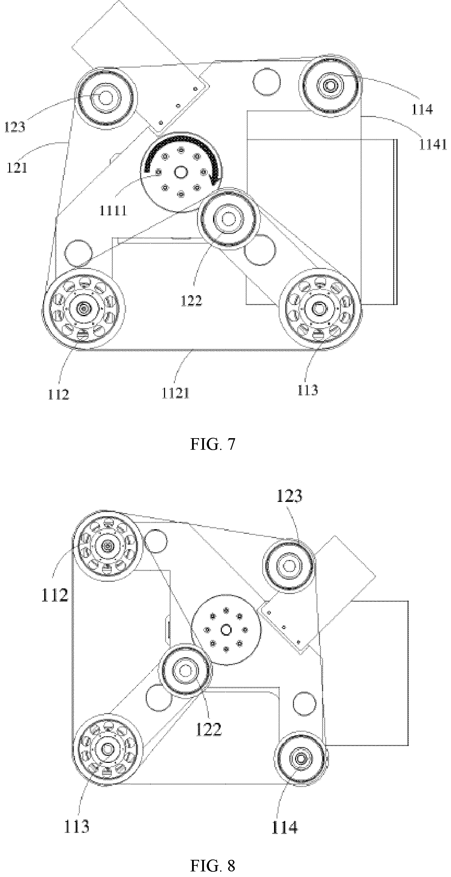

In another embodiments of the present application, as shown in FIG. 7, the winding system of the wire cutting device of the present application is of a closed winding structure. The cutting wire 121 is wound among the first multi-wire cutting wheel 112, the second multi-wire cutting wheel 113 and the single-wire cutting wheel 114 on the cutting frame 111 by the head-to-tail annular winding method. The cutting wire 121 is wound around cutting wheels through cutting grooves of the first multi-wire cutting wheel 112 and the second multi-wire cutting wheel 113. The cutting wire saws are formed in tangential directions of cutting grooves. The cutting wire 121 is guided by the wire guide wheel to be wound around the first multi-wire cutting wheel 112 and the second multi-wire cutting wheel 113 at least twice, and guided by the wire guide wheel to be wound around the single-wire cutting wheel 114 once. The distance between any two of a plurality of wire grooves wound around the first multi-wire cutting wheel 112 of the cutting wire 121 is correspondingly equal to that between any two of a plurality of wire grooves wound around the second multi-wire cutting wheel 113. Namely, the cutting wires 121 formed along tangential directions of wire grooves of the first multi-wire cutting wheel 112 and the second multi-wire cutting wheel 113 are spatially parallel.

The cutting frame 111 is rotatably arranged on a lifting mechanism (not shown in the figure). The cutting frame 111 includes: a rotating portion 1111, a first cantilever 1112, a second cantilever 1113 and a third cantilever 1114, wherein the center of the rotating shaft of the rotating portion 1111 is the rotation center of the cutting frame; the first cantilever 1112 is a beam structure extending in the first direction along the rotating portion 1111; the second cantilever 1113 is a beam structure extending in the second direction along the rotating portion 1111; the third cantilever 1114 is a beam structure extending in the third direction along the rotating portion 1111; the first cantilever 1112, the second cantilever 1113 and the third cantilever 1114 are all located on a rotary fixing plate of the cutting frame 111, indicating that they rotate with the rotation of the rotating portion 1111.

In some implementation modes of the present application, the center of the rotating shaft of the rotating portion 1111 is axially connected to a driving motor. The cutting frame is driven by a motor shaft, i.e., the power output shaft, to rotate along the rotating portion.

The spatial arrangement of the first cantilever 1112, the second cantilever 1113 and the third cantilever 1114 on the cutting frame approximates a T-shaped structure. The rotation center of the cutting frame is arranged in an intersection area of three cantilevers of the cutting frame. In specific implementation modes, the rotation center is located in a center-of-gravity area of the cutting frame according to the structure and material characteristics of the cutting frame, which reduces structural wear resulting from a torque applied to the rotating shaft of the rotating portion by the dead weight of the cutting frame. In an embodiment shown in FIG. 1, free ends (i.e. extension ends) of the first cantilever 1112, the second cantilever 1113 and the third cantilever 1114 are fixed to the first multi-wire cutting wheel, the second multi-wire cutting wheel and the single-wire cutting wheel, respectively. The multi-wire saw 1121 is formed between the first multi-wire cutting wheel and the second multi-wire cutting wheel. A single-wire saw (not shown in the illustrated embodiment) is formed between the second multi-wire cutting wheel and the single-wire cutting wheel.

The first multi-wire cutting wheel 112 is a cutting wheel with at least two wire grooves, and is fixed at an extension end of the first cantilever 1112 away from the rotation center, wherein wire grooves are arranged in parallel on the cutting wheel, so as to ensure that cutting wires wound around the cutting wheel are parallel. The basic structure and installation method of the cutting wheel are well known or easily known to those skilled in the art, and unnecessary details will not be given herein.

The second multi-wire cutting wheel 113 is a cutting wheel with at least two wire grooves, and is rotatably arranged at an extension end of the second cantilever 1113 away from the rotation center, wherein wire grooves are arranged in parallel on the cutting wheel. In particular, the interval between adjacent wire grooves of the second multi-wire cutting wheel 113 is equal to that of the first multi-wire cutting wheel 112, so that cutting segments of the multi-wire saw formed by winding a cutting wire between two multi-wire cutting wheels are spatially parallel.

The single-wire cutting wheel 114 is rotatably arranged at an extension end of the third cantilever 1114 away from the rotation center, and conforms to the cutting wire segment between the second multi-wire cutting wheel 113 and the single-wire cutting wheel 114 to form a single-wire saw. The plane where the wire groove of the single-wire cutting wheel 114 is located along the first dimensional direction is the same as the plane where at least one wire groove of the second multi-wire cutting wheel 113 is located along the first dimensional direction.

In another implementation mode of the present application, the single-wire cutting wheel 114 can be a cutting wheel with a plurality of wire grooves. For the purpose of winding, a single-wire saw can be formed by winding a cutting wire around the wire groove of the single-wire cutting wheel 114 once.

In some embodiments of the present application, when the silicon rod is cut, the cutting frame rotates around its rotating portion to realize switching between a first cutting state for cutting by the multi-wire saw and a second cutting state for cutting by the single-wire saw.

For a wire cutting device in a first cutting state as shown in FIG. 7, the lifting mechanism moves up and down to drive the multi-wire saw 1121 (as a double-wire saw in the embodiment shown in FIG. 1) formed by winding a cutting wire segment between the first multi-wire cutting wheel 112 and the second multi-wire cutting wheel 113 to move up and down along the ascending-descending direction, so as to realize multi-wire cutting of a silicon rod to be machined (not shown in the figure) below the multi-wire saw 1121. During cutting operations by means of an up-and-down movement, parallel cutting wire saws cut the silicon rod to be machined simultaneously to obtain a silicon rod slice, i.e., a required silicon wafer sample.

In some implementation modes of the present application, the rotating portion 1111 connecting the cutting frame and the lifting mechanism is a rotary flange lock. The rotary flange lock includes a first flange, a second flange (not shown in the figure), a bolt and a nut, wherein the first flange has a plurality of first through holes with a diameter larger than that of a bolt screw and smaller than that of a bolt head, the second flange has a plurality of second through holes corresponding to first through holes, second through holes include a large round hole and a small round hole, and the large round hole and the small round hole communicate with each other through side walls; in this embodiment, the nut is a 7-shaped nut, a diameter at an end of the nut is larger than that of the small round hole and smaller than that of the large round hole, and a combination of the nut and an irregularly-shaped hole makes disassembly and assembly of the flange lock easier and more labor-saving. In another embodiment of the present application, a connecting nut in the flange lock can be a wing nut.

In another implementation modes of the present application, a connection between the cutting frame and the lifting mechanism can be arranged as a rotating portion driven by a worm gear and worms, including a worm gear, a forward worm, a reverse worm, a driver and a motor. The forward worm and the reverse worm are engaged with the worm gear respectively. The driver controls the magnitude and direction of a current in the motor. The motor applies a torque to the worm gear by means of worms to rotate the cutting frame.

In the embodiment shown in FIG. 7, the cutting wire 121 is a stranded cutting wire formed by twisting at least two cutting wires. The stranded cutting wire is formed by rotating two or more single-strand steel wires or single-strand diamond wires for twisting around a stranding shaft at the same angular speed and advancing them at a uniform speed in combination with a method for winding a stranded wire, or formed by twisting a plurality of single-strand wires according to certain directions and rules. Compared with a single-strand cutting wire having the same cross-sectional area, the stranded cutting wire has higher mechanical properties and flexibility, thereby prolonging the fatigue life of a cutting wire under repeated wear during cutting.

Reference is made to FIG. 7. In the embodiment shown in the figure, the cutting wire 121 is wound as a closed annular structure. To facilitate the description and understanding of the winding method of the present application, a point in a cutting wire ring is assumed as a cutting point and taken as an origination of winding. In an implementation mode, a method for winding the cutting wire 121 is as follows: The cutting wire 121 starts from the single-wire cutting wheel 114, with the point of tangency of the wire groove along the single-wire cutting wheel 114 as an origination, and the direction of the cutting wire 121 as a tangential direction;
After being wound around the second multi-wire cutting wheel 113, the first multi-wire cutting wheel 112 and the wire guide wheel 122 in turn, the cutting wire 121 guided by the wire guide wheel 122 in a winding cycle forms the first cutting wire saw between the first multi-wire cutting wheel and the second multi-wire cutting wheel;
Upon the completion of a winding cycle, the cutting wire 121 starting from the tangent of the wire groove of the wire guide wheel is wound to pass through the second multi-wire cutting wheel 113 and the first multi-wire cutting wheel 112 in turn, and, after being wound around the first multi-wire cutting wheel 112, forms the second cutting wire saw parallel to the first cutting wire saw formed between the first multi-wire cutting wheel 112 and the second multi-wire cutting wheel 113 in the first winding cycle, i.e., forms the multi-wire saw 1121 between the first multi-wire cutting wheel 112 and the second multi-wire cutting wheel 113;
The cutting wire 121 is wound around the single-wire cutting wheel 114 via the tension pulley 123, and reaches the assumed cutting point on the single-wire cutting wheel 114, so that the head-to-tail annular winding method is realized for practical winding.

In some examples, contacts on cutting grooves between the cutting wire 121 and the cutting wheels are inferior arcs (arcs at angles less than 180°). The cutting wire 121 is tensioned between cutting wheels, and wound on the outer edge of a convex hull formed by the single-wire cutting wheel or the multi-wire cutting wheel, the tension pulley and the wire guide wheel.

In certain embodiments of the present application, a plurality of wire guide wheels 122 through which an annularly wound wire passes can be arranged on one cutting frame 111 in the wire cutting device.

In certain embodiments of the present application, a plurality of tension pulleys 123 through which an annularly wound wire passes can be arranged on one cutting frame 111 in the wire cutting device.

In certain embodiments of the present application, for the annular winding method, parallel cutting wire saws can be formed by passing through the first multi-wire cutting wheel 112 and the second multi-wire cutting wheel 113 more than twice. A plurality of silicon wafer samples can be obtained through an ascending-descending cutting operation of the cutting frame.

In some implementation modes of the present application, the winding system formed by the annular winding method further includes a driving motor (not shown in the figure) adjacent to the first multi-wire cutting wheel 112 or the second multi-wire cutting wheel 113. In this embodiment, the driving motor is a power source for running the cutting wire in the winding system. The driving motor directly drives the first multi-wire cutting wheel 112 or the second multi-wire cutting wheel 113 to rotate, so as to run the cutting wire 121 wound among the first multi-wire cutting wheel 112, the second multi-wire cutting wheel 113 and the single-wire cutting wheel 114.

The tension detection mechanism includes a tension pulley 123, arranged on the cutting frame and configured to detect and adjust the tension of the cutting wire 121 among the first multi-wire cutting wheel 112, the second multi-wire cutting wheel 113 and the single-wire cutting wheel 114. The tension of the cutting wire 121 affects the finished product ratio and machining precision during wire cutting. The tension detection mechanism detects and adjusts the tension, so that the tension of the cutting wire reaches a certain threshold and is kept as a constant value or within a certain allowable range with the constant value at its numerical center during cutting.

The tension pulley 123 is configured to adjust the tension of the cutting wire 121, and can reduce the breakage probability of the cutting wire 121 as well as the consumables. The cutting wire 121 plays a decisive role in cutting operations, but even the best cutting wire 121 has limited elongation and wear resistance, indicating that the cutting wire 121 gradually becomes thinner during reciprocating movements until it is finally broken. Therefore, current wire cutting apparatuses are generally designed with tension compensation mechanisms for the cutting wire 121 to compensate for the elongation of the cutting wire 121 traveling back and forth. Using the tension pulley 123 is an implementation means.

In some embodiments of the present application, the tension detection mechanism at least includes: a tension pulley, a tension sensor, a servo motor and a screw, wherein, the tension pulley is arranged between the single-wire cutting wheel and the first multi-wire cutting wheel, and is used to pull a steel wire or diamond wire between the single-wire cutting wheel and the first multi-wire cutting wheel; the tension sensor is arranged on the tension pulley, and is used to continuously sense a tension value of the diamond wire on the tension pulley, and to send a driving signal when the tension value is less than a preset value; the servo motor is electromechanically connected to the tension sensor, and starts working after receiving the driving signal from the tension sensor; the screw is connected to the tension pulley at one end and the servo motor at the other end, and pulls the tension pulley for unidirectional displacements when the servo motor works, thereby adjusting the tension of the steel wire or diamond wire.

As a further improvement of the wire cutting device of the present application, the tension adjustment mechanism further includes a sliding rail, wherein the sliding rail is arranged between the servo motor and the tension pulley, and is used to enable the tension pulley to slide on the sliding rail when the screw pulls the tension pulley. The servo motor has a rotating shaft, and the screw is axially connected to the rotating shaft of the servo motor; when the tension sensor senses the tension of the steel wire or diamond wire for the first time, the preset value sensed by the tension sensor is an initial tension value, and during cutting operations, the tension value sensed by the tension sensor is a current tension value, and the preset value sensed by the tension sensor is the tension value at the previous moment.

The wire cutting device of the present application is further improved by including a locking device, wherein the locking device is arranged on the lifting mechanism, and used to lock a cutting state after the cutting frame is switched between different cutting states. The degree of freedom of cantilevers of the cutting frame is greater than 0. In the cutting process, the cutting frame may rotate under a contact force between the cutting wire and a silicon rod to be cut. Using the locking device is an implementation means, where the cutting frame stops rotating and is locked after driven by the driving motor of the rotating portion to rotate to a preset cutting state position.

In an implementation mode of this embodiment, the locking device includes a rotation locking cylinder. The rotation locking cylinder is released during the rotation of the cutting frame for switching between cutting states, and enters a braking state after the cutting frame reaches the preset cutting state.

As a further improvement of the present application, the locking device further includes a positioning device. To switch between cutting states, the cutting frame is driven by the driving motor to passively rotate in a rotation state controlled by the motor. In specific embodiments, the cutting frame can continue rotating under its inherent rotational inertia after the motor stops working. Artificial control of the rotational angular speed and duration of the rotational movement driven by rotational inertia is difficult, which affects spatial positioning of the cutting frame after the rotation is stopped. The positioning device is arranged on the lifting mechanism, and includes a fixing module for an automatic detection line, and a positioning clamp assembly. When the rotating frame rotates to a first cutting state position or a second cutting state position, upon detection that a part in the cutting frame is placed in the positioning clamp assembly, the fixing module for the automatic detection line rotates a cylinder of the locking cylinder to extend, and pushes the positioning clamp assembly to clamp the cutting frame, so that the degree of freedom of the relative movement between the cutting frame and the lifting mechanism is 0.

As shown in FIG. 7, for the cutting frame 111, the angle between an extension line of the first cantilever 1112 and an extension line of the second cantilever 1113 is 45°, and the angle between an extension line of the second cantilever 1113 and an extension line of the third cantilever 1114 is 45°. A cantilever structure of the cutting frame 111 is approximately symmetrical, with the center line of the second cantilever 1113 as a symmetry line. The angle between an extension line of the multi-wire saw 1121 and an extension line of the single-wire saw 1141 is 90°. When the cutting frame 111 rotates around the rotation center for switching between different cutting states, switching between the first cutting state and the second cutting state can be realized by means of a rotation at 90° around a rotation axis, or switching from the intermediate state to the first cutting state or the second cutting state can be realized by means of a rotation at ±45° around the rotation axis.

The first cutting state is a state where the cutting frame 111 is rotated until the horizontal plane, on which the lower edge of the first multi-wire cutting wheel 112 is located is the same as the horizontal plane, on which the lower edge of the second multi-wire cutting wheel 113 is located, and the common horizontal plane is located below the structure of the cutting frame 111 in the first cutting state. The multi-wire saw 1121 is formed by winding a cutting wire segment between the first multi-wire cutting wheel 112 and the second multi-wire cutting wheel 113. The multi-wire saw 1121 is presented as horizontally parallel wires. In other words, the first cutting state is a wafer acquisition operation state where a silicon wafer sample can be obtained through a cutting action. In particular, the first cutting state is always a wafer acquisition operation state for wire cutting devices in different embodiments.

Reference is made to FIG. 8, which is a side view of a wire cutting device in a second cutting state in an embodiment of the present application. The second cutting state is a state where the cutting frame 111 is rotated until the horizontal plane, on which the lower edge of the second multi-wire cutting wheel 113 is located is the same as the horizontal plane, on which the lower edge of the single-wire cutting wheel 114 is located, and the common horizontal plane is located below the structure of the cutting frame 111 in the first cutting state. A horizontal single-wire saw is formed by winding a cutting wire segment between the second multi-wire cutting wheel 113 and the single-wire cutting wheel 114. In other words, the second cutting state is a state where a silicon rod can be cut through a cutting action. In particular, the second cutting state is always a silicon rod cutting state for wire cutting devices in different embodiments.

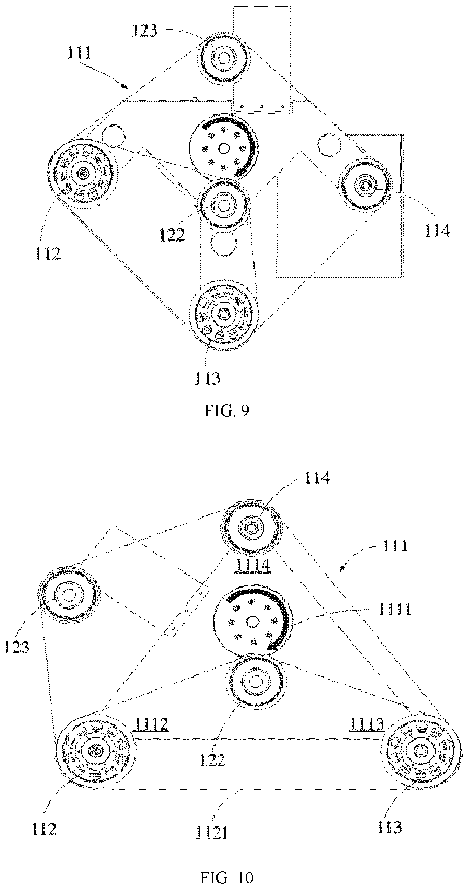

Reference is made to FIG. 9, which is a side view of a wire cutting device in an intermediate state in an embodiment of the present application. The intermediate state is a naturally stationary state of cutting frame 111 under the action of gravity of the cutting frame 111 when the locking device is released, i.e., when the cutting frame 111 is separated from the positioning clamp assembly. In this state, the multi-wire saw between the first multi-wire cutting wheel 112 and the second multi-wire cutting wheel 113 as well as the single-wire saw between the second multi-wire cutting wheel 113 and the single-wire cutting wheel 114 are at certain angles to a horizontal line; the cutting frame 111 approximates an upright T-shaped structure, i.e., it is in a state where the part below the horizontal plane, on which the rotation center of the cutting frame 111 is located has the lowest center of gravity.

In a specific implementation process of cutting a silicon rod to be cut with the wire cutting device, after being transported and loaded, the silicon rod to be cut on a silicon rod carrying device is cut by the cutting system. The position of the silicon rod on the carrying device or the horizontal position of the rack on the base of the wire cutting device is adjusted according to characteristics of the silicon rod to be cut, such as a length of an impurity layer to be cut off from the head or tail. After the position of the cutting frame along the first dimensional direction is determined, the travel motor on the lifting mechanism of the rack drives the lifting mechanism to displace along the ascending-descending direction. The driving motor that coordinates with annular winding of the cutting wire drives the cutting wire for cutting operations.

A complete cutting process conducted by the wire cutting device of the present application for a silicon rod on the carrying device includes the following cutting states: The silicon rod is clamped after its position on the carrying device is adjusted to keep the silicon rod stationary, the position of the rack along the first dimensional direction is adjusted so that the cutting wire saw is located above the head to be cut off and an intersection in a position that satisfies machining specifications, the motor drives the cutting frame to rotate at a certain angle (45° in the illustrated embodiment) from the intermediate state of naturally stationary to the first cutting state of multi-wire saw cutting, the cutting frame is locked by the rotation locking cylinder, and the lifting mechanism descends and drives the wire saw to move to be in contact with the silicon rod and continue to cut, so that a silicon wafer sample is obtained when the head is cut off; after the sample is obtained, the lifting mechanism ascends away from the silicon rod, the position of the rack along the first dimensional direction is adjusted by the travel motor on the horizontal guide rail according to a preset length of a silicon rod section, the motor axially connected by the rotating shaft of the cutting frame drives the cutting frame to rotate at a certain angle (90° in the illustrated embodiment) to the second cutting state of single-wire cutting, the cutting frame is locked by the rotation locking cylinder, and the lifting mechanism drives the cutting wire saw to descend for cutting to obtain the silicon rod section; operations in the previous step are repeated until the tail of the silicon rod is machined, indicating that the cutting frame completes cutting operations for the whole silicon rod. After the cutting frame completes cutting operations, the locking cylinder is released, and the cutting frame rotates by a certain angle (45° in the illustrated embodiment) from the second cutting state to the intermediate state.

Reference is made to FIG. 10. In another embodiments of the wire cutting device of the present application, angles among the first cantilever 1112, the second cantilever 1113 and the third cantilever 1114 of the cutting frame 111 can be changed. The first multi-wire cutting wheel 112, the second multi-wire cutting wheel 113 and the single-wire cutting wheel 114 are respectively fixed on the first cantilever 1112, the second cantilever 1113 and the third cantilever 1114. The angle between an extension line of the multi-wire saw, which is formed between the first multi-wire cutting wheel 112 and the second multi-wire cutting wheel 113, and an extension line of the single-wire saw, which is formed between the second multi-wire cutting wheel 113 and the single-wire cutting wheel 114, is 60°. When the cutting frame 111 rotates around the rotation center for switching between different cutting states, switching between the first cutting state and the second cutting state can be realized by means of a rotation at 120° around a rotation axis, or switching from the intermediate state to the first cutting state or the second cutting state can be realized by means of a rotation at ±60° around the rotation axis.

In certain embodiments of the present application, a plurality of tension pulleys around which a wire is annularly wound can be arranged on one cutting frame in the wire cutting device.

In certain embodiments of the present application, for the annular winding method, parallel cutting wire saws can be formed by passing through the first multi-wire cutting wheel and the second multi-wire cutting wheel more than twice. A plurality of silicon wafer samples can be obtained through an ascending-descending cutting operation of the cutting frame.

In an actual production process, a silicon rod is generally not a cylinder with an equal diameter, but is larger at one end and smaller at the other end or of other types. If a bearing face of the carrying device is arranged horizontally, the axis of the silicon rod to be cut may not be horizontal. In this case, a cross-section cut through the vertical up-and-down movement of the lifting mechanism is not perpendicular to the axis of the cut silicon rod, indicating that a cut face is a bevel, and thereby a resulting silicon rod section does not satisfy machining requirements. The wire cutting device of the present application is further improved by including a level detection device (not shown in the figure). The level detection device is arranged on the lifting mechanism, and configured to detect the axis levelness of the silicon rod to be cut.

In some embodiments of the present application, the level detection device on the lifting mechanism further includes a first contact measuring instrument and a second contact measuring instrument, which are configured to detect the axis levelness of the silicon rod to be cut. The first contact measuring instrument is used to measure level data of the silicon rod to be cut in the cutting working area at a measuring position corresponding to the first contact measuring instrument. The second contact measuring instrument is used to measure level data of the silicon rod to be cut in the cutting working area at a measuring position corresponding to the second contact measuring instrument.

The wire cutting device of the present application is further improved by including a leveling device (not shown in the figure). The leveling device is arranged in the working area, and used to level the axis of the silicon rod in the cutting working area and to be cut based on the detection result of the level detection device. When the level detection device detects that the axis of the silicon rod to be cut is non-horizontal, the leveling device adopting a level alignment structure drives a workpiece carrying device to rotate by means of a rotation driving mechanism, thereby adjusting the axis levelness of the workpiece.

In an embodiment of the present application, the leveling device includes: a rotation pivot structure, a rotation driving mechanism and an offset limiting mechanism. The rotation pivot structure is located below the silicon rod carrying device for bearing the silicon rod to be cut in the working area, and serves as a rotation pivot for the rotation of the silicon rod carrying device. The rotation driving mechanism is located below the silicon rod carrying device, and configured to drive the silicon rod carrying device to rotate around the rotation pivot structure, thereby adjusting the axis levelness of the silicon rod to be cut. The offset limiting mechanism is adjacent to the rotation driving mechanism, and is used to limit the offset (up-and-down offset) of the silicon rod carrying device rotating around the rotation pivot structure in a horizontal direction.

In an embodiment of leveling with the leveling device of the wire cutting device of the present application, the first contact measuring instrument corresponds to the rotation pivot structure, and is used to measure first height data (either an absolute height or a height relative to the silicon rod carrying device) of a vertex of the silicon rod to be cut at the rotation pivot structure. The second contact measuring instrument corresponds to the rotation driving mechanism, and is used to measure second height data (either an absolute height or a height relative to the silicon rod carrying device) of a vertex of the silicon rod to be cut at the rotation driving mechanism. Subsequently, first height data measured by the first contact measuring instrument and second height data measured by the second contact measuring instrument can be combined to calculate an adjustment amount of the silicon rod carrying device at the rotation driving mechanism, and the rotation driving mechanism is actuated according to the adjustment amount to drive the silicon rod carrying device to rotate around the rotation pivot structure to complete the level alignment, thereby adjusting the axis of the silicon rod to be cut to a horizontal state.

Optionally, in another embodiment of the present application, the leveling device (not shown in the figure) of the wire cutting device of the present application can also be arranged as a level alignment mechanism for adjusting the levelness of the silicon rod to be cut with adjusting blocks. The leveling device is arranged on the silicon rod carrying device in the working area, and used to adjust the axis of the silicon rod to be cut to the horizontal state. The level alignment mechanism includes: two adjusting blocks, a level detection unit and a driving motor.

Two adjusting blocks are arranged respectively at head and tail ends of the silicon rod carrying device in the corresponding working area, and used to support the silicon rod to be cut.

The level detection unit is configured to detect the levelness of a silicon rod supported by two adjusting blocks and to be cut.

The driving motor is associated with at least one of two adjusting blocks, and used to control at least one adjusting block associated to move up and down, so as to ensure that the axis of the silicon rod to be cut is adjusted to the horizontal state.

In this way, the axis levelness of a workpiece carried by the silicon rod carrying device and to be cut can be adjusted to the horizontal state by means of a workpiece level alignment mechanism, and a single workpiece section that satisfies workpiece specifications can be obtained through cutting. In addition, the use of the workpiece level alignment mechanism can ensure that the axis of the workpiece to be cut is horizontal, and the cross-section of each cut workpiece section is perpendicular to the axis, which satisfies workpiece machining requirements and improves the workpiece cutting quality and conforming product ratio.

In conclusion, for the silicon rod cutting apparatus disclosed by the present application, specifically for a wire cutting device provided in the first aspect, a rotatable cutting frame is designed, by arranging both a single-wire cutting wheel and a multi-wire cutting wheel on the cutting frame, different winding systems are designed to realize switching between a single-wire saw and a multi-wire saw through the rotation, thereby realizing multi-wire saw cutting and single-wire saw cutting with the cutting frame rotating to different cutting states, and a sample can be cut off and cut out by adjusting the cutting frame when a silicon rod to be cut is cut, so as to achieve the purpose of obtaining the sample through an ascending-descending cutting operation and cutting a silicon rod during machining as needed, thereby solving problems of inefficient sample acquisition by means of repeated cutting as well as difficult control of sample thicknesses easily causing a waste of materials; furthermore, the cutting frame is arranged on a lifting mechanism on a rack, and the rack can move along the base in first dimensional direction, so that a qualified machined silicon rod section can be obtained by adjusting the position of a cutting wire saw according to machining specifications, which solves the problem of different machining dimensions required for workpieces; the wire cutting device of the present application not only improves the cutting operation efficiency of the apparatus, but also increases the qualified product ratio and utilization rate of raw materials for machining, effectively overcoming various shortcomings of the prior art, thereby having high industrial value.

Based on the aforesaid examples, the present application provides the following embodiments in the first aspect, which are represented by serial numbers in the description below, e.g., numbers 1, 2, 3, 4... can represent embodiment 1, embodiment 2, embodiment 3, embodiment 4... respectively. The present application herein provides:
1. A wire cutting device, applied to a silicon rod cutting apparatus in silicon rod cutting operations, including:
   a cutting frame, rotatably arranged on a lifting mechanism and including a rotating portion, a first cantilever extending from the rotating portion towards a first direction, a second cantilever extending from the rotating portion towards a second direction, and a third cantilever extending from the rotating portion towards a third direction;
   a first multi-wire cutting wheel, arranged at an extension end of the first cantilever, with at least two wire grooves;
   a second multi-wire cutting wheel, arranged at an extension end of the second cantilever with at least two wire grooves, wherein a multi-wire saw is formed by winding a cutting wire segment between the first multi-wire cutting wheel and the second multi-wire cutting wheel;
   a single-wire cutting wheel, arranged at an extension end of the third cantilever, wherein a single-wire saw is formed by winding a cutting wire segment between the second multi-wire cutting wheel and the single-wire cutting wheel;
   wherein, when the silicon rod is cut, the cutting frame rotates around its rotating portion to realize switching between a first cutting state for cutting by the multi-wire saw and a second cutting state for cutting by the single-wire saw.
2. The wire cutting device of embodiment 1, wherein the angle between an extension line of the multi-wire saw and an extension line of the single-wire saw is 90°; the cutting frame can rotate by ±45° or 90° on the lifting mechanism.
3. The wire cutting device of embodiment 1, wherein the angle between an extension line of the multi-wire saw and an extension line of the single-wire saw is 60°; the cutting frame can rotate by ±60° or 120° on the lifting mechanism.
4. The wire cutting device of embodiment 1, wherein the first cutting state is a wafer acquisition operation state; the second cutting state is a cutting operation state.
5. The wire cutting device of embodiment 1, wherein a cutting wire is wound among the first multi-wire cutting wheel, the second multi-wire cutting wheel and the single-wire cutting wheel by means of a head-to-tail annular winding method.
6. The wire cutting device of embodiment 5, wherein the first multi-wire cutting wheel or the second multi-wire cutting wheel is driven by a driving motor to rotate to operate the cutting wire wound among the first multi-wire cutting wheel, the second multi-wire cutting wheel and the single-wire cutting wheel.
7. The wire cutting device of embodiment 5 or 6, wherein the cutting wire is a stranded cutting wire formed by twisting at least two cutting wires.
8. The wire cutting device of embodiment 5, further including a tension detection mechanism, including a tension pulley arranged on the cutting frame, and configured to detect and adjust the tension of the cutting wire among the first multi-wire cutting wheel, the second multi-wire cutting wheel and the single-wire cutting wheel.
9. The wire cutting device of embodiment 8, further including at least one wire guide wheel, arranged on the cutting frame to change the direction of the cutting wire.
10. The wire cutting device of embodiment 9, wherein the cutting wire is guided by the wire guide wheel to be wound around the first multi-wire cutting wheel and the second multi-wire cutting wheel at least twice, and guided by the wire guide wheel to be wound around the single-wire cutting wheel once.
11. The wire cutting device of embodiment 1, wherein the cutting wire is wound around a pay-off reel at a head end and a take-up reel at a tail end, and guided by a plurality of wire guide wheels to be wound among the first multi-wire cutting wheel, the second multi-wire cutting wheel and the single-wire cutting wheel.
12. The wire cutting device of embodiment 11, wherein the cutting wire is guided by the wire guide wheel to be wound around the first multi-wire cutting wheel and the second multi-wire cutting wheel at least twice, and guided by the wire guide wheel to be wound around the single-wire cutting wheel once.
13. The wire cutting device of embodiment 11, further including at least one tension detection mechanism, including a tension pulley arranged on the cutting frame, the lifting mechanism or a rack, and configured to detect and adjust the tension of the cutting wire among the first multi-wire cutting wheel, the second multi-wire cutting wheel and the single-wire cutting wheel.
14. The wire cutting device of embodiment 11, wherein, when the wire cutting device is in the first cutting state, the single-wire cutting wheel does not contact the cutting wire; when the apparatus is switched from the first cutting state to the second cutting state, the cutting frame rotates around its rotating portion, so that the single-wire cutting wheel presses the cutting wire, and when the apparatus enters the second cutting state, the cutting wire is wound around the single-wire cutting wheel so that the cutting wire segment between the single-wire cutting wheel and the second multi-wire cutting wheel forms a single-wire saw.
15. The wire cutting device of embodiment 1, further including a locking device, including a rotation locking cylinder.
16. The wire cutting device of embodiment 1, further including a cutting frame displacement device, arranged between the lifting mechanism and a base and used for the linear displacement along an axial direction of a silicon rod to adjust a length to be cut off from the silicon rod.
17. The wire cutting device of embodiment 1, wherein a leveling and detection device is arranged on the lifting mechanism, and configured to detect the axis levelness of a silicon rod to be cut in the working area.
18. The wire cutting device of embodiment 17, further including a leveling device, arranged in the working area, and used to level the axis of the silicon rod to be cut in the working area based on the detection result of the leveling and detection device.

In the second aspect, the present application applies for a silicon rod loading device, which is configured to transfer a silicon rod to be cut in the material storage area to the cutting working area (cutting bench) of the silicon rod cutting apparatus. Using a lifting device is a common method for loading silicon rods in the prior art. When the lifting device is used to transport a silicon rod to be cut, a clamp with a non-elastic material structure is required for clamping the silicon rod. The direct contact between a clamp material and the silicon rod during clamping may cause damage to the surface of the silicon rod. A common single silicon rod has a mass of about 400 kg, and a length of about 5,000 mm (such as a specification of 5,360 mm) or about 800 mm (other different specifications may also be available). With the ascending center of gravity during lifting, the silicon rod may cause a great safety hazard once lost. In addition, the lifting device generally moves along the ascending-descending direction and the horizontal direction along a straight line, with low maneuverability. Manual conveying is another existing common method for loading silicon rods, which seriously affects production efficiencies of enterprises.

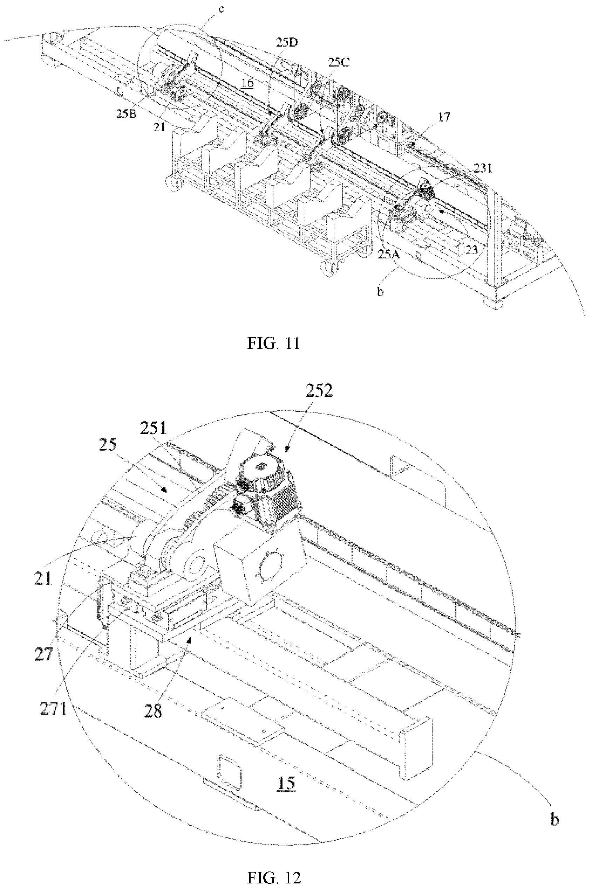

Reference is made to FIG. 11 which is a view of a silicon rod loading device applied for by the present application in the second aspect. The silicon rod loading device includes first rotating shaft 21 and at least two swing arm assemblies 25A and 25B.

The first rotating shaft 21 is driven by the first driving device 23 to rotate. The length direction of the first rotating shaft 21 is that of the silicon rod to be cut 16 in a cutting working area 17 for silicon rods. The first driving device 23 is axially connected to first rotating shaft 21 and arranged at an end of the first rotating shaft 21.

In an embodiment of the present application, the first driving device 23 includes a driving motor 231. A power output shaft of the driving motor 231 is axially connected to the first rotating shaft 21 at one end of the first rotating shaft 21.

At least two swing arm assemblies are axially connected to first rotating shaft 21 at a preset interval respectively, and at least two swing arm assemblies 25A and 25B are used to bear the silicon rod to be cut 16 and driven by the first rotating shaft 21 to transfer the silicon rod to be cut 16 to the cutting working area 17 of the cutting apparatus; each swing arm assembly 25 includes a swing arm body axially connected to the first rotating shaft 21, and a supporting mechanism arranged at the swing arm body, wherein the supporting mechanism is applied to follow the movement of a swing arm to keep its supporting portion in a state of bearing the silicon rod to be cut 16 during the transfer, and keep the relative position of the silicon rod to be cut 16 to the supporting portion unchanged during the transfer. In other words, keeping the relative position of the silicon rod to be cut 16 to the supporting portion unchanged during the transfer means that the silicon rod to be cut 16 is stationary relative to the supporting portion during the transfer.

In an exemplary embodiment, at least two swing arm assemblies 25A and 25B are axially connected to the first rotating shaft 21, for example, at a preset interval of about 800 mm (the shortest length of crystal rods generally required).

In some embodiments of the present application, the supporting mechanism includes a manipulator, arranged at the tail end of the swing arm body, following the movement of a swing arm. The swing arm body and the supporting mechanism are driven by the first driving device to rotate around the first rotating shaft. As the manipulator follows the movement of the swing arm, the supporting portion rotates relative to the swing arm body under the action of the manipulator. In other words, the rotation of the supporting portion relative to its circumcenter depends on both the rotation driven by the first driving device and the rotation relative to the swing arm body.

In an embodiment of the present application, in a process that the silicon rod loading device transports the silicon rod to be cut from the material storage area to the cutting area, the manipulator follows the movement of the swing arm, so that the angular speed of the supporting portion rotating relative to the swing arm body and the angular speed of the swing arm rotating around the first rotating shaft are equal in magnitude but opposite in direction, the angular speed of the supporting portion rotating relative to its circumcenter is kept as 0, and there is no relative movement between the supporting portion and the silicon rod to be cut thereon.

In some embodiments of the present application, at least two transfer tables in a one-to-one correspondence to swing arm assemblies are arranged on the base of the silicon rod loading device, and used to axially connect at least two swing arm assemblies to the first rotating shaft at a preset interval respectively. In an implementation mode, movable connections between transfer tables and the corresponding swing arm assemblies limit movements of the corresponding swing arm assemblies relative to transfer tables to movements in a form of rotating around the first rotating shaft, and swing arm assemblies correspondingly displace with displacements of transfer tables. The first rotating shaft runs through each swing arm assembly. As the first driving device drives the first rotating shaft to rotate, each swing arm assembly axially connected to the rotating shaft through a transfer table rotates around the first rotating shaft.

Reference is made to FIG. 12 which is an enlarged view of a silicon rod loading device of the present application in position b in FIG. 11. As shown in the figure, the swing arm body 251 is driven by the first rotating shaft 21. Driven by the power output shaft of the first rotating shaft 21, i.e., a motor shaft of the first driving device, the swing arm body 251 can rotate around the first rotating shaft 21. One end (tail end) of the swing arm body 251 away from the first rotating shaft 21 is fixed to the supporting mechanism 252. As the first rotating shaft 21 drives the swing arm body 251 to rotate on a normal plane of the axis of the first rotating shaft 21, the supporting mechanism 252 is wholly driven to change in its spatial position, so that the supporting mechanism 252 wholly moves in a swing direction between the material storage area and the cutting area.

In an embodiment of the present application, each transfer table 27 has a first movement mechanism that linearly displaces between the material storage area and the cutting working area, including horizontal guide rails 271 arranged on both sides, a front side and a rear side, of the transfer table 27. The transfer table 27 is movably connected to the bearing table 28 with a corresponding guide groove (not shown in the figure) in the second dimensional direction through the horizontal guide rail 271 in the second dimensional direction. A second movement mechanism is arranged on the bearing table 28 to realize the linear displacement of the transfer table 27 relative to the bearing table 28 in the second dimensional direction.

In some embodiments of the present application, a driving mechanism is arranged inside or outside the transfer table 27, and configured to drive the transfer table 27 to move on horizontal guide rail 271 of the base. **In** an embodiment, the driving mechanism of the transfer table 27 includes: a travel screw (not shown in the figure) arranged along the horizontal guide rail and connected to the transfer table 27, and a travel motor (not shown in the figure) connected to the travel screw. The transfer table 27 is driven by the travel motor to travel along the guide rail 271, and the travel motor on the transfer table 27 is connected to the travel screw laid on the guide rail, which realizes the displacement of the transfer table 27 on the guide rail along the second dimensional direction, i.e., a direction with the shortest distance between the material storage area and the cutting area.

In another embodiment of the present application, the first movement mechanism that linearly displaces between the material storage area and the cutting working area of the transfer table can be a combination of the travel motor and a ball screw pair. The ball screw pair includes a ball screw and a screw nut matched with the ball screw. The screw nut is connected to the transfer table. As the travel motor drives the ball screw to rotate, the screw nut drives the transfer table to linearly move along the guide groove arranged on the bearing table.

In some embodiments of the present application, a second movement mechanism is arranged in the silicon rod loading device, allowing at least one swing arm assembly 25 to linearly move on the first rotating shaft 21 (i.e., displace along the first dimensional direction). In an implementation mode of this embodiment, a guide rail assembly along the first dimensional direction is arranged at the bottom of the bearing table 28, and movably connected to the guide rail along the first dimensional direction on the base 15 through a bottom guide groove (not shown in the figure) of the bearing table 28. The second movement mechanism is the guide rail assembly of the bearing table 28, including a driving mechanism arranged inside or outside the bearing table 28 for driving the bearing table 28 to move on the guide rail along the first dimensional direction of the base. The driving mechanism of the bearing table 28 includes: a travel screw (not shown in the figure) arranged along a bottom guide rail of the bearing table 28 and connected to the bearing table 28, and a travel motor (not shown in the figure) connected to the travel screw. The bearing table 28 is driven by the travel motor to travel along the guide rail of the base, and the travel motor on the bearing table 28 is connected to the travel screw laid on the guide rail of the base, which realizes the displacement of the bearing table 28 on the guide rail of the base along the first dimensional direction, i.e., in parallel to a linear direction of the first rotating shaft 21.

In another implementation mode of the present application, the second movement mechanism that enables at least one swing arm assembly to linearly displace on the first rotating shaft can be a combination of the travel motor and a ball screw pair. The ball screw pair includes a ball screw and a screw nut matched with the ball screw. The screw nut is connected to the bearing table. As the travel motor drives the ball screw to rotate, the screw nut drives the bearing table to linearly move along the guide groove arranged on the base.

In an actual production process, a silicon rod is generally not a cylinder with an equal diameter, but is larger at one end and smaller at the other end or of other types. For different silicon rods, positions of centers of gravity in the length direction depend on specific shapes. During the transfer of a silicon rod, a mutual balance between a torque from the support of the silicon rod by different supporting mechanisms and a gravitational torque is necessary for ensuring that the silicon rod does not fall axially when transferred. In some embodiments of the present application, a bottom guide rail assembly, i.e., a second movement mechanism, is arranged for at least one of bearing tables corresponding to at least two transfer tables, and configured to drive the transfer table on the bearing table to displace in the linear direction of the first rotating shaft. The number of bearing tables moving along the linear direction of the first rotating shaft may be more than one. The bearing table with the second movement mechanism drives the corresponding transfer table and the swing arm assembly to move in the linear direction of the first rotating shaft, so as to adjust the position of the swing arm assembly on the first rotating shaft, i.e., adjust the position of the supporting mechanism relative to a silicon rod in the length direction of the silicon rod, thereby adjusting the position of the supporting mechanism relative to the position of the center of gravity of the silicon rod.

As previously mentioned, a silicon rod common in silicon rod machining has a length of about 800 mm to 5,000 mm, and a mass of about 400 kg or above. During the transfer of a silicon rod, the balance of the silicon rod is ensured by two silicon rod supporting mechanisms. In general, two supporting points or faces are located at both ends of the silicon rod under transfer. The surface of the silicon rod in contact with supporting positions at both ends is under relatively high pressure, which may damage the integrity of a silicon rod structure. Reference is made to FIG. 11 as a side view of a silicon rod loading device of the present application. In the illustrated embodiment, four swing arm assemblies are arranged at an interval, and include first swing arm assembly 25A and second swing arm assembly 25B at both ends of the first rotating shaft, as well as third swing arm assembly 25C and fourth swing arm assembly 25D axially connected between two ends of first rotating shaft 21 at a preset interval respectively. The pressure on a contact face between each supporting mechanism 252 and the silicon rod under transfer is lower than that between two supporting mechanisms 252 or clamps during the transport by means of common technologies.

In some embodiments of the present application, a second movement mechanism is arranged for the bearing table corresponding to the transfer table of third swing arm assembly 25C or fourth swing arm assembly 25D, and configured to drive the transfer table on the bearing table to displace in the linear direction of first rotating shaft 21, so as to adjust the bearing position according to the position of the center of gravity of the silicon rod to be cut. In an implementation mode of this embodiment, the second movement mechanism can be arranged as a guide rail assembly with a driving motor.

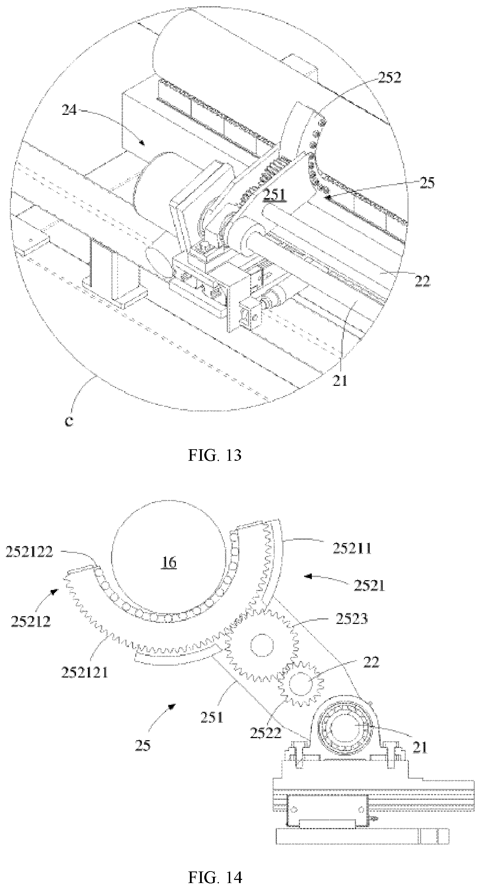

In some embodiments of the present application, as shown in FIG. 13 which is an enlarged view in position c in FIG. 11, the silicon rod loading device further includes a second rotating shaft 22. The second rotating shaft 22 is driven by the second driving device 24, arranged in parallel to the first rotating shaft 21 to run through the first, second, third and fourth swing arm assemblies, axially connected to the swing arm assembly 25, and located between the first rotating shaft 21 of the swing arm body 251 and the supporting mechanism 252. The second driving device 24 is arranged at an end of the second rotating shaft 22.

As a further improvement of the present application, the first driving device and the second driving device are respectively arranged at both ends of the first rotating shaft or the second rotating shaft in the length direction, and respectively located at ends of rotating shafts where the first rotating shaft is axially connected to the first swing arm assembly and the second rotating shaft is axially connected to the second swing arm assembly. This achieves a mass balance of the swing arm assembly in the length direction in terms of a mechanical layout, and improves the utilization rate of structural space of the swing arm assembly in terms of a spatial layout, thereby correspondingly reducing the volume of the swing arm assembly.

In some embodiments of the present application, the swing arm body includes an embedded space, i.e., the swing arm body is arranged as a structure with an accommodation space, which is used to accommodate assemblies axially connecting the first rotating shaft and the second rotating shaft to the swing arm body.

In some embodiments of the present application, the supporting mechanism of the swing arm assembly includes a driving gear, a driven gear and a manipulator assembly. The manipulator assembly includes a manipulator body and a supporting piece.

Reference is made to FIG. 14 which is a sectional view of the swing arm body 251 and the supporting mechanism 252 of the silicon rod loading device of the present application. Gears engaged with each other are arranged for the embedded space of the swing arm body 251, and include a driving gear 2522 and a driven gear 2523 in a direction from a swing arm end to a tail end. For each swing arm assembly 25, the driving gear 2522 is axially connected to the second rotating shaft 22, and driven by the second rotating shaft 22 to rotate; the driven gear 2523 is engaged with the driving gear 2522. A toothed portion 252121 of a supporting piece 25212 is engaged with the driven gear 2523.

As shown in FIG. 14, a manipulator body 25211 is fixed at the tail end of the swing arm body 251 of a swing arm structure, and is of a U-shaped, C-shaped or crescent-shaped steel structure (not shown in the figure) that is curved as an arc in the length direction. The symmetry axis in an arc length direction is coaxial with the symmetry axis of the swing arm structure.

The supporting piece 25212 is movably arranged on the manipulator body 25211 for bearing the silicon rod to be cut 16, and includes a toothed portion 252121 engaged with the driven gear 2523, and a supporting portion 252122 of which the contour can conform to and accommodate the silicon rod to be cut 16. The toothed portion 252121 is an arc-shaped toothed bar structure movably arranged on the manipulator body 25211. A toothed bar with its arc conforming to an arc of the manipulator body 25211 is inlaid inside a U-shaped, C-shaped or crescent-shaped cavity of the manipulator body 25211. The supporting portion 252122 is fixed on the toothed portion 252121, and moves following the toothed portion 252121.

In an embodiment of the present application, the U-shaped, C-shaped or crescent-shaped steel structure of the manipulator body 25211 is of a U-shaped, C-shaped or crescent-shaped structure with a notch. As shown in the figure, the notch is arranged at the symmetry axis of the circumference of the arc, so that the driven gear 2523 of the supporting mechanism 252 and the toothed portion 252121 of the supporting piece 25212 are engaged at the notch in the middle.

In an embodiment of the present application, a column of cylindrical balls are arranged in parallel on the contour of the supporting portion 252122 of the manipulator assembly 2521. Cylindrical balls are in direct contact with the surface of the silicon rod to be cut 16 during the transfer of the silicon rod. The radius of an arc formed by a common tangent of cylindrical balls is slightly larger than the upper limit of the common radius range of silicon rods to ensure when a silicon rod is borne, the supporting mechanism 252 enables the carried silicon rod to be placed in its inner circular groove, and cambered surfaces of the two are close, which limits rolling and other displacements of the carried silicon rod.

In an embodiment of the present application, the second driving device can be arranged as a driving motor. A motor shaft is axially connected to the second rotating shaft 22, and drives the second rotating shaft 22 to rotate, thereby realizing the rotation of the driving gear 2522 axially connected to the second rotating shaft 22. The driving gear 2522 in the embedded space of the swing arm body is driven by the second rotating shaft 22 to rotate at a rotational speed and in a direction of a second driving rotating shaft. The driven gear 2523 is driven by and engaged with the driving gear 2522 to rotate in a direction opposite to the rotation direction of the driving gear 2522, and an angular speed at which the driven gear 2523 rotates depends on the relation between numbers of teeth of the driving gear 2522 and the driven gear 2523 as well as the rotational speed of the driving gear 2522; further, the toothed portion 252121 engaged with the driven gear 2523 rotates in a direction opposite to the rotation direction of the driven gear 2523, and an angular speed at which the toothed portion 252121 rotates depends on the relation between a radius of an arc where the toothed portion 252121 is located and a radius of a driven wheel as well as the rotational speed of the driven wheel. In other words, a rotational angular speed of the toothed portion 252121 depends on the motor speed of the second driving device (as a variable value) as well as the relation among numbers of teeth or radii of the driving gear 2522, the driven gear 2523 and the toothed bar (as a fixed value), indicating that the supporting piece 25212 rotates relative to the manipulator body 25211 at an angular speed depending on the rotational speed output by the second driving device, in a direction the same as the rotation direction output by the second driving device.

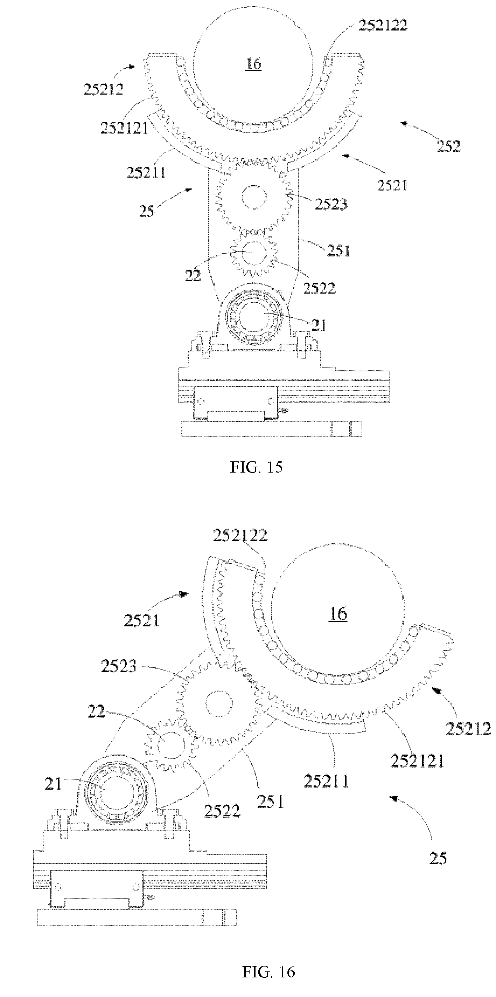

As a further improvement of the present application, there may be a synergistic relation between torques of the second driving device and the driving motor corresponding to the first driving mechanism. FIGS. 14-16 show different states of the swing arm assembly driven by the first driving device to rotate around the first rotating shaft 21 during the transfer of a silicon rod. In a process of transferring the silicon rod with the silicon rod loading device, when the supporting portion 252122 of the supporting mechanism 252 is in a supporting state, with the rotation around the first rotating shaft 21, the swing arm assembly 25 drives the swing arm body 251 to angularly displace within a normal plane of first rotating shaft 21. A rotational angular speed of the swing arm body 251 depends on the first driving device. The swing arm body 251 and the manipulator assembly 2521 at the tail end thereof following the swing arm body 251 rotate around the first rotating shaft 21 at the angular speed of the first rotating shaft 21.

In particular, the second driving device drives the second rotating shaft 22 to rotate in a direction opposite to the rotation direction of the first rotating shaft 21 in a bearing state, thereby realizing the rotation of the supporting piece 25212 around the center of an arc of the toothed bar. The supporting piece 25212 simultaneously rotates around the first rotating shaft 21, which is defined as a first rotational movement, and rotates around the center of the arc of the toothed bar, which is defined as a second rotational movement. The second rotational movement is performed by the supporting piece 25212 following the swing arm body 251, and is a combination of the first rotational movement controlled by the first rotating shaft 21 and a rotational movement controlled by the second rotating shaft 22 relative to the manipulator body 25211.

The synergistic relation between the first driving device and the second driving device is a relation between a rotational speed and a direction. The first driving device and the second driving device respectively control two rotational movements of the supporting portion 252122, so that the angular speed of a second rotation of the supporting piece 25212 is 0, the silicon rod to be cut 16 under transfer displaces between the material storage area and the cutting area with the movement of the supporting piece 25212, and the position relative to the supporting portion 252122 remains unchanged.

In another embodiment of the present application, the first driving device and the second driving device can work independently of each other, and respectively control the first rotational movement and a rotational movement of the toothed bar relative to the manipulator body, thereby jointly controlling a change in the spatial position of the supporting portion and an angle of a rotation completed through the second rotational movement. Prior to the silicon rod to be cut in the storage area is transferred, the manipulator assembly is driven by the first rotating shaft to swing until the supporting portion and the silicon rod are at the same level, and the supporting portion only performs the first rotational movement during the swing; the guide rail assembly of the transfer table drives the transfer table together with the swing arm assembly and the manipulator assembly arranged thereon to feed along the vertical direction of the silicon rod to be cut on a horizontal plane until the supporting portion is brought in contact with the silicon rod to be cut; then the supporting piece is driven by the second rotating shaft to rotate relative to the manipulator body, so that the supporting portion is located under the silicon rod to be cut, and a contact position between the supporting portion and the silicon rod to be cut is located in the symmetry axis and an adjacent area of the arc of the supporting portion, which is followed by a silicon rod transfer process performed by the first driving device and the second driving device in a synergistic relation. Further, in the silicon rod transfer process, the travel motor of the guide rail of the transfer table and the travel motor of the guide rail of the bearing table drive the swing arm assembly and the manipulator arranged thereon respectively, so as to linearly move in the second dimensional direction and the first dimensional direction. The linear movement of the bearing table along the first dimensional direction along the guide groove of the base and the linear movement of the transfer table relative to the bearing table in the second dimensional direction are independent of the rotational movement driven by the first driving device or the second driving device.

As a further improvement of the present application, the number of teeth of the toothed portion 252121 of the supporting portion 252122 is greater than that of the driven gear 2523, and the number of teeth of the driven gear 2523 is greater than that of the driving gear 2522. For the second rotational movement depending on the second driving device as well as the relation among numbers of teeth or radii of the driving gear 2522, the driven gear 2523 and the toothed portion 252121, following the basic principle of external engagement of gears, the angular speed is decreased progressively for the driving gear 2522, the driven gear 2523 and the toothed portion 252121 to achieve precise control of the supporting piece 25212 during the second rotational movement.

In an embodiment of the present application, a buffer material is arranged on a contact face between the supporting portion 252122 and a silicon rod to be cut. In some implementation modes of this embodiment, a contact face of the supporting portion 252122 in contact with the silicon rod to be cut is made of an elastic rubber material, silicone rubber or other materials with elastic deformation, damping properties or buffering properties to protect the surface of the silicon rod to be cut under contact against scratches or bumps.

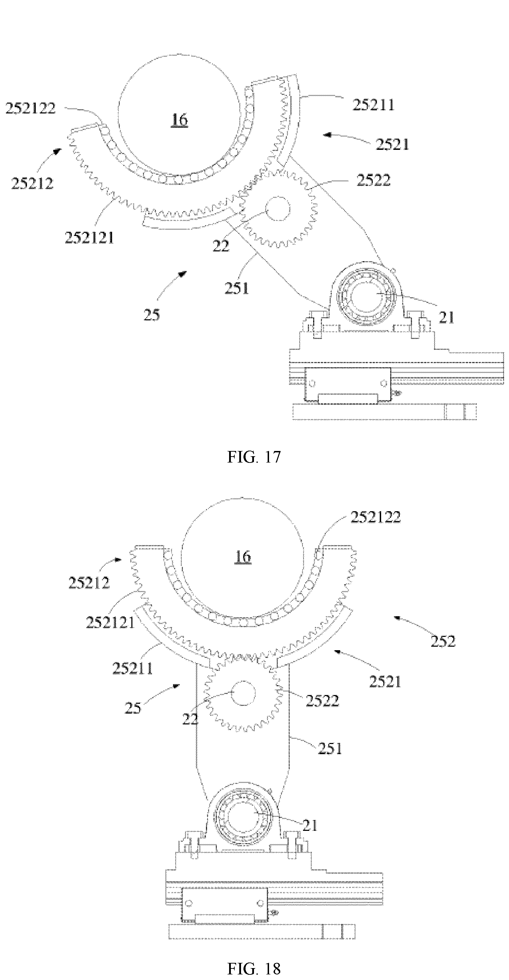

Reference is made to FIG. 17 which is a sectional view of the swing arm body 251 and the supporting mechanism 252 in another embodiment. The supporting mechanism 252 includes a driving gear 2522 arranged in the embedded space of the swing arm body 251, and a manipulator assembly 2521 arranged at the tail end of the swing arm body 251. The driving gear 2522 is axially connected to the second rotating shaft, and is driven by the second rotating shaft to rotate following the second rotating shaft. The manipulator assembly 2521 includes a manipulator body 25211 and a supporting piece 25212. The manipulator body 25211 is fixed at the tail end of the swing arm body 251, and includes a groove structure that is curved as an arc in the length direction.

The supporting piece 25212 is movably arranged on the manipulator body 25211 for bearing the silicon rod to be cut, and includes a toothed portion 252121 engaged with the driving gear 2522, and a supporting portion 252122 of which the contour can conform to and accommodate the silicon rod to be cut. The toothed portion 252121 is an arc-shaped toothed bar structure movably arranged on the manipulator body 25211. A toothed bar with its arc conforming to an arc of a structural groove of the manipulator body 25211 is inlaid on the manipulator body 25211. The toothed portion 252121 is engaged with the driving gear 2522 in the embedded space of the swing arm body 251. The supporting piece 25212 is driven by the driving gear 2522 in the embedded space to rotate relative to the manipulator body 25211 with the rotation of the second rotating shaft. The supporting portion 252122 is fixed on the toothed portion 252121, and moves following the toothed portion 252121.

The supporting piece 25212 is driven by the first driving device to rotate around the first rotating shaft following the manipulator body 25211, and driven by the second driving device to rotate relative to the manipulator body 25211. In an implementation mode of this embodiment, the second driving device includes a driving motor axially connected to the second rotating shaft at an end of the second rotating shaft. The second driving device drives the second rotating shaft to rotate, so that the driving gear 2522 in the embedded space of the swing arm structure is driven to rotate at the same angular speed as the second rotating shaft. The toothed portion 252121 is driven by the driving gear 2522 engaged therewith to rotate relative to the manipulator body 25211 at a certain angular speed. The rotational speed of the supporting piece 25212 around the first rotating shaft 21 depends on the first driving device. The rotation of the supporting piece 25212 relative to the manipulator body 25211 depends on the second driving device as well as a radius ratio of the toothed portion 252121 to the driving gear 2522 in the embedded space. The first driving device and the second driving device independently control two rotational movements of the supporting piece 25212.

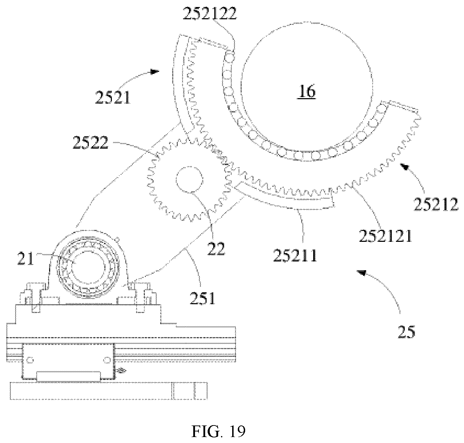

In an embodiment of the present application, the first driving device and the second driving device drive the first rotating shaft and the second rotating shaft to rotate in a certain synergistic relation. The rotational speed of the supporting portion 252122 relative to its circumcenter depends on a vector sum of the rotation of the supporting portion 252122 around the first rotating shaft and its rotation relative to the manipulator body 25211. FIGS. 17-19 are views of the swing arm assembly rotating around the first rotating shaft to different angles in the bearing state. The first driving device 23 and the second driving device 24 working in the synergistic relation compensate each other for a change in an angle of the supporting piece 25212 relative to its circumcenter, so that the angular speed of the supporting portion 252122 relative to the rotational movement around the circumcenter of the supporting portion 252122 is always 0. The first driving device and the second driving device work in the synergistic relation during the transfer to realize that the supporting piece 25212 in the bearing state does not rotate relative to the carried silicon rod to be cut in the transfer process.

In another embodiment of the present application, the number of teeth of the toothed portion 252121 is greater than that of the driving gear 2522 in the embedded space of the swing arm body 251, and the angular speed controlled by the second driving device decreases during the transmission from the second rotating shaft to the toothed portion 252121, which achieves precise control of the supporting piece 25212 with the rotation of the supporting piece 25212 relative to the manipulator body 25211.

In another embodiment of the present application, the supporting mechanism of the swing arm assembly includes a manipulator assembly. The manipulator assembly is arranged at the tail end of the swing arm body. The manipulator assembly includes a manipulator body and a supporting piece, wherein the manipulator body is fixed on the swing arm body and follows the movement of the swing arm body; the supporting piece is movably arranged on the manipulator body, and used to bear the silicon rod to be cut. The supporting piece is in power connection to the second rotating shaft. As the second rotating shaft rotates, the supporting piece is driven to rotate on the manipulator body.

In an implementation mode of this embodiment, for the rotation of the supporting piece relative to the manipulator, the second driving device controls the rotational speed of the second rotating shaft, and the second rotating shaft drives the supporting piece to rotate at a certain rotational speed; the manipulator body is driven by the first driving device to rotate around the first rotating shaft following the swing arm body. The first driving device and the second driving device can respectively drive the rotation of the swing arm body around the first rotating shaft and the rotation of the supporting piece relative to the manipulator body in a relatively independent manner.

In another embodiment of the present application, the first driving device and the second driving device drive the first rotating shaft and the second rotating shaft to rotate in a certain synergistic relation. The supporting piece is driven by the first driving device to rotate around the first rotating shaft following the manipulator body, and simultaneously, driven by the second driving device to rotate relative to the manipulator body. The first driving device and the second driving device output a rotational speed in a synergistic relation, enabling the first driving device and the second driving device in service to compensate each other for a change in an angle of the supporting piece relative to its circumcenter, so that the angular speed of the supporting portion relative to the rotational movement around the circumcenter of the supporting portion is always 0. The first driving device and the second driving device work in the synergistic relation during the transfer to realize that the supporting piece in the bearing state does not rotate relative to the carried silicon rod to be cut in the transfer process.

In a process of transferring a silicon rod with the silicon rod loading device of the present application, before the silicon rod to be cut in the storage area is transferred, the manipulator assembly is driven by the first rotating shaft to swing following the swing arm body until the supporting portion and the silicon rod are at the same level, and the rotational movement of the swing arm assembly is independently driven by the first driving device during the swing; the guide rail assembly of the transfer table drives the transfer table together with the swing arm assembly and the manipulator assembly arranged thereon to feed along the vertical direction of the silicon rod to be cut on a horizontal plane until the supporting portion is brought in contact with the silicon rod to be cut; then the supporting piece is driven by the second rotating shaft to rotate relative to the manipulator body, so that the supporting portion is located under the silicon rod to be cut, and a contact position between the supporting portion and the silicon rod to be cut is located in the symmetry axis and an adjacent area of the arc of the supporting portion, which is followed by a silicon rod transfer process performed by the first driving device and the second driving device in a synergistic relation.

Further, in the silicon rod transfer process, the travel motor of the guide rail of the transfer table and the travel motor of the guide rail of the bearing table respectively drive the swing arm assembly and the manipulator arranged thereon to linearly move in the second dimensional direction and the first dimensional direction. The linear movement of the bearing table along the first dimensional direction along the guide groove of the base and the linear movement of the transfer table relative to the bearing table in the second dimensional direction are independent of the rotational movement driven by the first driving device or the second driving device.

As a further improvement of the silicon rod loading device of the present application, a detection device is arranged for the swing arm assembly, and configured to detect contact between the supporting portion and the silicon rod to be cut. During loading, if contact between the supporting portion and the silicon rod to be cut is detected, after the manipulator supports the silicon rod to be cut, driving motors of the first rotating shaft and the second rotating shaft will be started to work, i.e., to lift the swing arm for delivery.

In some embodiments of the present application, the detection device includes a pressure sensor arranged on the supporting portion. The pressure sensor includes a pressure-sensitive element and a signal machining unit. Prior to the silicon rod to be cut in the storage area is transferred, the manipulator assembly is driven by the first rotating shaft to swing following the swing arm body until the supporting portion and the silicon rod are at the same level, and the rotational movement of the swing arm assembly is independently driven by the first driving device during the swing; the guide rail assembly of the transfer table drives the transfer table together with the swing arm assembly and the manipulator assembly arranged thereon to feed along the vertical direction of the silicon rod to be cut on a horizontal plane until the supporting portion is brought in contact with the silicon rod to be cut; the pressure-sensitive element of the pressure sensor outputs a contact signal when brought in contact with the silicon rod, and the transfer table moves backwards in a short distance in the second dimensional direction relative to the silicon rod to be cut; when the supporting portion and the silicon rod to be cut are separated, the supporting piece is driven by the second rotating shaft to rotate relative to the manipulator body, so that the supporting portion is located under the silicon rod to be cut, then the swing arm assembly rotates to lift the silicon rod, and the supporting portion is jointly driven by the first driving device, the second driving device, the guide rail assembly of the transfer table, and the guide rail assembly of the bearing table to transfer the silicon rod to be cut from the material storage area to the cutting area. The silicon rod loading device transports the silicon rod to be cut to the cutting area. The swing arm body rotates to place the silicon rod to be cut on the bearing table of the cutting working area. The driving motor of the second rotating shaft drives the second rotating shaft to rotate reversely, and drives the supporting portion to rotate to release the bottom of the silicon rod to be cut. The transfer table moves away from the silicon rod to be cut in the second dimensional direction.

In a process that the supporting portion moves towards the silicon rod to be cut before the transfer of the silicon rod to be cut until they are brought into contact, and then rotates to a position below the silicon rod to be cut for supporting, the use of the detection device through the pressure-sensitive element or a contact sensor that is highly sensitive to pressure can prevent damage to the stability or surface structure of the supported silicon rod to be cut, and ensure the safe transport in the whole silicon rod transfer process.

In conclusion, for the silicon rod cutting apparatus disclosed by the present application, specifically for a silicon rod loading device provided in the second aspect, a swing arm assembly structure driven by a first driving device is arranged to bear and transfer a silicon rod to be cut, and a movement following device or a manipulator assembly driven by a second driving device is correspondingly arranged for a bearing mechanism of a swing arm assembly, so that when a supporting portion of the silicon rod loading device is in a bearing state, the first driving device and the second driving device are simultaneously driven in a preset relation between driving devices according to a mechanical structure to achieve a smooth transport effect that the silicon rod to be cut and the supporting portion do not move relative to each other during the transport; furthermore, the swing arm assembly in the present application can be arranged on a transfer table movable along the second dimensional direction, the transfer table can be movably arranged on a bearing table movable along the first dimensional direction, and movements are relatively independent, which realizes a wide transport range and high flexibility of the silicon rod loading device with respect to transport overshoot; the silicon rod loading device of the present application not only achieves automatic loading and increases the efficiency of transporting silicon rods, but also ensures the safe transport and improves maneuverability of a transport process, effectively overcoming various shortcomings of the prior art, thereby having high industrial value.

Based on the aforesaid examples, the present application provides the following embodiments in the second aspect. In particular, in embodiments provided by this application, number groups used in embodiments provided in different aspects are independent, e.g., embodiment 1 provided in the first aspect is not the same as embodiment 1 provided in the second aspect by the present application. The present application herein provides the following embodiments in the second aspect, which are represented by serial numbers in the description below, e.g., numbers 1, 2, 3, 4... can represent embodiment 1, embodiment 2, embodiment 3, embodiment 4... respectively.
1. A silicon rod loading device, configured to transfer a silicon rod to be cut in a material storage area to a cutting working area of a cutting apparatus, including:
   a first rotating shaft, driven by a first driving device to rotate; and
   at least two swing arm assemblies, axially connected to the first rotating shaft at a preset interval respectively, wherein at least two swing arm assemblies are used to carry a silicon rod to be cut, and driven by the first rotating shaft to transfer the silicon rod to be cut to the cutting working area of the cutting apparatus; each swing arm assembly includes a swing arm body axially connected to the first rotating shaft, and a supporting mechanism arranged at the swing arm body, wherein the supporting mechanism is applied to follow the movement of a swing arm to keep its supporting portion in a state of bearing the silicon rod to be cut during the transfer.
2. The silicon rod loading device of embodiment 1, wherein the supporting mechanism includes a manipulator, arranged at the tail end of the swing arm body, and used to follow the movement of a swing arm to keep its supporting portion in a state of bearing the silicon rod to be cut during the transfer.
3. The silicon rod loading device of embodiment 1, further including at least two transfer tables in a one-to-one correspondence to swing arm assemblies, arranged on the base of the cutting apparatus, and used to axially connect at least two swing arm assemblies to the first rotating shaft at a preset interval respectively.
4. The silicon rod loading device of embodiment 3, wherein at least two transfer tables include a first movement mechanism that linearly displaces between the material storage area and the cutting working area.
5. The silicon rod loading device of embodiment 3, wherein at least two transfer tables include a second movement mechanism that enables at least one swing arm assembly to linearly displace on the first rotating shaft, so as to adjust a distance between at least two swing arm assemblies.
6. The silicon rod loading device of embodiment 5, wherein four swing arm assemblies are provided, including a first swing arm assembly and a second swing arm assembly arranged at both ends of the first rotating shaft respectively, as well as a third swing arm assembly and a fourth swing arm assembly axially connected between two ends of the first rotating shaft at a preset interval respectively.
7. The silicon rod loading device of embodiment 6, wherein the transfer table of the third swing arm assembly or the fourth swing arm assembly includes a second movement mechanism that linearly displaces on the first rotating shaft.
8. The silicon rod loading device of embodiment 3, further including a second rotating shaft driven by a second driving device, wherein the second rotating shaft is parallel to the first rotating shaft, and the second driving device outputs a rotational speed and/or a rotational angle to the second rotating shaft correspondingly following the working state of the first driving device.
9. The silicon rod loading device of embodiment 8, wherein the first driving device and the second driving device are respectively arranged at opposite ends of the first rotating shaft or the second rotating shaft.
10. The silicon rod loading device of embodiment 8, wherein the second rotating shaft is axially connected to swing arm assemblies, and located between the first rotating shaft and the supporting mechanism on the swing arm body.
11. The silicon rod loading device of embodiment 10, wherein the supporting mechanism includes: a manipulator assembly, arranged at the tail end of the swing arm body and including: a manipulator body, as well as a supporting piece movably arranged on the manipulator body for bearing the silicon rod to be cut, wherein the supporting piece is in power connection to the second rotating shaft, and as the second rotating shaft rotates, the supporting piece is driven to rotate at the manipulator body, so that the supporting piece is maintained in a state of carrying the silicon rod to be cut during the transfer.
12. The silicon rod loading device of embodiment 10, wherein the swing arm body has an embedded space.
13. The silicon rod loading device of embodiment 12, wherein the supporting mechanism includes:
   a driving gear, arranged in the embedded space of the swing arm body, axially connected to the second rotating shaft, and driven by the second rotating shaft to rotate;
   a driven gear, axially connected to the embedded space of the swing arm body, and engaged with the driving gear;
   a manipulator assembly, arranged at the tail end of the swing arm body and including a manipulator body, as well as a supporting piece movably arranged on the manipulator body for bearing the silicon rod to be cut, wherein the supporting piece includes a toothed portion engaged with the driven gear, and a supporting portion for conforming to the outer contour of the silicon rod to be cut.
14. The silicon rod loading device of embodiment 13, wherein the number of teeth of the toothed portion of the supporting portion is greater than that of the driven gear, and the number of teeth of the driven gear is greater than that of the driving gear.
15. The silicon rod loading device of embodiment 13, wherein a buffer material is arranged on a contact face between the supporting portion and the silicon rod to be cut.
16. The silicon rod loading device of embodiment 1, wherein a detection device is arranged for swing arm assemblies, and configured to detect the contact between the supporting portion and the silicon rod to be cut.

The present application applies for a silicon rod unloading device of a silicon rod cutting apparatus in the second aspect. The silicon rod unloading device is arranged at a discharge end of the cutting working area, and configured to clamp and transport a resulting single silicon rod section that satisfies workpiece specifications for unloading. In the prior art, a silicon rod section machined by a silicon rod cutting apparatus is generally handled manually or with a push-pull cutting table, which affects production efficiencies of enterprises; a common silicon rod to be cut has a mass of about 400 kg and above, requiring a lot of manpower when handled by manual and push-pull methods with low safety and economy.

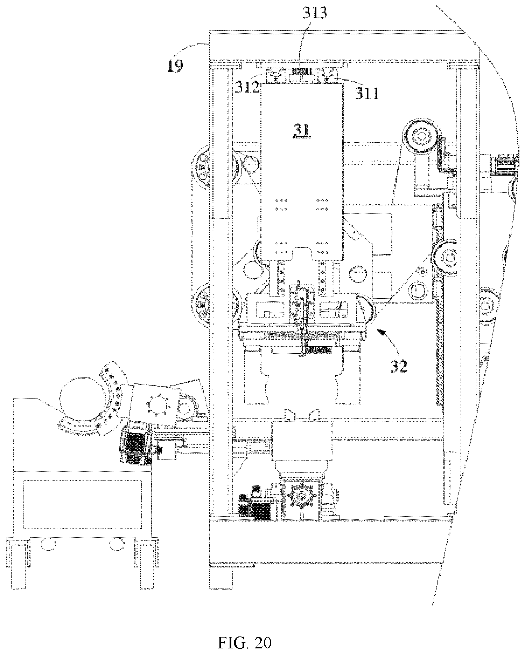

As shown in FIG. 20 which is a structural view of a silicon rod unloading device of a silicon rod cutting apparatus in an embodiment of the present application, the silicon rod unloading device includes a reclaiming arm 31 and a clamping piece 32.

The reclaiming arm 31 is movably arranged on the top frame 19 of the silicon rod cutting apparatus in a suspended state, and can translate along the top frame 19. The reclaiming arm 31 includes an extension and retraction mechanism; an axis of a translational movement of the reclaiming arm 31 is arranged over an axis of the silicon rod to be cut in the cutting area.

The clamping piece 32 is arranged at the bottom of reclaiming arm 31, and used to clamp a single silicon rod section that satisfies workpiece specifications after being cut in the cutting area. The reclaiming arm 31 and the clamping piece 32 have a left-right symmetrical or mirror-symmetrical structure as a whole.

In an implementation mode of this embodiment, the reclaiming arm 31 is movably connected to the top frame 19 through a guide rail assembly. The guide rail assembly includes: a guide groove 312 arranged on the top frame 19, a guide rail 311 fixed in an upper part of the reclaiming arm 31, and a reclaiming arm driving mechanism 313 arranged in the upper part of the reclaiming arm 31. The guide rail 311 and the guide groove 312 matched therewith are arranged along the first dimensional direction, allowing the reclaiming arm 31 to displace relative to an axial direction of a silicon rod along the guide groove 312. In practice, the position of the reclaiming arm 31 is adjusted according to the position of a machined silicon rod section to subsequently clamp the silicon rod section.

In an embodiment of the present application, the reclaiming arm driving mechanism 311 includes: a travel screw (not shown in the figure) arranged along the guide rail 311 on the upper part of the reclaiming arm 31 and connected to the reclaiming arm 31, and a travel motor 313 connected to the travel screw. The reclaiming arm 31 is driven by the travel motor 313 to travel along the guide rail 311, and the travel motor 313 on the reclaiming arm 31 is connected to the travel screw laid on the guide rail 311, which realizes the movement of the reclaiming arm 31 on the guide rail 311 along the first dimensional direction, i.e., along an axial direction of a silicon rod or a silicon rod section in the cutting area.

In another embodiment of the present application, the reclaiming arm driving mechanism can be a combination of the travel motor and a ball screw pair. The ball screw pair includes a ball screw and a screw nut matched with the ball screw. The screw nut is connected to the reclaiming arm. As the travel motor drives the ball screw to rotate, the screw nut drives the reclaiming arm to linearly move along the guide groove arranged on the top frame.

In another embodiment of the present application, the guide rail assembly further includes a limiting block (not shown in the figure) for limiting excessive displacements of the reclaiming arm on the top frame. In an implementation mode of this embodiment, the limiting block can be arranged as a stroke-controlled, fixed or adjustable type according to movement needs of the reclaiming arm.

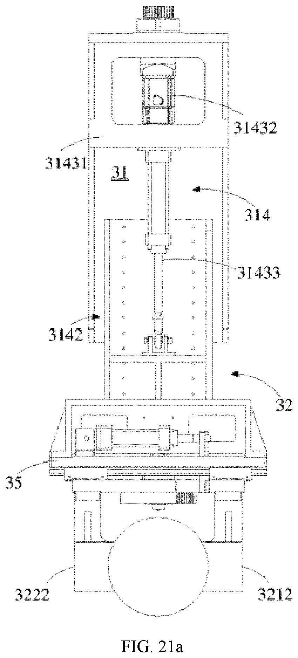

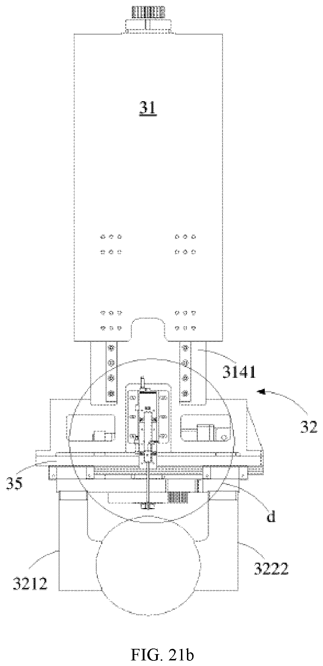

Reference is made to FIG. 21 which is a view of a silicon rod unloading device in an embodiment of the present application, wherein FIG. 21a is a front view of the silicon rod unloading device, and FIG. 21b is a rear view of the silicon rod unloading device. In an embodiment of the present application, the extension and retraction mechanism 314 can be arranged as a lifting guide rail assembly, which includes: a lifting guide rail 3141, a guide groove 3142 matched with the lifting guide rail 3141, and a lifting guide rail driving mechanism 3143, wherein: the lifting guide rail 3141 is fixed on an upper part of the clamping piece 32 along the ascending-descending direction; the guide groove 3142 matched with the lifting guide rail 3141 is structurally arranged on the reclaiming arm 31 along the ascending-descending direction along the symmetry axis of the reclaiming arm 31; the driving mechanism for the lifting guide rail 3141 can be arranged as a cylinder extension and retraction assembly, which is arranged between the reclaiming arm 31 and the clamping piece 32, and respectively connected to the reclaiming arm 31 and the clamping piece 32 at both ends, and with the extension and retraction of the lifting shaft 31433 of the cylinder extension and retraction assembly, the clamping piece 32 is driven to move along the ascending-descending direction.

In an embodiment of the present application, the cylinder extension and retraction assembly includes: a cylinder supporting seat 31431, a cylinder 31432, and a lifting shaft 31433 connected to the cylinder 31432, wherein: the cylinder supporting seat 31431 is arranged on the reclaiming arm 31 and fixed to the reclaiming arm 31, and is quadrilateral; the cylinder 31432 is arranged on the cylinder supporting seat 31431, and the cylinder supporting seat 31431 serves as a lower bottom plate for fixing the cylinder 31432; the cylinder 31432 includes a tapered cylinder rod (not shown in the figure), which runs through the cylinder supporting seat 31431 and extends into an extension and retraction space below the cylinder supporting seat 31431; the lifting shaft 31433 is arranged at a lower end of the tapered cylinder rod, and includes a rod-like combination valve for two-way extension and retraction control; in an implementation mode of this embodiment, the lower end of the tapered cylinder rod is connected to the lifting shaft 31433 through a coupling; a lower end, i.e., a free end, of the lifting shaft 31433 is fixed to the lifting guide rail 3141 of the clamping piece 32, and in the embodiment shown in the figure, a T-shaped frame is fixed at a tail end of the lifting guide rail 3141 of the clamping piece 32, and a tail end of the lifting shaft 31433 is fixed to the T-shaped frame.

In an embodiment of the present application, the tapered cylinder rod is driven by the cylinder 31432 to drive the extension and retraction movement of the lifting shaft 31433, and lifting guide rail 3141 of the clamping piece 32 is pushed and pulled by the lifting shaft 31433 for the up-and-down transport along the lifting guide groove 3142 of the reclaiming arm 31, which realizes the overall displacement of the clamping piece 32 along the ascending-descending direction.

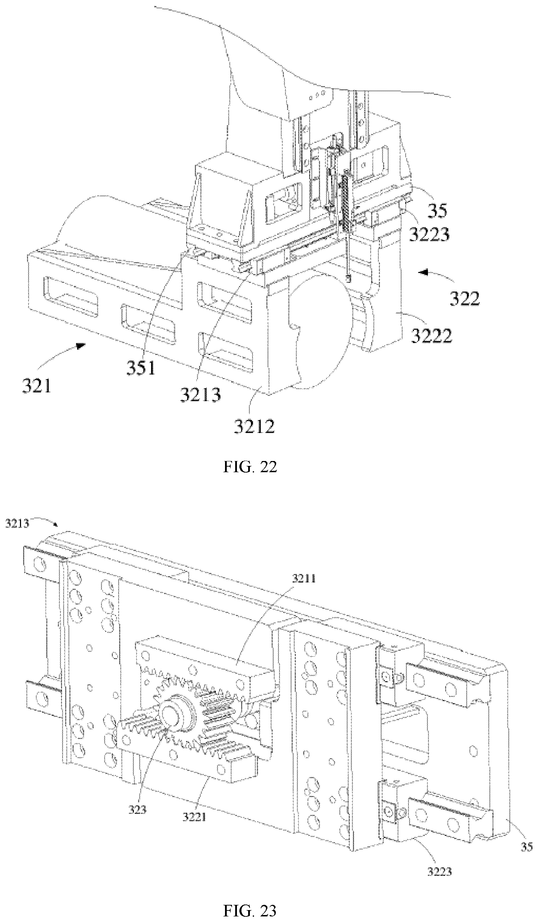

Reference is made to FIG. 22 which is a structural view of a clamping piece of a silicon rod unloading device in an embodiment of the present application. The clamping piece includes a first clamping block 321, a second clamping block 322 and a driving gear, wherein: the first clamping block 321 includes a first toothed bar and a first clamping portion 3212 linked with the first toothed bar; the second clamping block 322 is mirrored to the first clamping block 321, and includes a second toothed bar and a second clamping portion 3222 linked with the second toothed bar; an end of the first toothed bar is fixed on the first clamping portion 3212, and an end of the second toothed bar is fixed on the second clamping portion 3222; the driving gear is arranged on a horizontally built plate 35 in the middle of the clamping piece, connected to a power output shaft of a motor, and engaged with both the first toothed bar and the second toothed bar, and the driving gear drives the first clamping portion 3212 and the second clamping portion 3222 to move towards each other when driven by the motor to rotate in a forward direction, thereby decreasing the distance between the first clamping portion 3212 and the second clamping portion 3222 so that a clamping action can be performed; the driving gear drives the first clamping portion 3212 and the second clamping portion 3222 to move away from each other when driven by the motor to rotate in a reverse direction, thereby increasing the distance between the first clamping portion 3212 and the second clamping portion 3222 so that a release action can be performed.

In an embodiment of the present application, clamping faces at bottoms of the first clamping portion 3212 and the second clamping portion 3222 in contact with a silicon rod section are designed to be arc-shaped with radii of arcs equal to an outer diameter of a common silicon rod, and used to tightly press against a cambered surface of the silicon rod section; the length of the clamping portion is designed as a length of a common silicon rod section cut according to machining specifications.

Two parallel guide rails 351 are arranged along the second dimensional direction on a lower surface of the horizontally built plate 35. The first clamping portion 3212 and the second clamping portion 3222 are movably arranged on the horizontally built plate 35 through the guide rails 351 on the lower surface of the horizontally built plate 35. A first horizontal sliding block assemblies 3213 and a second horizontal sliding block assemblies 3223 are respectively fixed on tops of the first clamping portion 3212 and the second clamping portion 3222. The first horizontal sliding block assemblies 3213 and the second horizontal sliding block assemblies 3223 are movably arranged on guide rails of the horizontally built plate 35, and can slide along the guide rails 351 of the horizontally built plate. The first horizontal sliding block assemblies 3213 and the second horizontal sliding block assemblies 3223 are driven by the first toothed bar and the second toothed bar to move along guide rails of the horizontally built plate respectively. The first horizontal sliding block assemblies 3213 are two sliding blocks fixed above the first clamping portion 3212 at bottoms, with a line connecting their fixation positions on the first clamping portion 3212 along the first dimensional direction; the second horizontal sliding block assemblies 3223 are two sliding blocks fixed above the second clamping portion 3222 at bottoms, with a line connecting their fixation positions on the second clamping portion 3222 along the first dimensional direction.

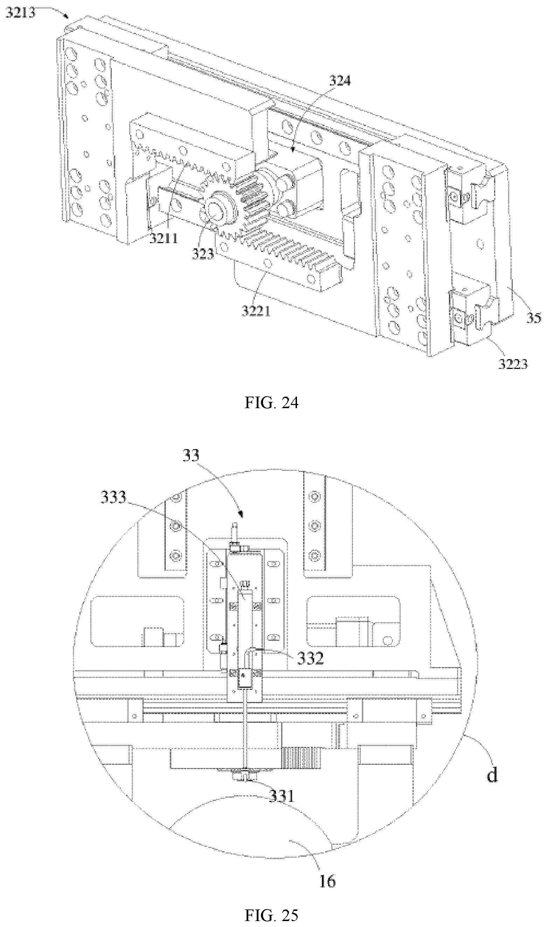

Reference is made to FIGS. 23-24, which are structural views of a clamping piece driving device in different states, projected from the bottom to the top of an observed structure of a clamping piece. The driving gear 323 is arranged on the horizontally built plate 35 of the clamping piece, and axially connected to a power output shaft of a driving motor. The driving motor 324 is fixed on the lower surface of the horizontally built plate 35. The first toothed bar 3211 and the second toothed bar 3221 are respectively engaged with a front side and a rear side of the driving gear 323. As shown in the illustrated embodiment, the first toothed bar 3211 and the second toothed bar 3221 are respectively engaged with an upper side and a lower side of the driving gear 323. The first toothed bar 3211 and the second toothed bar 3221 are driven by the driving gear 323 to move accordingly and respectively, and based on the basic law of external engagement between gears or between gears and toothed bars, as the driving gear 323 rotates, the first toothed bar 3211 moves along an opposite direction of a linear speed of an upper toothed portion of the driving gear 323; as the driving gear 323 rotates, the second toothed bar 3221 moves along an opposite direction of a linear speed of a lower toothed portion of the driving gear 323. As the driving gear 323 rotates, teeth symmetrical about a gear center (such as upper and lower toothed portions in the illustrated embodiment) must be in a relation of linear speeds in opposite directions. Namely, the first toothed bar 3211 and the second toothed bar 3221 respectively engaged with both sides of the driving gear 323 always move in opposite directions, i.e., move towards or away from each other. In the embodiment shown in FIG. 23, the driving gear 323 is in a forward rotation state, and the first toothed bar 3211 and the second toothed bar 3221 move towards each other; in the embodiment shown in FIG. 24, the driving gear 323 is in a reverse rotation state, and the first toothed bar 3211 and the second toothed bar 3221 move away from each other.

As the driving gear 323 rotates forward or reversely, the first toothed bar 3211 and the second toothed bar 3221 move towards or away from each other accordingly, and movements of the first toothed bar 3211 and the second toothed bar 3221 respectively drive the first horizontal sliding block assemblies 3213 and the second horizontal sliding block assemblies 3223 of the first clamping portion and the second clamping portion to slide towards or away from each other along parallel guide rails arranged on a bottom surface of the horizontally built plate 35, i.e., the first clamping portion and the second clamping portion move towards or away from each other.

In an embodiment of the present application, a process of clamping a machined silicon rod section with the silicon rod unloading device is as follows:
The reclaiming arm of the silicon rod unloading device is driven by the travel motor of the guide rail at an upper end of the reclaiming arm to move along the guide groove on the top frame along the first dimensional direction towards the silicon rod section. The clamping portion of the silicon rod unloading device is driven by the reclaiming arm to move along the first dimensional direction. When the first clamping portion moves to a position over the silicon rod section to be clamped, the reclaiming arm stops moving along the guide groove of the top frame.

After positions of the reclaiming arm and the clamping portion are fixed in the horizontal direction, the driving gear of the clamping portion is driven by the motor to rotate reversely, and the first clamping portion and the second clamping portion are separated by a distance larger than the diameter of the silicon rod section to prevent clamping portions from touching the silicon rod section during a descending movement. The extension and retraction mechanism, such as the cylinder extension and retraction assembly, drives the lifting shaft to move along the ascending-descending direction, so that first and second clamping portions move downwards to approach the silicon rod section to be clamped until they are located on the same horizontal plane as the silicon rod section, and at this moment the extension and retraction movement is stopped. The reverse rotation movement of the driving motor is relatively independent of the movement of the extension and retraction mechanism, which can be implemented by ensuring that first and second clamping portions move to the horizontal plane, on which the silicon rod section (i.e., they are located on left and right sides of the silicon rod section respectively), and that the clamping piece and the silicon rod section do not collide during the movement.

The driving gear rotates forward to control the first clamping portion and the second clamping portion to move towards each other, i.e., approaching the silicon rod section, and stopping moving when they are brought into contact with and clamp the silicon rod section.

The clamping piece remains in a clamping state after clamping the silicon rod section. According to a preset placement position of the silicon rod section, the extension and retraction mechanism drives the clamping piece to move up and down. The guide rail assembly between the top frame and the reclaiming arm drives the reclaiming arm and the clamping piece to move along the first dimensional direction as a whole. After the silicon rod section is placed in the preset position, the first clamping portion and the second clamping portion are separated to release and, together with the reclaiming arm and the clamping portion, move away from the placed silicon rod section.

As a further improvement of the present application, buffer materials are arranged on clamping faces for clamping the single silicon rod section of the first clamping portion and the second clamping portion of the silicon rod unloading device. An elastic rubber material, expanded polyethylene foam, silicone rubber or other materials with elastic deformation, damping properties or buffering properties can be used on clamping faces to protect the surface of the silicon rod section under contact against scratches or bumps.

As a further improvement of the present application, sensing device 33 is arranged for the silicon rod unloading device, and configured to detect a position of an end (i.e., head or tail) of the silicon rod to be cut.

Reference is made to FIG. 25, which is an enlarged view in position d in FIG. 21b. The sensing device 33 is fixed on a mirror symmetry line of a supporting seat between the horizontally built plate of the clamping piece 32 and the lifting guide rail. In an embodiment of this embodiment, the sensing device 33 is a contact sensor, including a ring-shaped measuring head 331, a signal wire 332, and an extension and retraction rod 333.

The measuring head 331 is movably arranged on a free end of the extension and retraction rod 333, and can rotate around a center of a ring of the measuring head 331. A fixed end of the extension and retraction rod 333 is arranged on the mirror symmetry line of the supporting seat.

During detection, the surface of the ring of the ring-shaped measuring head 331 is a contact surface for measuring height data (either an absolute height or a height relative to the silicon rod carrying device) of a contact between the measuring head 331 and the silicon rod to be cut 16. In particular, as the ring-shaped measuring head 331 rotates along the center of the ring, a direction of a linear speed at the lowest point of the measuring head 331 is the first dimensional direction, i.e., an axial direction of the silicon rod to be cut 16, so as to avoid damage to the surface of the ring-shaped measuring head 331 or the silicon rod to be cut 16 when the measuring head 331 moves along the surface of the silicon rod to be cut 16 for detecting a position of an end of the silicon rod.

In a detection process, the extension and retraction rod 333 controls the measuring head 331 to descend to be just in contact with the surface of the silicon rod to be cut 16, and the contact sensor moves relative to the silicon rod to be cut 16 along the first dimensional direction following the reclaiming arm 31, which enables the measuring head 331 to move along the surface of the silicon rod to be cut 16 for detecting a boundary line between the end (i.e., head or tail) to be cut off and a machinable middle section of the silicon rod by acquiring height data of different positions in real time according to changes in the diameter of an end of the silicon rod to be cut 16.

A position of an end of the silicon rod to be cut is detected by the sensing device 33 to avoid inaccurate human judgments, which may cause waste due to excessive cutting, or cause that machined silicon rod sections at head and tail ends do not satisfy workpiece specifications due to insufficient cutting, so as to effectively increase the qualified workpiece ratio of silicon rod sections adjacent to head and tail ends of silicon rods, and improve the utilization rate of materials.

The silicon rod cutting apparatus of the present application is further improved by including an end reclaiming device. The end reclaiming device is arranged at at least one end of the cutting working area, and used to collect tailings cut off from ends of the silicon rod to be cut. When a silicon rod is cut, it is necessary to obtain a silicon wafer sample from the silicon rod to be cut. In general, if the thickness of the sample is 2~20 mm, the silicon rod unloading device will be not available for the transport.

The end reclaiming device includes a rotating arm and an arc-shaped accommodation groove; the rotating arm is arranged on the cutting frame adjacent to the discharge end of the silicon rod cutting apparatus, and movably arranged at the bottom of the cutting frame adjacent to the discharge end through a rotating shaft with its axis along the ascending-descending direction. The arc-shaped accommodation groove is fixed at a free end of the rotating arm, and is a semi-open structure allowing a silicon wafer sample to enter from a side of the arc-shaped accommodation groove.

In an embodiment of the present application, the end reclaiming device further includes a driving device. The driving device has a power output shaft, such as a motor, which is axially connected to the rotating shaft of the rotating arm, and configured to drive the rotating arm to rotate around the rotating shaft at the bottom of the cutting frame. Further, the end reclaiming device further includes a rotating arm locking device, which is used to lock the rotating arm when the rotating arm rotates to a position below a silicon wafer sample to be cut.

In a process of obtaining a silicon wafer sample, the rotating arm is driven by the driving device of the end reclaiming device to rotate, stops rotating when the arc-shaped accommodation groove is located below the silicon wafer sample to be cut, and is locked by the rotating arm locking device. The cutting frame adjacent to the discharge end is driven by the driving motor of the cutting frame to rotate to the first cutting state of double-wire cutting, and the cutting wire saw is driven by the lifting mechanism to feed for cutting. Upon the completion of cutting, the silicon wafer sample in the arc-shaped accommodation groove is taken, and the rotating arm is driven by the power output shaft to rotate away from the cutting frame. In this way, the silicon wafer sample is collected and obtained.

In conclusion, for a silicon rod unloading device of the silicon rod cutting apparatus provided by the present application in the second aspect, a reclaiming arm and a clamping piece are arranged on a rack, the reclaiming arm and the clamping piece are movably connected via a cylinder extension and retraction assembly, and two clamping portions of the clamping piece are driven by a driving device to move towards or away from each other in the second dimensional direction to clamp and release a resulting silicon rod section; furthermore, the reclaiming arm of the silicon rod unloading device of the present application is slidably arranged on the rack through the driving device, and in combination with the up-and-down movement of the clamping piece and the clamping or release action of clamping portions, can transport the silicon rod section between preset positions, effectively achieve the automation of a silicon rod unloading process and the linkage among different procedures, and effectively improve production efficiencies of enterprises, thereby having high industrial value.

## Claims

1. A silicon rod cutting apparatus, comprising
a silicon rod loading device (2), arranged between a material storage area and a cutting working area (17), and configured to transfer a silicon rod to be cut (16) in the material storage area to the cutting working area(17);
a wire cutting device (1), comprising an upper cutting frame (111) suspended in the cutting working area (17), wherein a single-wire saw (1141) and a multi-wire saw (1121) are arranged on the cutting frame (111), and configured to realize switching between a first cutting state for cutting by the multi-wire saw (1121) and a second cutting state for cutting by the single-wire saw (1141) through the rotation of the cutting frame (111) when the silicon rod (16) in the cutting working area (17) is cut; and
a silicon rod unloading device (3), arranged at a discharge end of the cutting working area (17), and configured to clamp and transport a resulting single silicon rod section that satisfies workpiece specifications for unloading.

2. The silicon rod cutting apparatus of claim 1, wherein the silicon rod loading device (2) comprises:
a first rotating shaft (21), driven by a first driving device (23) to rotate; and
at least two swing arm assemblies (25A, 25B, 25C, 25D), axially connected to the first rotating shaft (21) at a preset interval respectively, wherein at least two swing arm assemblies (25A, 25B, 25C, 25D) are used to carry a silicon rod to be cut (16), and driven by the first rotating shaft (21) to transfer the silicon rod to be cut (16) to the cutting working area (17) of the cutting apparatus; each swing arm assembly (25A, 25B, 25C, 25D) comprises a swing arm body (251) axially connected to the first rotating shaft (21), and a supporting mechanism (252) arranged at the swing arm body (251), wherein the supporting mechanism (252) is applied to follow the movement of a swing arm to keep its supporting portion (252122) in a state of bearing the silicon rod to be cut (16) during the transfer.

3. The silicon rod cutting apparatus of claim 2, wherein the supporting mechanism (252) comprises a manipulator, arranged at the tail end of the swing arm body (251), and used to follow the movement of a swing arm to keep its supporting portion (252122)in a state of bearing the silicon rod to be cut (16) during the transfer;
the silicon rod cutting apparatus further comprises at least two transfer tables (27) in a one-to-one correspondence to swing arm assemblies (25A, 25B, 25C, 25D), arranged on the base (15) of the cutting apparatus, and used to axially connect at least two swing arm assemblies (25A, 25B, 25C, 25D) to the first rotating shaft (21) at a preset interval respectively; and
a detection device is arranged for swing arm assemblies (25A, 25B, 25C, 25D), and configured to detect the contact between the supporting portion (252122) and the silicon rod to be cut (16).

4. The silicon rod cutting apparatus of claim 3, wherein at least two transfer tables (27) comprise a first movement mechanism that linearly displaces between the material storage area and the cutting working area (17);
at least two transfer tables (27) comprise a second movement mechanism that enables at least one swing arm assembly (25A, 25B, 25C, 25D) to linearly displace on the first rotating shaft (21), so as to adjust a distance between at least two swing arm assemblies (25A, 25B, 25C, 25D);
four swing arm assemblies (25A, 25B, 25C, 25D) are provided, comprising a first swing arm assembly (25A) and a second swing arm assembly (25B) arranged at both ends of the first rotating shaft (21) respectively, as well as a third swing arm assembly (25C) and a fourth swing arm assembly (25D) axially connected between two ends of the first rotating shaft (21) at a preset interval respectively; and
the transfer table (27) of the third swing arm assembly (25C) or the fourth swing arm assembly (25D) comprises a second movement mechanism that linearly displaces on the first rotating shaft (21).

5. The silicon rod cutting apparatus of claim 3, wherein
the silicon rod cutting apparatus further comprises a second rotating shaft (22) driven by a second driving device (24), wherein the second rotating shaft (22) is parallel to the first rotating shaft (21), and the second driving device (24) outputs a rotational speed and/or a rotational angle to the second rotating shaft (22) correspondingly following the working state of the first driving device (23);
the first driving device (23) and the second driving device (24) are respectively arranged at opposite ends of the first rotating shaft (21) or the second rotating shaft (22);
the second rotating shaft (22) is axially connected to swing arm assemblies (25A, 25B, 25C, 25D), and located between the first rotating shaft (21) and the supporting mechanism (252) on the swing arm body (251); and
the supporting mechanism (252) comprises: a manipulator assembly (2521), arranged at the tail end of the swing arm body (251), comprising: a manipulator body (25211), as well as a supporting piece (25212) movably arranged on the manipulator body (25211) for bearing the silicon rod to be cut (16), wherein the supporting piece is in power connection to the second rotating shaft (22), and as the second rotating shaft (22) rotates, the supporting piece (25212) is driven to rotate at the manipulator body (25211), so that the supporting piece (25212) is maintained in a state of carrying the silicon rod to be cut (16) during the transfer.

6. The silicon rod cutting apparatus of claim 5, wherein
the swing arm body (251) has an embedded space;
the supporting mechanism (252) comprises:
a driving gear (2522), arranged in the embedded space of the swing arm body (251), axially connected to the second rotating shaft (22), and driven by the second rotating shaft (22) to rotate;
a driven gear (2523), axially connected to the embedded space of the swing arm body (251), and engaged with the driving gear (2522); and
a manipulator assembly (2521), arranged at the tail end of the swing arm body (251), comprising a manipulator body (25211), as well as a supporting piece (25212) movably arranged on the manipulator body (25211) for bearing the silicon rod to be cut (16), wherein the supporting piece (25212) comprises a toothed portion (252121) engaged with the driven gear (2523), and a supporting portion (252122) for conforming to the outer contour of the silicon rod to be cut (16);
the number of teeth of the toothed portion (252121) of the supporting portion (252122) is greater than that of the driven gear (2523), and the number of teeth of the driven gear (2523) is greater than that of the driving gear (2522); and
a buffer material is arranged on a contact face between the supporting portion (252122) and the silicon rod to be cut (16).

7. The silicon rod cutting apparatus of claim 1, wherein the wire cutting device (1) comprises:
a cutting frame (111), rotatably arranged on a lifting mechanism (14), comprising a rotating portion (1111), a first cantilever (1112) extending from the rotating portion (1111) towards a first direction, a second cantilever (1113) extending from the rotating portion (1111) towards a second direction, and a third cantilever (1114) extending from the rotating portion (1111) towards a third direction;
a first multi-wire cutting wheel (112), arranged at an extension end of the first cantilever (1112), with at least two wire grooves;
a second multi-wire cutting wheel (113), arranged at an extension end of the second cantilever (1113) with at least two wire grooves, wherein a multi-wire saw (1121) is formed by winding a cutting wire segment between the first multi-wire cutting wheel (112) and the second multi-wire cutting wheel (113); and
a single-wire cutting wheel (114), arranged at an extension end of the third cantilever (1114), wherein a single-wire saw (1141) is formed by winding a cutting wire segment between the second multi-wire cutting wheel (113) and the single-wire cutting wheel (114);
wherein, when the silicon rod is cut, the cutting frame (111) rotates around its rotating portion (1111) to realize switching between a first cutting state for cutting by the multi-wire saw (1121) and a second cutting state for cutting by the single-wire saw (1141);
the angle between an extension line of the multi-wire saw (1121) and an extension line of the single-wire saw (1141) is 90°; the cutting frame (111) can rotate by ±45° or 90° on the lifting mechanism (14);
the angle between an extension line of the multi-wire saw (1121) and an extension line of the single-wire saw (1141) is 60°; the cutting frame (111) can rotate by ±60° or 120° on the lifting mechanism (14); and
the first cutting state is a wafer acquisition operation state; the second cutting state is a cutting operation state.

8. The silicon rod cutting apparatus of claim 7, wherein a cutting wire is wound among the first multi-wire cutting wheel (112), the second multi-wire cutting wheel (113) and the single-wire cutting wheel (114) by means of a head-to-tail annular winding method;
the first multi-wire cutting wheel (112) or the second multi-wire cutting wheel (113) is driven by a driving motor to rotate to operate the cutting wire wound among the first multi-wire cutting wheel (112), the second multi-wire cutting wheel (113) and the single-wire cutting wheel (114);
the cutting wire is a stranded cutting wire formed by twisting at least two cutting wires; and
the silicon rod cutting apparatus further comprises a tension detection mechanism, comprising a tension pulley (123) arranged on the cutting frame (111), and configured to detect and adjust the tension of the cutting wire among the first multi-wire cutting wheel (112), the second multi-wire cutting wheel (113) and the single-wire cutting wheel (114).

9. The silicon rod cutting apparatus of claim 8, wherein the silicon rod cutting apparatus further comprises at least one wire guide wheel (122), arranged on the cutting frame (111) to change the direction of the cutting wire; and
the cutting wire is guided by the wire guide wheel (122) to be wound around the first multi-wire cutting wheel (112) and the second multi-wire cutting wheel (113) at least twice, and guided by the wire guide wheel (122) to be wound around the single-wire cutting wheel (114) once.

10. The silicon rod cutting apparatus of claim 7, wherein the cutting wire is wound around a pay-off reel at a head end and a take-up reel at a tail end, and guided by a plurality of wire guide wheels (122) to be wound among the first multi-wire cutting wheel (112), the second multi-wire cutting wheel (113) and the single-wire cutting wheel (114);
the cutting wire is guided by the wire guide wheel (122) to be wound around the first multi-wire cutting wheel (112) and the second multi-wire cutting wheel (113) at least twice, and guided by the wire guide wheel (122) to be wound around the single-wire cutting wheel (114) once;
the silicon rod cutting apparatus further comprises at least one tension detection mechanism, comprising a tension pulley (123) arranged on the cutting frame (111), the lifting mechanism (14) or a rack, and configured to detect and adjust the tension of the cutting wire among the first multi-wire cutting wheel (112), the second multi-wire cutting wheel (113) and the single-wire cutting wheel (114); and
when the wire cutting device (1) is in the first cutting state, the single-wire cutting wheel (114) does not contact the cutting wire; when the apparatus is switched from the first cutting state to the second cutting state, the cutting frame (111) rotates around its rotating portion (1111), so that the single-wire cutting wheel (114) presses the cutting wire, and when the apparatus enters the second cutting state, the cutting wire is wound around the single-wire cutting wheel (114) so that the cutting wire segment between the single-wire cutting wheel (114) and the second multi-wire cutting wheel (113) forms a single-wire saw (1141).

11. The silicon rod cutting apparatus of claim 7, wherein the silicon rod cutting apparatus further comprises a locking device, arranged on the lifting mechanism (14), and used to lock the cutting frame (111) after the cutting frame (111) rotates around its rotating portion (1111) to realize switching between the first cutting state and the second cutting state; and
the silicon rod cutting apparatus further comprises a cutting frame displacement device, arranged between the lifting mechanism (14) and a base (15), and used for the linear displacement along an axial direction of a silicon rod to adjust a length to be cut off from the silicon rod.

12. The silicon rod cutting apparatus of claim 7, wherein a leveling and detection device is arranged on the lifting mechanism (14), and configured to detect the axis levelness of a silicon rod to be cut (16) in the working area; and
the silicon rod cutting apparatus further comprises a leveling device, arranged in the working area, and used to level the axis of the silicon rod to be cut (16) in the working area based on the detection result of the leveling and detection device.

13. The silicon rod cutting apparatus of claim 1, wherein the silicon rod cutting apparatus further comprises an end reclaiming device, arranged at at least one end of the cutting working area (17), and used to collect tailings cut off from ends of the silicon rod to be cut (16);
a sensing device (33) is arranged for the silicon rod unloading device (3), and configured to detect a cutting position at an end of the silicon rod to be cut (16); and
the sensing device (33) is a contact sensor.

14. The silicon rod cutting apparatus of claim 1, wherein the silicon rod unloading device (3) comprises:
a reclaiming arm (31), which can be suspended on a top frame of the silicon rod cutting apparatus in a translational manner, comprising an extension and retraction mechanism; and
a clamping piece (32), arranged at the bottom of the reclaiming arm (31), and used to clamp the resulting single silicon rod section that satisfies workpiece specifications.

15. The silicon rod cutting apparatus of claim 14, wherein the clamping piece (32) comprises:
a first clamping block (321), comprising a first toothed bar and a first clamping portion (3212) linked with the first toothed bar;
a second clamping block (322), mirrored to the first clamping block (321), comprising a second toothed bar, and a second clamping portion (3222) linked with the second toothed bar; and
a driving gear (323) , connected to a power output shaft of a motor, engaged with the first toothed bar and the second toothed bar, and configured to drive the first clamping portion (3212) and the second clamping portion (3222) to move towards each other to perform a clamping action when rotating in a forward direction, and drive the first clamping portion (3212) and the second clamping portion (3222) to move away from each other to perform a release action when rotating in a reverse direction;
buffer materials are arranged on clamping faces for clamping the single silicon rod section of the first clamping portion (3212) and the second clamping portion (3222).

## Patentansprüche

1. Ein Gerät zum Abschneiden von Siliziumstäben, umfassend:
eine Ladevorrichtung für Siliziumstäbe (2), die zwischen einem Materiallagerbereich und einem Schneidarbeitsbereich (17) angeordnet ist und dazu konfiguriert ist, einen zu schneidenden Siliziumstab (16) aus dem Materiallagerbereich in den Schneidarbeitsbereich (17) zu übertragen;
eine Drahtschneidevorrichtung (1), umfassend einen oberen Schneidrahmen (111), der im Schneidarbeitsbereich (17) aufgehängt ist, wobei eine Ein-Draht-Säge (1141) und eine Mehrdraht-Säge (1121) auf dem Schneidrahmen (111) angeordnet sind und so konfiguriert sind, dass sie durch die Rotation des Schneidrahmens (111) zwischen einem ersten Schneidzustand für das Schneiden mit der Mehrdraht-Säge (1121) und einem zweiten Schneidzustand für das Schneiden mit der Ein-Draht-Säge (1141) umschalten, wenn der Siliziumstab (16) im Schneidarbeitsbereich (17) geschnitten wird; und
eine Entladevorrichtung für Siliziumstäbe (3), die an einem Abgabebereich des Schneidarbeitsbereichs (17) angeordnet ist und dazu konfiguriert ist, eine resultierende einzelne Siliziumstabsektion, die den Werkstückspezifikationen entspricht, zum Entladen zu klemmen und zu transportieren.

2. Das Gerät zum Abschneiden von Siliziumstäben nach Anspruch 1, wobei die Ladevorrichtung für Siliziumstäbe (2) umfasst:
eine erste Drehwelle (21), die von einer ersten Antriebsvorrichtung (23) angetrieben wird, um sich zu drehen; und
mindestens zwei Schwenkarmbaugruppen (25A, 25B, 25C, 25D), die jeweils in einem vorgegebenen Abstand axial mit der ersten Drehwelle (21) verbunden sind, wobei mindestens zwei Schwenkarmbaugruppen (25A, 25B, 25C, 25D) dazu verwendet werden, einen zu schneidenden Siliziumstab (16) zu tragen und durch die erste Drehwelle (21) angetrieben werden, um den zu schneidenden Siliziumstab (16) in den Schneidarbeitsbereich (17) des Geräts zu übertragen;
jede Schwenkarmbaugruppe (25A, 25B, 25C, 25D) umfasst einen Schwenkarmkörper (251), der axial mit der ersten Drehwelle (21) verbunden ist, und einen Stützmechanismus (252), der am Schwenkarmkörper (251) angeordnet ist, wobei der Stützmechanismus (252) so ausgelegt ist, dass er der Bewegung eines Schwenkarms folgt, um seine Stützfläche (252122) während der Übertragung in einem Zustand zu halten, in dem er den zu schneidenden Siliziumstab (16) trägt.

3. Das Gerät zum Abschneiden von Siliziumstäben nach Anspruch 2, wobei der Stützmechanismus (252) umfasst:
einen Manipulator, der am hinteren Ende des Schwenkarmkörpers (251) angeordnet ist und so ausgelegt ist, dass er der Bewegung eines Schwenkarms folgt, um seine Stützfläche (252122) während der Übertragung in einem Zustand zu halten, in dem er den zu schneidenden Siliziumstab (16) trägt;
das Gerät zum Abschneiden von Siliziumstäben umfasst außerdem mindestens zwei Übertragungstische (27), die jeweils in einer Eins-zu-eins-Entsprechung zu den Schwenkarmbaugruppen (25A, 25B, 25C, 25D) stehen, auf der Basis (15) des Geräts angeordnet sind und dazu verwendet werden, mindestens zwei Schwenkarmbaugruppen (25A, 25B, 25C, 25D) axial mit der ersten Drehwelle (21) in einem vorgegebenen Abstand zu verbinden; und
eine Detektionsvorrichtung ist für die Schwenkarmbaugruppen (25A, 25B, 25C, 25D) vorgesehen und so konfiguriert, dass sie den Kontakt zwischen der Stützfläche (252122) und dem zu schneidenden Siliziumstab (16) erkennt.

4. Das Gerät zum Abschneiden von Siliziumstäben nach Anspruch 3, wobei mindestens zwei Übertragungstische (27) einen ersten Bewegungsmechanismus umfassen, der eine lineare Verschiebung zwischen dem Materiallagerbereich und dem Schneidarbeitsbereich (17) ermöglicht;
mindestens zwei Übertragungstische (27) einen zweiten Bewegungsmechanismus umfassen, der es ermöglicht, dass sich mindestens eine Schwenkarmbaugruppe (25A, 25B, 25C, 25D) auf der ersten Drehwelle (21) linear verschiebt, um einen Abstand zwischen mindestens zwei Schwenkarmbaugruppen (25A, 25B, 25C, 25D) anzupassen;
vier Schwenkarmbaugruppen (25A, 25B, 25C, 25D) vorgesehen sind, umfassend eine erste Schwenkarmbaugruppe (25A) und eine zweite Schwenkarmbaugruppe (25B), die jeweils an beiden Enden der ersten Drehwelle (21) angeordnet sind, sowie eine dritte Schwenkarmbaugruppe (25C) und eine vierte Schwenkarmbaugruppe (25D), die axial zwischen den beiden Enden der ersten Drehwelle (21) in einem vorgegebenen Abstand verbunden sind; und
der Übertragungstisch (27) der dritten Schwenkarmbaugruppe (25C) oder der vierten Schwenkarmbaugruppe (25D) einen zweiten Bewegungsmechanismus umfasst, der eine lineare Verschiebung auf der ersten Drehwelle (21) ermöglicht.

5. Das Gerät zum Abschneiden von Siliziumstäben nach Anspruch 3, wobei:
das Gerät zum Abschneiden von Siliziumstäben weiterhin eine zweite Drehwelle (22) umfasst, die von einer zweiten Antriebsvorrichtung (24) angetrieben wird, wobei die zweite Drehwelle (22) parallel zur ersten Drehwelle (21) verläuft und die zweite Antriebsvorrichtung (24) eine Drehgeschwindigkeit und/oder einen Drehwinkel an die zweite Drehwelle (22) ausgibt, entsprechend dem Betriebszustand der ersten Antriebsvorrichtung (23);
die erste Antriebsvorrichtung (23) und die zweite Antriebsvorrichtung (24) jeweils an gegenüberliegenden Enden der ersten Drehwelle (21) oder der zweiten Drehwelle (22) angeordnet sind;
die zweite Drehwelle (22) axial mit den Schwenkarmbaugruppen (25A, 25B, 25C, 25D) verbunden ist und sich zwischen der ersten Drehwelle (21) und dem Stützmechanismus (252) am Schwenkarmkörper (251) befindet; und
der Stützmechanismus (252) umfasst: eine Manipulatorbaugruppe (2521), die am hinteren Ende des Schwenkarmkörpers (251) angeordnet ist und umfasst: einen Manipulatorkörper (25211); und ein Stützelement (25212), das beweglich auf dem Manipulatorkörper (25211) angeordnet ist, um den zu schneidenden Siliziumstab (16) zu tragen, wobei das Stützelement mit der zweiten Drehwelle (22) leistungsmäßig verbunden ist, und wobei das Stützelement (25212) durch die Rotation der zweiten Drehwelle (22) am Manipulatorkörper (25211) in Rotation versetzt wird, sodass das Stützelement (25212) während der Übertragung in einem Zustand gehalten wird, in dem es den zu schneidenden Siliziumstab (16) trägt.

6. Das Gerät zum Abschneiden von Siliziumstäben nach Anspruch 5, wobei:
der Schwenkarmkörper (251) einen eingebetteten Raum aufweist;
der Stützmechanismus (252) umfasst:
ein Antriebszahnrad (2522), das im eingebetteten Raum des Schwenkarmkörpers (251) angeordnet ist, axial mit der zweiten Drehwelle (22) verbunden ist und durch die zweite Drehwelle (22) in Rotation versetzt wird;
ein Abtriebszahnrad (2523), das axial mit dem eingebetteten Raum des Schwenkarmkörpers (251) verbunden ist und mit dem Antriebszahnrad (2522) im Eingriff steht;
eine Manipulatorbaugruppe (2521), die am hinteren Ende des Schwenkarmkörpers (251) angeordnet ist und umfasst einen Manipulatorkörper (25211); und ein Stützelement (25212), das beweglich auf dem Manipulatorkörper (25211) angeordnet ist, um die gezahnte Portion (252121) zu tragen, die mit dem Abtriebszahnrad (2523) im Eingriff steht, und eine Stützfläche (252122), die so ausgelegt ist, dass sie sich an die Außenkontur des zu schneidenden Siliziumstabs (16) anpasst;
die Anzahl der Zähne der gezahnten Portion (252121) der Stützfläche (252122) größer ist als die Anzahl der Zähne des Abtriebszahnrads (2523), und die Anzahl der Zähne des Abtriebszahnrads (2523) größer ist als die Anzahl der Zähne des Antriebszahnrads (2522); und
ein Dämpfungsmaterial auf einer Kontaktfläche zwischen der Stützfläche (252122) und dem zu schneidenden Siliziumstab (16) angeordnet ist.

7. Das Gerät zum Abschneiden von Siliziumstäben nach Anspruch 1, wobei die Drahtschneidevorrichtung (1) umfasst:
einen Schneidrahmen (111), der drehbar auf einem Hebemechanismus (14) angeordnet ist und umfasst einen Drehabschnitt (1111), einen ersten Ausleger (1112), der sich vom Drehabschnitt (1111) in eine erste Richtung erstreckt, einen zweiten Ausleger (1113), der sich vom Drehabschnitt (1111) in eine zweite Richtung erstreckt, einen dritten Ausleger (1114), der sich vom Drehabschnitt (1111) in eine dritte Richtung erstreckt;
ein erstes Mehrdraht-Schneidrad (112), das an einem Endbereich der Verlängerung des ersten Auslegers (1112) angeordnet ist und mindestens zwei Drahtnuten aufweist;
ein zweites Mehrdraht-Schneidrad (113), das an einem Endbereich der Verlängerung des zweiten Auslegers (1113) angeordnet ist und mindestens zwei Drahtnuten aufweist, wobei eine Mehrdraht-Säge (1121) durch das Aufwickeln eines Schneiddrahtsegments zwischen dem ersten Mehrdraht-Schneidrad (112) und dem zweiten Mehrdraht-Schneidrad (113) gebildet wird; und
ein Ein-Draht-Schneidrad (114), das an einem Endbereich der Verlängerung des dritten Auslegers (1114) angeordnet ist, wobei eine Ein-Draht-Säge (1141) durch das Aufwickeln eines Schneiddrahtsegments zwischen dem zweiten Mehrdraht-Schneidrad (113) und dem Ein-Draht-Schneidrad (114) gebildet wird;
wenn der Siliziumstab geschnitten wird, dreht sich der Schneidrahmen (111) um seinen Drehabschnitt (1111), um das Umschalten zwischen einem ersten Schneidzustand für das Schneiden mit der Mehrdraht-Säge (1121), und einem zweiten Schneidzustand für das Schneiden mit der Ein-Draht-Säge (1141) zu ermöglichen;
der Winkel zwischen einer Verlängerungslinie der Mehrdraht-Säge (1121) und einer Verlängerungslinie der Ein-Draht-Säge (1141) beträgt 90°; der Schneidrahmen (111) kann sich auf dem Hebemechanismus (14) um ± 45° oder 90° drehen;
der Winkel zwischen einer Verlängerungslinie der Mehrdraht-Säge (1121) und einer Verlängerungslinie der Ein-Draht-Säge (1141) beträgt 60°; der Schneidrahmen (111) kann sich auf dem Hebemechanismus (14) um ± 60° oder 120° drehen; und
der erste Schneidzustand ist ein Wafer-Erfassungsbetriebszustand; der zweite Schneidzustand ist ein Schneidbetriebszustand.

8. Das Gerät zum Abschneiden von Siliziumstäben nach Anspruch 7, wobei ein Schneiddraht durch eine Kopf-zu-Schwanz-Ringwickelmethode um das erste Mehrdraht-Schneidrad (112), das zweite Mehrdraht-Schneidrad (113) und das Ein-Draht-Schneidrad (114) gewickelt ist;
das erste Mehrdraht-Schneidrad (112) oder das zweite Mehrdraht-Schneidrad (113) von einem Antriebsmotor angetrieben wird, um den Schneiddraht zu betreiben, der um das erste Mehrdraht-Schneidrad (112), das zweite Mehrdraht-Schneidrad (113) und das Ein-Draht-Schneidrad (114) gewickelt ist;
der Schneiddraht ein verseilter Schneiddraht ist, der durch das Verdrillen von mindestens zwei Schneiddrähten gebildet wird; und
das Gerät zum Abschneiden von Siliziumstäben weiterhin einen Spannungserkennungsmechanismus umfasst, der eine Spannrolle (123) umfasst, die auf dem Schneidrahmen (111) angeordnet ist und dazu konfiguriert ist, die Spannung des Schneiddrahts zwischen dem ersten Mehrdraht-Schneidrad (112), dem zweiten Mehrdraht-Schneidrad (113) und dem Ein-Draht-Schneidrad (114) zu erkennen und anzupassen.

9. Das Gerät zum Abschneiden von Siliziumstäben nach Anspruch 8, wobei das Gerät zum Abschneiden von Siliziumstäben weiterhin mindestens ein Drahtführungsrad (122) umfasst, das auf dem Schneidrahmen (111) angeordnet ist, um die Richtung des Schneiddrahts zu ändern; und
der Schneiddraht durch das Drahtführungsrad (122) geführt wird, um mindestens zweimal um das erste Mehrdraht-Schneidrad (112) und das zweite Mehrdraht-Schneidrad (113) gewickelt zu werden, und durch das Drahtführungsrad (122) geführt wird, um einmal um das Ein-Draht-Schneidrad (114) gewickelt zu werden.

10. Das Gerät zum Abschneiden von Siliziumstäben nach Anspruch 7, wobei der Schneiddraht an einem Kopfwellenabwickler an einem Kopfende und an einem Aufwickler an einem Endbereich aufgewickelt ist und durch eine Vielzahl von Drahtführungsrädern (122) geführt wird, um um das erste Mehrdraht-Schneidrad (112), das zweite Mehrdraht-Schneidrad (113) und das Ein-Draht-Schneidrad (114) gewickelt zu werden;
der Schneiddraht durch das Drahtführungsrad (122) geführt wird, um mindestens zweimal um das erste Mehrdraht-Schneidrad (112) und das zweite Mehrdraht-Schneidrad (113) gewickelt zu werden, und durch das Drahtführungsrad (122) geführt wird, um einmal um das Ein-Draht-Schneidrad (114) gewickelt zu werden;
das Gerät zum Abschneiden von Siliziumstäben weiterhin mindestens einen Spannungserkennungsmechanismus umfasst, der eine Spannrolle (123) umfasst, die auf dem Schneidrahmen (111), dem Hebemechanismus (14) oder einem Gestell angeordnet ist und dazu konfiguriert ist, die Spannung des Schneiddrahts zwischen dem ersten Mehrdraht-Schneidrad (112), dem zweiten Mehrdraht-Schneidrad (113) und dem Ein-Draht-Schneidrad (114) zu erkennen und anzupassen; und
wenn die Drahtschneidevorrichtung (1) sich im ersten Schneidzustand befindet, kommt das Ein-Draht-Schneidrad (114) nicht mit dem Schneiddraht in Kontakt; wenn das Gerät vom ersten Schneidzustand in den zweiten Schneidzustand umgeschaltet wird, dreht sich der Schneidrahmen (111) um seinen Drehabschnitt (1111), sodass das Ein-Draht-Schneidrad (114) auf den Schneiddraht drückt, und wenn das Gerät in den zweiten Schneidzustand eintritt, wird der Schneiddraht um das Ein-Draht-Schneidrad (114) gewickelt, sodass der Schneiddrahtabschnitt zwischen dem Ein-Draht-Schneidrad (114) und dem zweiten Mehrdraht-Schneidrad (113) eine Ein-Draht-Säge (1141) bildet.

11. Das Gerät zum Abschneiden von Siliziumstäben nach Anspruch 7, wobei das Gerät zum Abschneiden von Siliziumstäben weiterhin eine Verriegelungsvorrichtung umfasst, die auf dem Hebemechanismus (14) angeordnet ist und dazu dient, den Schneidrahmen (111) zu verriegeln, nachdem sich der Schneidrahmen (111) um seinen Drehabschnitt (1111) gedreht hat, um das Umschalten zwischen dem ersten Schneidzustand und dem zweiten Schneidzustand zu ermöglichen; und
das Gerät zum Abschneiden von Siliziumstäben weiterhin eine Schneidrahmenverschiebungsvorrichtung umfasst, die zwischen dem Hebemechanismus (14) und einer Basis (15) angeordnet ist und dazu dient, eine lineare Verschiebung entlang einer axialen Richtung eines Siliziumstabs vorzunehmen, um eine vom Siliziumstab abzuschneidende Länge anzupassen.

12. Das Gerät zum Abschneiden von Siliziumstäben nach Anspruch 7, wobei eine Nivellier- und Detektionsvorrichtung auf dem Hebemechanismus (14) angeordnet ist und dazu konfiguriert ist, die Achsnivellierung eines zu schneidenden Siliziumstabs (16) im Arbeitsbereich zu erfassen; und
das Gerät zum Abschneiden von Siliziumstäben weiterhin eine Nivelliervorrichtung umfasst, die im Arbeitsbereich angeordnet ist und dazu dient, die Achse des zu schneidenden Siliziumstabs (16) im Arbeitsbereich basierend auf dem Detektionsergebnis der Nivellier- und Detektionsvorrichtung zu nivellieren.

13. Das Gerät zum Abschneiden von Siliziumstäben nach Anspruch 1, wobei das Gerät zum Abschneiden von Siliziumstäben weiterhin eine Endrückgewinnungsvorrichtung umfasst, die an mindestens einem Ende des Schneidarbeitsbereichs (17) angeordnet ist und dazu dient, von den Enden des zu schneidenden Siliziumstabs (16) abgeschnittene Reste aufzufangen;
eine Detektionsvorrichtung (33) für die Entladevorrichtung für Siliziumstäbe (3) angeordnet ist und dazu konfiguriert ist, eine Schneidposition an einem Ende des zu schneidenden Siliziumstabs (16) zu erkennen;
und
die Detektionsvorrichtung (33) ein Kontaktsensor ist.

14. Das Gerät zum Abschneiden von Siliziumstäben nach Anspruch 1, wobei die Entladevorrichtung für Siliziumstäbe (3) umfasst:
einen Rückgewinnungsarm (31), der auf einem oberen Rahmen des Geräts zum Abschneiden von Siliziumstäben in translationaler Weise aufgehängt werden kann und einen Verlängerungs- und Einzugsmechanismus umfasst; und
ein Klemmstück (32), das am unteren Ende des Rückgewinnungsarms (31) angeordnet ist und dazu dient, die resultierende einzelne Siliziumstabsektion, die den Werkstückspezifikationen entspricht, zu klemmen.

15. Das Gerät zum Abschneiden von Siliziumstäben nach Anspruch 14, wobei das Klemmstück (32) umfasst:
einen ersten Klemmblock (321), der eine erste Zahnstange und eine erste Klemmfläche (3212) umfasst, die mit der ersten Zahnstange verbunden ist;
einen zweiten Klemmblock (322), der spiegelbildlich zum ersten Klemmblock (321) angeordnet ist und eine zweite Zahnstange sowie eine zweite Klemmfläche (3222) umfasst, die mit der zweiten Zahnstange verbunden ist; und
ein Antriebszahnrad (323), das mit einer Leistungsabtriebswelle eines Motors verbunden ist, mit der ersten Zahnstange und der zweiten Zahnstange im Eingriff steht und so konfiguriert ist, dass es die erste Klemmfläche (3212) und die zweite Klemmfläche (3222) zueinander bewegt, um eine Klemmaktion auszuführen, wenn es sich in Vorwärtsrichtung dreht, und die erste Klemmfläche (3212) und die zweite Klemmfläche (3222) voneinander weg bewegt, um eine Löseaktion auszuführen, wenn es sich in Rückwärtsrichtung dreht;
Dämpfungsmaterialien sind auf den Klemmflächen der ersten Klemmfläche (3212) und der zweiten Klemmfläche (3222) angeordnet, um die einzelne Siliziumstabsektion zu klemmen.

## Revendications

1. Un appareillage de coupe de barreau de silicium, comprenant:
un dispositif de chargement de barreau de silicium (2), disposé entre une zone de stockage de matériau et une zone de travail de coupe (17), et configuré pour transférer un barreau de silicium à couper (16) de la zone de stockage de matériau vers la zone de travail de coupe (17);
un dispositif de coupe par fil (1), comprenant un cadre de coupe supérieur (111) suspendu dans la zone de travail de coupe (17), où une scie à fil unique (1141) et une scie à fil multiple (1121) sont disposées sur le cadre de coupe (111), et configurées pour permettre la commutation entre un premier état de coupe pour la coupe par la scie à fil multiple (1121) et un second état de coupe pour la coupe par la scie à fil unique (1141) grâce à la rotation du cadre de coupe (111) lors de la coupe du barreau de silicium (16) dans la zone de travail de coupe (17); et
un dispositif de déchargement de barreau de silicium (3), disposé à l'extrémité de sortie de la zone de travail de coupe (17), et configuré pour serrer et transporter une section de barreau de silicium unique résultante conforme aux spécifications de la pièce à usiner pour le déchargement.

2. L'appareillage de coupe de barreau de silicium selon la revendication 1, dans lequel le dispositif de chargement de barreau de silicium (2) comprend:
un premier arbre rotatif (21), entraîné en rotation par un premier dispositif d'entraînement (23); et
au moins deux ensembles de bras oscillants (25A, 25B, 25C, 25D), connectés axialement au premier arbre rotatif (21) à un intervalle prédéfini, où au moins deux ensembles de bras oscillants (25A, 25B, 25C, 25D) sont utilisés pour porter un barreau de silicium à couper (16), et entraînés par le premier arbre rotatif (21) afin de transférer le barreau de silicium à couper (16) vers la zone de travail de coupe (17) de l'appareillage de coupe; chaque ensemble de bras oscillants (25A, 25B, 25C, 25D) comprend un corps de bras oscillant (251) connecté axialement au premier arbre rotatif (21), et un mécanisme de support (252) disposé sur le corps du bras oscillant (251), le mécanisme de support (252) étant conçu pour suivre le mouvement d'un bras oscillant afin de maintenir sa partie de support (252122) dans un état de maintien du barreau de silicium à couper (16) durant le transfert.

3. L'appareillage de coupe de barreau de silicium selon la revendication 2, dans lequel le mécanisme de support (252) comprend un manipulateur, disposé à l'extrémité arrière du corps du bras oscillant (251), et conçu pour suivre le mouvement d'un bras oscillant afin de maintenir sa partie de support (252122) dans un état de maintien du barreau de silicium à couper (16) durant le transfert;
l'appareillage de coupe de barreau de silicium comprend en outre au moins deux tables de transfert (27), en correspondance un-à-un avec les ensembles de bras oscillants (25A, 25B, 25C, 25D), disposées sur la base (15) de l'appareillage de coupe, et utilisées pour connecter axialement au moins deux ensembles de bras oscillants (25A, 25B, 25C, 25D) au premier arbre rotatif (21) à un intervalle prédéfini respectivement; et
un dispositif de détection est disposé pour les ensembles de bras oscillants (25A, 25B, 25C, 25D), et configuré pour détecter le contact entre la partie de support (252122) et le barreau de silicium à couper (16).

4. L'appareillage de coupe de barreau de silicium selon la revendication 3, dans lequel au moins deux tables de transfert (27) comprennent un premier mécanisme de déplacement permettant un déplacement linéaire entre la zone de stockage de matériau et la zone de travail de coupe (17);
au moins deux tables de transfert (27) comprennent un second mécanisme de déplacement permettant à au moins un ensemble de bras oscillants (25A, 25B, 25C, 25D) de se déplacer linéairement sur le premier arbre rotatif (21), afin d'ajuster la distance entre au moins deux ensembles de bras oscillants (25A, 25B, 25C, 25D);
quatre ensembles de bras oscillants (25A, 25B, 25C, 25D) sont prévus, comprenant un premier ensemble de bras oscillants (25A) et un second ensemble de bras oscillants (25B) disposés respectivement aux deux extrémités du premier arbre rotatif (21), ainsi qu'un troisième ensemble de bras oscillants (25C) et un quatrième ensemble de bras oscillants (25D) connectés axialement entre les deux extrémités du premier arbre rotatif (21) à un intervalle prédéfini respectivement; et
la table de transfert (27) du troisième ensemble de bras oscillants (25C) ou du quatrième ensemble de bras oscillants (25D) comprend un second mécanisme de déplacement permettant un déplacement linéaire sur le premier arbre rotatif (21).

5. L'appareillage de coupe de barreau de silicium selon la revendication 3, dans lequel:
l'appareillage de coupe de barreau de silicium comprend en outre un second arbre rotatif (22), entraîné par un second dispositif d'entraînement (24), le second arbre rotatif (22) étant parallèle au premier arbre rotatif (21), et le second dispositif d'entraînement (24) étant configuré pour transmettre une vitesse de rotation et/ou un angle de rotation au second arbre rotatif (22) en fonction de l'état de fonctionnement du premier dispositif d'entraînement (23);
le premier dispositif d'entraînement (23) et le second dispositif d'entraînement (24) sont respectivement disposés aux extrémités opposées du premier arbre rotatif (21) ou du second arbre rotatif (22);
le second arbre rotatif (22) est connecté axialement aux ensembles de bras oscillants (25A, 25B, 25C, 25D) et est situé entre le premier arbre rotatif (21) et le mécanisme de support (252) monté sur le corps du bras oscillant (251); et
le mécanisme de support (252) comprend: un ensemble manipulateur (2521), disposé à l'extrémité arrière du corps du bras oscillant (251), comprenant: un corps de manipulateur (25211); ainsi que une pièce de support (25212), montée de manière mobile sur le corps de manipulateur (25211) et configurée pour supporter le barreau de silicium à couper (16), où la pièce de support est mécaniquement couplée au second arbre rotatif (22), et où, lors de la rotation du second arbre rotatif (22), la pièce de support (25212) est entraînée en rotation autour du corps de manipulateur (25211), de telle sorte que la pièce de support (25212) reste dans un état de maintien du barreau de silicium à couper (16) durant le transfert.

6. L'appareillage de coupe de barreau de silicium selon la revendication 5, dans lequel:
le corps du bras oscillant (251) comprend un espace intégré;
le mécanisme de support (252) comprend :
un engrenage moteur (2522), disposé dans l'espace intégré du corps du bras oscillant (251), connecté axialement au second arbre rotatif (22), et entraîné en rotation par le second arbre rotatif (22);
un engrenage mené (2523), connecté axialement à l'espace intégré du corps du bras oscillant (251) et engrené avec l'engrenage moteur (2522); et
un ensemble manipulateur (2521), disposé à l'extrémité arrière du corps du bras oscillant (251), comprenant un corps de manipulateur (25211); ainsi que une pièce de support (25212), montée de manière mobile sur le corps de manipulateur (25211) pour supporter la partie dentée (252121) engrenée avec l'engrenage mené (2523), et une portion de support (252122) conçue pour s'adapter au contour extérieur du barreau de silicium à couper (16);
le nombre de dents de la partie dentée (252121) de la portion de support (252122) est supérieur à celui de l'engrenage mené (2523), et le nombre de dents de l'engrenage mené (2523) est supérieur à celui de l'engrenage moteur (2522); et
un matériau amortissant est disposé sur une face de contact entre la portion de support (252122) et le barreau de silicium à couper (16).

7. L'appareillage de coupe de barreau de silicium selon la revendication 1, dans lequel le dispositif de coupe par fil (1) comprend:
un cadre de coupe (111), monté de manière rotative sur un mécanisme de levage (14), comprenant une partie rotative (1111), un premier porte-à-faux (1112), s'étendant depuis la partie rotative (1111) dans une première direction, un deuxième porte-à-faux (1113), s'étendant depuis la partie rotative (1111) dans une deuxième direction, et un troisième porte-à-faux (1114), s'étendant depuis la partie rotative (1111) dans une troisième direction;
une première roue de coupe à fils multiples (112), disposée à une extrémité d'extension du premier porte-à-faux (1112), et comportant au moins deux rainures pour fil;
une deuxième roue de coupe à fils multiples (113), disposée à une extrémité d'extension du deuxième porte-à-faux (1113) comportant au moins deux rainures pour fil, une scie à fils multiples (1121) étant formée par l'enroulement d'un segment de fil de coupe entre la première roue de coupe à fils multiples (112) et la deuxième roue de coupe à fils multiples (113); et
une roue de coupe à fil unique (114), disposée à une extrémité d'extension du troisième porte-à-faux (1114), où une scie à fil unique (1141) étant formée par l'enroulement d'un segment de fil de coupe entre la deuxième roue de coupe à fils multiples (113) et la roue de coupe à fil unique (114);
où lorsque le barreau de silicium est coupé, le cadre de coupe (111) tourne autour de sa partie rotative (1111) afin d'assurer la commutation entre un premier état de coupe pour la coupe par la scie à fils multiples (1121) et un second état de coupe pour la coupe par la scie à fil unique (1141);
l'angle entre une ligne d'extension de la scie à fils multiples (1121) et une ligne d'extension de la scie à fil unique (1141) est de 90°; le cadre de coupe (111) peut tourner de ± 45° ou de 90° sur le mécanisme de levage (14);
l'angle entre une ligne d'extension de la scie à fils multiples (1121) et une ligne d'extension de la scie à fil unique (1141) est de 60°; le cadre de coupe (111) peut tourner de ± 60° ou de 120° sur le mécanisme de levage (14); et
le premier état de coupe est un état d'acquisition de tranche; le second état de coupe est un état d'opération de coupe.

8. L'appareillage de coupe de barreau de silicium selon la revendication 7, dans lequel un fil de coupe est enroulé autour de la première roue de coupe à fils multiples (112), de la deuxième roue de coupe à fils multiples (113) et de la roue de coupe à fil unique (114) selon une méthode d'enroulement annulaire en boucle fermée (tête-à-queue);
la première roue de coupe à fils multiples (112) ou la deuxième roue de coupe à fils multiples (113) est entraînée en rotation par un moteur d'entraînement afin de faire fonctionner le fil de coupe enroulé autour de la première roue de coupe à fils multiples (112), de la deuxième roue de coupe à fils multiples (113) et de la roue de coupe à fil unique (114);
le fil de coupe est un fil de coupe toronné, formé par la torsion d'au moins deux fils de coupe; et
l'appareillage de coupe de barreau de silicium comprend en outre un mécanisme de détection de tension, comprenant une poulie de tension (123) disposée sur le cadre de coupe (111), et configurée pour détecter et ajuster la tension du fil de coupe entre la première roue de coupe à fils multiples (112), la deuxième roue de coupe à fils multiples (113) et la roue de coupe à fil unique (114).

9. L'appareillage de coupe de barreau de silicium selon la revendication 8, dans lequel l'appareillage de coupe de barreau de silicium comprend en outre au moins une roue de guidage de fil (122), disposée sur le cadre de coupe (111) afin de modifier la direction du fil de coupe; et
le fil de coupe est guidé par la roue de guidage de fil (122) pour être enroulé autour de la première roue de coupe à fils multiples (112) et de la deuxième roue de coupe à fils multiples (113) au moins deux fois, et guidé par la roue de guidage de fil (122) pour être enroulé une fois autour de la roue de coupe à fil unique (114).

10. L'appareillage de coupe de barreau de silicium selon la revendication 7, dans lequel le fil de coupe est enroulé autour d'une bobine de déroulement à une extrémité avant et d'une bobine d'enroulement à une extrémité arrière, et est guidé par une pluralité de roues de guidage de fil (122) pour être enroulé autour de la première roue de coupe à fils multiples (112), de la deuxième roue de coupe à fils multiples (113) et de la roue de coupe à fil unique (114);
le fil de coupe est guidé par la roue de guidage de fil (122) pour être enroulé au moins deux fois autour de la première roue de coupe à fils multiples (112) et de la deuxième roue de coupe à fils multiples (113), et guidé par la roue de guidage de fil (122) pour être enroulé une fois autour de la roue de coupe à fil unique (114); l'appareillage de coupe de barreau de silicium comprend en outre au moins un mécanisme de détection de tension, comprenant une poulie de tension (123) disposée sur le cadre de coupe (111), le mécanisme de levage (14) ou un châssis, et configurée pour détecter et ajuster la tension du fil de coupe entre la première roue de coupe à fils multiples (112), la deuxième roue de coupe à fils multiples (113) et la roue de coupe à fil unique (114); et
lorsque le dispositif de coupe par fil (1) est dans le premier état de coupe, la roue de coupe à fil unique (114) n'est pas en contact avec le fil de coupe ; lorsque l'appareillage passe du premier état de coupe au second état de coupe, le cadre de coupe (111) tourne autour de sa partie rotative (1111), de sorte que la roue de coupe à fil unique (114) appuie sur le fil de coupe, et lorsque l'appareillage entre dans le second état de coupe, le fil de coupe est enroulé autour de la roue de coupe à fil unique (114), de telle sorte que le segment de fil de coupe entre la roue de coupe à fil unique (114) et la deuxième roue de coupe à fils multiples (113) forme une scie à fil unique (1141).

11. L'appareillage de coupe de barreau de silicium selon la revendication 7, dans lequel l'appareillage de coupe de barreau de silicium comprend en outre un dispositif de verrouillage, disposé sur le mécanisme de levage (14), et utilisé pour verrouiller le cadre de coupe (111) après que le cadre de coupe (111) a tourné autour de sa partie rotative (1111) afin d'assurer la commutation entre le premier état de coupe et le second état de coupe; et
l'appareillage de coupe de barreau de silicium comprend en outre un dispositif de déplacement du cadre de coupe, disposé entre le mécanisme de levage (14) et une base (15), et utilisé pour effectuer un déplacement linéaire le long d'une direction axiale d'un barreau de silicium afin d'ajuster une longueur à découper du barreau de silicium.

12. L'appareillage de coupe de barreau de silicium selon la revendication 7, dans lequel un dispositif de mise à niveau et de détection est disposé sur le mécanisme de levage (14) et configuré pour détecter le niveau de l'axe d'un barreau de silicium à couper (16) dans la zone de travail; et
l'appareillage de coupe de barreau de silicium comprend en outre un dispositif de mise à niveau, disposé dans la zone de travail et utilisé pour mettre à niveau l'axe du barreau de silicium à couper (16) dans la zone de travail sur la base du résultat de détection du dispositif de mise à niveau et de détection.

13. L'appareillage de coupe de barreau de silicium selon la revendication 1, dans lequel l'appareillage de coupe de barreau de silicium comprend en outre un dispositif de récupération des extrémités, disposé à au moins une extrémité de la zone de travail de coupe (17) et utilisé pour collecter les résidus coupés des extrémités du barreau de silicium à couper (16);
un dispositif de détection (33) est disposé pour le dispositif de déchargement de barreau de silicium (3) et configuré pour détecter une position de coupe à une extrémité du barreau de silicium à couper (16);
et
le dispositif de détection (33) est un capteur de contact.

14. L'appareillage de coupe de barreau de silicium selon la revendication 1, dans lequel le dispositif de déchargement de barreau de silicium (3) comprend:
un bras de récupération (31), pouvant être suspendu de manière translationnelle sur un cadre supérieur de l'appareillage de coupe de barreau de silicium, et comprenant un mécanisme d'extension et de rétraction; et
une pièce de serrage (32), disposée au bas du bras de récupération (31), et utilisée pour serrer la section unique de barreau de silicium résultante qui satisfait aux spécifications de la pièce à usiner.

15. L'appareillage de coupe de barreau de silicium selon la revendication 14, dans lequel la pièce de serrage (32) comprend:
un premier bloc de serrage (321), comprenant une première barre dentée et une première portion de serrage (3212) liée à la première barre dentée;
un second bloc de serrage (322), symétrique au premier bloc de serrage (321), comprenant une seconde barre dentée et une seconde portion de serrage (3222) liée à la seconde barre dentée; et
un engrenage d'entraînement (323), connecté à un arbre de sortie de puissance d'un moteur, engrené avec la première barre dentée et la seconde barre dentée, et configuré pour entraîner la première portion de serrage (3212) et la seconde portion de serrage (3222) à se déplacer l'une vers l'autre pour effectuer une action de serrage lors d'une rotation dans un sens avant, et entraîner la première portion de serrage (3212) et la seconde portion de serrage (3222) à s'éloigner l'une de l'autre pour effectuer une action de libération lors d'une rotation dans un sens inverse;
des matériaux amortissants sont disposés sur les faces de serrage de la première portion de serrage (3212) et de la seconde portion de serrage (3222) pour serrer la section unique de barreau de silicium.
